# EUROPEAN PATENT APPLICATION

(11) **EP 4 408 067 A1**
(43) Date of publication of application: **31.07.2024**
(21) Application number: 22885744.7
(22) Date of filing: 18.10.2022
(51) Int. Cl.: H04W 28/14, H04W 36/00, H04W 40/20

(54) **INDICATION INFORMATION TRANSMISSION METHOD, MESSAGE TRANSMISSION METHOD, AND RELATED APPARATUS**

(30) Priority: 26.10.2021 CN 202111245179
(71) Applicant: Huawei Technologies Co., Ltd., Shenzhen, Guangdong 518129 (CN)
(72) Inventor: QI, Caixia, Shenzhen, Guangdong 518129 (CN); ZHU, Fenqin, Shenzhen, Guangdong 518129 (CN)
(74) Representative: Gill Jennings & Every LLP
(86) International application number: PCT/CN2022/125902
(87) International publication number: WO 2023/071866

(57) **Abstract**

This application provides an indication information transmission method, a message transmission method, and a related apparatus. The method includes: An intermediate session management network element sends third indication information to a target user plane network element based on second indication information from a session management network element, so that the target user plane network element buffers an uplink packet based on the third indication information. When learning that handover to a target application network element has been completed, the session management network element may send fourth indication information to the intermediate session management network element, so that the intermediate session management network element sends fifth indication information to the target user plane network element based on the fourth indication information, and the target user plane network element forwards the uplink packet based on the fifth indication information. This avoids a packet loss and improves reliability of packet transmission.

## Description

This application claims priority to Chinese Patent Application No. 202111245179.3, filed with the China National Intellectual Property Administration on October 26, 2021 and entitled "INDICATION INFORMATION TRANSMISSION METHOD, MESSAGE TRANSMISSION METHOD, AND RELATED APPARATUS", which is incorporated herein by reference in its entirety.

### TECHNICAL FIELD

This application relates to the field of communication technologies, and in particular, to an indication information transmission method, a message transmission method, and a related apparatus.

### BACKGROUND

In a 5th generation mobile network (5th generation mobile network, 5G), data flows of a terminal device may be offloaded through an uplink classifier (uplink classifier, UL CL) or a branching point (branching point, BP), so that a part of data flows are forwarded from a local session anchor close to an access location of the terminal device, and a remaining part of data flows are forwarded from a remote session anchor far away from the access location of the terminal device. In this way, when an application server is deployed in a low location, a packet forwarding path can be shortened, and a delay can be reduced.

When the terminal device moves, both the uplink classifier and the local session anchor may change, or both the branching point and the local session anchor may change. In this case, a packet may be lost. Therefore, how to avoid a packet loss and improve reliability of packet transmission becomes an urgent problem to be resolved currently.

### SUMMARY

This application provides an indication information transmission method, a message transmission method, and a related apparatus, to avoid a packet loss and improve reliability of packet transmission.

According to a first aspect, an indication information transmission method is provided. The method includes: An intermediate session management network element sends first indication information to a session management network element, where the first indication information indicates that the intermediate session management network element has inserted a target offloading user plane network element and a target user plane network element, and has deleted a source offloading user plane network element and a source user plane network element. Next, the intermediate session management network element receives second indication information from the session management network element, where the second indication information indicates the target user plane network element to buffer an uplink packet. The intermediate session management network element sends third indication information to the target user plane network element based on the second indication information, where the third indication information indicates the target user plane network element to buffer the uplink packet. The intermediate session management network element receives fourth indication information from the session management network element, where the fourth indication information indicates the target user plane network element to forward the uplink packet. The intermediate session management network element sends fifth indication information to the target user plane network element based on the fourth indication information, where the fifth indication information indicates the target user plane network element to forward the uplink packet. In other words, the intermediate session management network element may send the first indication information to the session management network element, so that the session management network element can learn that the intermediate session management network element has inserted the target offloading user plane network element and the target user plane network element, and has deleted the source offloading user plane network element and the source user plane network element. In this way, the intermediate session management network element can send the third indication information to the target user plane network element based on the second indication information that is from the session management network element, so that the target user plane network element buffers the uplink packet based on the third indication information. In addition, when learning that handover to a target application network element has been completed, the session management network element may send the fourth indication information to the intermediate session management network element, so that the intermediate session management network element sends the fifth indication information to the target user plane network element based on the fourth indication information, and the target user plane network element forwards the uplink packet based on the fifth indication information. It may be understood that the target user plane network element does not forward but buffers the uplink packet before the handover to the target application network element is completed, so that the uplink packet is not forwarded, thereby avoiding a loss of the uplink packet. In addition, the target user plane network element forwards the uplink packet only after the handover to the target application network element is completed, so that the uplink packet can be forwarded to the target application network element. This improves reliability of packet transmission.

Optionally, the method further includes: The intermediate session management network element sends a first packet forwarding control protocol request message to a user plane network element, where the first packet forwarding control protocol request message includes a first packet detection rule (packet detection rule, PDR) and a first forwarding action rule (forwarding action rule, FAR).

If the user plane network element is the source offloading user plane network element, the first packet detection rule is a corresponding rule for the source offloading user plane network element to detect a packet that is from the target offloading user plane network element, and the first forwarding action rule is a corresponding rule for the source offloading user plane network element to forward, to the source user plane network element, the packet that is from the target offloading user plane network element.

If the user plane network element is the target offloading user plane network element, the first packet detection rule is a corresponding rule for the target offloading user plane network element to detect a packet that is from a target access network device, and the first forwarding action rule is a corresponding rule for the target offloading user plane network element to forward, to the source offloading user plane network element, the packet that is from the target access network device. In other words, the intermediate session management network element may send the first packet forwarding control protocol request message to the source offloading user plane network element or the target offloading user plane network element, where the first packet forwarding control protocol request message includes the first packet detection rule and the first forwarding action rule, so that the source offloading user plane network element or the target offloading user plane network element detects the packet according to the first packet detection rule, and forwards the packet according to the first forwarding action rule. In this way, before the handover to the target application network element is completed, the uplink packet is sent from the source user plane network element to a source application network element. This avoids the loss and interruption of the uplink packet of a terminal device, and improves continuity and the reliability of the packet transmission.

Optionally, the method further includes: The intermediate session management network element receives a second packet detection rule, a second forwarding action rule, and sixth indication information from the session management network element. The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet. In other words, the intermediate session management network element may receive the second packet detection rule, the second forwarding action rule, and the sixth indication information from the session management network element, so that the intermediate session management network element can learn of the one or both of the following: the second packet detection rule is the corresponding rule for the source offloading user plane network element or the target offloading user plane network element to detect the packet, or the second forwarding action rule is the corresponding rule for the source offloading user plane network element or the target offloading user plane network element to forward the packet.

Optionally, if the user plane network element is the target offloading user plane network element, the first packet detection rule is obtained by the intermediate session management network element by adding a tunnel endpoint identifier of the target offloading user plane network element and an Internet protocol address of the target offloading user plane network element to the second packet detection rule based on the sixth indication information, and the first forwarding action rule is obtained by the intermediate session management network element by adding a tunnel endpoint identifier of the source offloading user plane network element and an Internet protocol address of the source offloading user plane network element to the second forwarding action rule based on the sixth indication information.

If the user plane network element is the source offloading user plane network element, the first packet detection rule is obtained by the intermediate session management network element by adding a tunnel endpoint identifier of the source offloading user plane network element and an Internet protocol address of the source offloading user plane network element to the second packet detection rule based on the sixth indication information, and the first forwarding action rule is obtained by the intermediate session management network element by adding a tunnel endpoint identifier of the source user plane network element and an Internet protocol address of the source user plane network element to the second forwarding action rule based on the sixth indication information.

It can be learned that, in the foregoing technical solution, because the first packet detection rule further includes the tunnel endpoint identifier of the target offloading user plane network element and the Internet protocol address of the target offloading user plane network element, and the first forwarding action rule further includes the tunnel endpoint identifier of the source offloading user plane network element and the Internet protocol address of the source offloading user plane network element, the target offloading user plane network element may receive and detect the packet based on the tunnel endpoint identifier of the target offloading user plane network element and the Internet protocol address of the target offloading user plane network element, and establish a tunnel with the source offloading user plane network element based on the tunnel endpoint identifier of the source offloading user plane network element and the Internet protocol address of the source offloading user plane network element, so that the packet can be transmitted through the tunnel, to avoid the loss and the interruption of the uplink packet of the terminal device. Similarly, because the first packet detection rule further includes the tunnel endpoint identifier of the source offloading user plane network element and the Internet protocol address of the source offloading user plane network element, and the first forwarding action rule further includes the tunnel endpoint identifier of the source user plane network element and the Internet protocol address of the source user plane network element, the source offloading user plane network element may receive and detect the packet based on the tunnel endpoint identifier of the source offloading user plane network element and the Internet protocol address of the source offloading user plane network element, and establish a tunnel with the source user plane network element based on the tunnel endpoint identifier of the source user plane network element and the Internet protocol address of the source user plane network element, so that the packet can be transmitted through the tunnel, to avoid the loss and the interruption of the uplink packet of the terminal device.

According to a second aspect, a message transmission method is provided. The method includes: An intermediate session management network element sends a third packet forwarding control protocol request message to a user plane network element, where the third packet forwarding control protocol request message includes a third packet detection rule and a third forwarding action rule.

If the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element.

If the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element. In other words, the intermediate session management network element may send the third packet forwarding control protocol request message to the source offloading user plane network element or the target offloading user plane network element, where the third packet forwarding control protocol request message includes the third packet detection rule and the third forwarding action rule, so that the source offloading user plane network element or the target offloading user plane network element detects the packet according to the third packet detection rule, and forwards the packet according to the third forwarding action rule. This avoids a loss and interruption of a downlink packet of a terminal device, and improves continuity and reliability of packet transmission.

Optionally, the method further includes: The intermediate session management network element receives a fourth packet detection rule, a fourth forwarding action rule, and seventh indication information from a session management network element. The seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

It can be learned that in the foregoing technical solution, the intermediate session management network element may receive the fourth packet detection rule, the fourth forwarding action rule, and the seventh indication information from the session management network element, so that the intermediate session management network element can learn of the one or both of the following: the fourth packet detection rule is the corresponding rule for the source offloading user plane network element or the target offloading user plane network element to detect the packet, or the fourth forwarding action rule is the corresponding rule for the source offloading user plane network element or the target offloading user plane network element to forward the packet.

Optionally, if the user plane network element is the target offloading user plane network element, the third packet detection rule is obtained by the intermediate session management network element by adding a tunnel endpoint identifier of the target offloading user plane network element and an Internet protocol address of the target offloading user plane network element to the fourth packet detection rule based on the seventh indication information, and the third forwarding action rule is obtained by the intermediate session management network element by adding a tunnel endpoint identifier of the target access network device and an Internet protocol address of the target access network device to the fourth forwarding action rule based on the seventh indication information.

If the user plane network element is the source offloading user plane network element, the third packet detection rule is obtained by the intermediate session management network element by adding a tunnel endpoint identifier of the source offloading user plane network element and an Internet protocol address of the source offloading user plane network element to the fourth packet detection rule based on the seventh indication information, and the third forwarding action rule is obtained by the intermediate session management network element by adding a tunnel endpoint identifier of the target offloading user plane network element and an Internet protocol address of the target offloading user plane network element to the fourth forwarding action rule based on the seventh indication information. It may be understood that because the third packet detection rule further includes the tunnel endpoint identifier of the target offloading user plane network element and the Internet protocol address of the target offloading user plane network element, and the third forwarding action rule further includes the tunnel endpoint identifier of the target access network device and the Internet protocol address of the target access network device, the target offloading user plane network element may receive and detect the packet based on the tunnel endpoint identifier of the target offloading user plane network element and the Internet protocol address of the target offloading user plane network element, and establish a tunnel with the target access network device based on the tunnel endpoint identifier of the target access network device and the Internet protocol address of the target access network device, so that the packet can be transmitted through the tunnel, to avoid the loss of the downlink packet of the terminal device. Similarly, because the third packet detection rule further includes the tunnel endpoint identifier of the source offloading user plane network element and the Internet protocol address of the source offloading user plane network element, and the third forwarding action rule further includes the tunnel endpoint identifier of the target offloading user plane network element and the Internet protocol address of the target offloading user plane network element, the source offloading user plane network element may receive and detect the packet based on the tunnel endpoint identifier of the source offloading user plane network element and the Internet protocol address of the source offloading user plane network element, and establish a tunnel with the target offloading user plane network element based on the tunnel endpoint identifier of the target offloading user plane network element and the Internet protocol address of the target offloading user plane network element, so that the packet can be transmitted through the tunnel, to avoid the loss of the downlink packet of the terminal device.

According to a third aspect, an indication information transmission method is provided. The method includes: A session management network element receives first indication information from an intermediate session management network element, where the first indication information indicates that the intermediate session management network element has inserted a target offloading user plane network element and a target user plane network element, and has deleted a source offloading user plane network element and a source user plane network element. The session management network element sends second indication information to the intermediate session management network element based on the first indication information, where the second indication information indicates the target user plane network element to buffer an uplink packet. The session management network element sends fourth indication information to the intermediate session management network element, where the fourth indication information indicates the target user plane network element to forward the uplink packet, and is indication information sent by the session management network element after the session management network element learns that handover to a target application network element has been completed. In other words, the session management network element may receive the first indication information from the intermediate session management network element, so that the session management network element can learn that the intermediate session management network element has inserted the target offloading user plane network element and the target user plane network element, and has deleted the source offloading user plane network element and the source user plane network element; and the session management network element sends the second indication information to the intermediate session management network element based on the first indication information. In this way, the target user plane network element buffers the uplink packet before the handover to the target application network element is completed, so that the uplink packet is not forwarded. This avoids a loss of the uplink packet. In addition, the session management network element sends the fourth indication information to the intermediate session management network element, so that the target user plane network element forwards the uplink packet only after the handover to the target application network element is completed. In this way, the uplink packet can be forwarded to the target application network element. This improves reliability of packet transmission.

Optionally, the method further includes: The session management network element sends a second packet detection rule, a second forwarding action rule, and sixth indication information to the intermediate session management network element. The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet. In other words, the session management network element may send the second packet detection rule, the second forwarding action rule, and the sixth indication information to the intermediate session management network element, so that the intermediate session management network element can learn of the one or both of the following: the second packet detection rule is the corresponding rule for the source offloading user plane network element or the target offloading user plane network element to detect the packet, or the second forwarding action rule is the corresponding rule for the source offloading user plane network element or the target offloading user plane network element to forward the packet.

According to a fourth aspect, an indication information transmission method is provided. The method includes: A user plane network element receives third indication information from an intermediate session management network element, where the third indication information indicates the user plane network element to buffer an uplink packet. The user plane network element receives fifth indication information from the intermediate session management network element, where the fifth indication information indicates the user plane network element to forward the uplink packet. In other words, the user plane network element may receive, from the intermediate session management network element, the third indication information indicating the user plane network element to buffer the uplink packet. In this way, a target user plane network element buffers the uplink packet before handover to a target application network element is completed, so that the uplink packet is not forwarded. This avoids a loss of the uplink packet. In addition, the user plane network element may receive, from the intermediate session management network element, the fifth indication information indicating the user plane network element to forward the uplink packet, so that the target user plane network element forwards the uplink packet only after the handover to the target application network element is completed. In this way, the uplink packet can be forwarded to the target application network element. This improves reliability of packet transmission.

Optionally, the method further includes: The user plane network element receives a first packet forwarding control protocol request message from the intermediate session management network element, where the first packet forwarding control protocol request message includes a first packet detection rule and a first forwarding action rule.

If the user plane network element is a source offloading user plane network element, the first packet detection rule is a corresponding rule for the source offloading user plane network element to detect a packet that is from a target offloading user plane network element, and the first forwarding action rule is a corresponding rule for the source offloading user plane network element to forward, to a source user plane network element, the packet that is from the target offloading user plane network element.

If the user plane network element is a target offloading user plane network element, the first packet detection rule is a corresponding rule for the target offloading user plane network element to detect a packet that is from a target access network device, and the first forwarding action rule is a corresponding rule for the target offloading user plane network element to forward, to a source offloading user plane network element, the packet that is from the target access network device. In other words, the source offloading user plane network element or the target offloading user plane network element may receive the first packet forwarding control protocol request message from the intermediate session management network element, where the first packet forwarding control protocol request message includes the first packet detection rule and the first forwarding action rule, so that the source offloading user plane network element or the target offloading user plane network element detects the packet according to the first packet detection rule, and forwards the packet according to the first forwarding action rule. In this way, before the handover to the target application network element is completed, the uplink packet is sent from the source user plane network element to a source application network element. This avoids the loss and interruption of the uplink packet of a terminal device, and improves continuity and the reliability of the packet transmission.

Optionally, if the user plane network element is the target offloading user plane network element, the first packet detection rule is obtained by the intermediate session management network element by adding a tunnel endpoint identifier of the target offloading user plane network element and an Internet protocol address of the target offloading user plane network element to a second packet detection rule based on sixth indication information, and the first forwarding action rule is obtained by the intermediate session management network element by adding a tunnel endpoint identifier of the source offloading user plane network element and an Internet protocol address of the source offloading user plane network element to a second forwarding action rule based on the sixth indication information.

If the user plane network element is the source offloading user plane network element, the first packet detection rule is obtained by the intermediate session management network element by adding a tunnel endpoint identifier of the source offloading user plane network element and an Internet protocol address of the source offloading user plane network element to a second packet detection rule based on sixth indication information, and the first forwarding action rule is obtained by the intermediate session management network element by adding a tunnel endpoint identifier of the source user plane network element and an Internet protocol address of the source user plane network element to a second forwarding action rule based on the sixth indication information.

The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet. It may be understood that because the first packet detection rule further includes the tunnel endpoint identifier of the target offloading user plane network element and the Internet protocol address of the target offloading user plane network element, and the first forwarding action rule further includes the tunnel endpoint identifier of the source offloading user plane network element and the Internet protocol address of the source offloading user plane network element, the target offloading user plane network element may receive and detect the packet based on the tunnel endpoint identifier of the target offloading user plane network element and the Internet protocol address of the target offloading user plane network element, and establish a tunnel with the source offloading user plane network element based on the tunnel endpoint identifier of the source offloading user plane network element and the Internet protocol address of the source offloading user plane network element, so that the packet can be transmitted through the tunnel, to avoid the loss of the uplink packet of the terminal device. Similarly, because the first packet detection rule further includes the tunnel endpoint identifier of the source offloading user plane network element and the Internet protocol address of the source offloading user plane network element, and the first forwarding action rule further includes the tunnel endpoint identifier of the source user plane network element and the Internet protocol address of the source user plane network element, the source offloading user plane network element may receive and detect the packet based on the tunnel endpoint identifier of the source offloading user plane network element and the Internet protocol address of the source offloading user plane network element, and establish a tunnel with the source user plane network element based on the tunnel endpoint identifier of the source user plane network element and the Internet protocol address of the source user plane network element, so that the packet can be transmitted through the tunnel, to avoid the loss of the uplink packet of the terminal device.

According to a fifth aspect, a message transmission method is provided. The method includes: A user plane network element receives a third packet forwarding control protocol request message from an intermediate session management network element, where the third packet forwarding control protocol request message includes a third packet detection rule and a third forwarding action rule.

If the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element.

If the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element. In other words, the source offloading user plane network element or the target offloading user plane network element may receive the third packet forwarding control protocol request message from the intermediate session management network element, where the third packet forwarding control protocol request message includes the third packet detection rule and the third forwarding action rule, so that the source offloading user plane network element or the target offloading user plane network element detects the packet according to the third packet detection rule, and forwards the packet according to the third forwarding action rule. This avoids a loss of a downlink packet of a terminal device, and improves reliability of packet transmission.

Optionally, if the user plane network element is the target offloading user plane network element, the third packet detection rule is obtained by the intermediate session management network element by adding a tunnel endpoint identifier of the target offloading user plane network element and an Internet protocol address of the target offloading user plane network element to a fourth packet detection rule based on seventh indication information, and the third forwarding action rule is obtained by the intermediate session management network element by adding a tunnel endpoint identifier of the target access network device and an Internet protocol address of the target access network device to a fourth forwarding action rule based on the seventh indication information.

If the user plane network element is the source offloading user plane network element, the third packet detection rule is obtained by the intermediate session management network element by adding a tunnel endpoint identifier of the source offloading user plane network element and an Internet protocol address of the source offloading user plane network element to a fourth packet detection rule based on seventh indication information, and the third forwarding action rule is obtained by the intermediate session management network element by adding a tunnel endpoint identifier of the target offloading user plane network element and an Internet protocol address of the target offloading user plane network element to a fourth forwarding action rule based on the seventh indication information.

The seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet. It may be understood that because the third packet detection rule further includes the tunnel endpoint identifier of the target offloading user plane network element and the Internet protocol address of the target offloading user plane network element, and the third forwarding action rule further includes the tunnel endpoint identifier of the target access network device and the Internet protocol address of the target access network device, the target offloading user plane network element may receive and detect the packet based on the tunnel endpoint identifier of the target offloading user plane network element and the Internet protocol address of the target offloading user plane network element, and establish a tunnel with the target access network device based on the tunnel endpoint identifier of the target access network device and the Internet protocol address of the target access network device, so that the packet can be transmitted through the tunnel, to avoid the loss of the downlink packet of the terminal device. Similarly, because the third packet detection rule further includes the tunnel endpoint identifier of the source offloading user plane network element and the Internet protocol address of the source offloading user plane network element for packet receiving and detection, and the third forwarding action rule further includes the tunnel endpoint identifier of the target offloading user plane network element and the Internet protocol address of the target offloading user plane network element, the source offloading user plane network element may receive and detect the packet based on the tunnel endpoint identifier of the source offloading user plane network element and the Internet protocol address of the source offloading user plane network element, and establish a tunnel with the target offloading user plane network element based on the tunnel endpoint identifier of the target offloading user plane network element and the Internet protocol address of the target offloading user plane network element, so that the packet can be transmitted through the tunnel, to avoid the loss of the downlink packet of the terminal device.

According to a sixth aspect, an indication information transmission method is provided. The method includes: An intermediate session management network element sends first indication information to a session management network element, where the first indication information indicates that the intermediate session management network element has inserted a target offloading user plane network element and a target user plane network element, and has deleted a source offloading user plane network element and a source user plane network element. The session management network element sends second indication information to the intermediate session management network element based on the first indication information, where the second indication information indicates the target user plane network element to buffer an uplink packet. The target user plane network element receives third indication information from the intermediate session management network element, where the third indication information is sent by the intermediate session management network element based on the second indication information, and indicates the target user plane network element to buffer the uplink packet.

The session management network element sends fourth indication information to the intermediate session management network element, where the fourth indication information indicates the target user plane network element to forward the uplink packet, and is indication information sent by the session management network element after the session management network element learns that handover to a target application network element has been completed. The intermediate session management network element sends fifth indication information to the target user plane network element based on the fourth indication information, where the fifth indication information indicates the target user plane network element to forward the uplink packet.

It can be learned that, in the foregoing technical solution, the target user plane network element does not forward but buffers the uplink packet before the handover to the target application network element is completed, so that the uplink packet is not forwarded, thereby avoiding a loss of the uplink packet. In addition, the target user plane network element forwards the uplink packet only after the handover to the target application network element is completed, so that the uplink packet can be forwarded to the target application network element. This improves reliability of packet transmission.

Optionally, the method further includes: The intermediate session management network element sends a first packet forwarding control protocol request message to a user plane network element, where the first packet forwarding control protocol request message includes a first packet detection rule and a first forwarding action rule.

If the user plane network element is the source offloading user plane network element, the first packet detection rule is a corresponding rule for the source offloading user plane network element to detect a packet that is from the target offloading user plane network element, and the first forwarding action rule is a corresponding rule for the source offloading user plane network element to forward, to the source user plane network element, the packet that is from the target offloading user plane network element.

If the user plane network element is the target offloading user plane network element, the first packet detection rule is a corresponding rule for the target offloading user plane network element to detect a packet that is from a target access network device, and the first forwarding action rule is a corresponding rule for the target offloading user plane network element to forward, to the source offloading user plane network element, the packet that is from the target access network device.

It can be learned that, in the foregoing technical solution, the intermediate session management network element may send the first packet forwarding control protocol request message to the source offloading user plane network element or the target offloading user plane network element, where the first packet forwarding control protocol request message includes the first packet detection rule and the first forwarding action rule, so that the source offloading user plane network element or the target offloading user plane network element detects the packet according to the first packet detection rule, and forwards the packet according to the first forwarding action rule. This avoids the loss of the uplink packet of a terminal device, and improves the reliability of the packet transmission.

Optionally, the method further includes: The session management network element sends a second packet detection rule, a second forwarding action rule, and sixth indication information to the intermediate session management network element. The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

It can be learned that, in the foregoing technical solution, the session management network element may send the second packet detection rule, the second forwarding action rule, and the sixth indication information to the intermediate session management network element, so that the intermediate session management network element can learn of the one or both of the following: the second packet detection rule is the corresponding rule for the source offloading user plane network element or the target offloading user plane network element to detect the packet, or the second forwarding action rule is the corresponding rule for the source offloading user plane network element or the target offloading user plane network element to forward the packet.

Optionally, if the user plane network element is the target offloading user plane network element, the first packet detection rule is obtained by the intermediate session management network element by adding a tunnel endpoint identifier of the target offloading user plane network element and an Internet protocol address of the target offloading user plane network element to the second packet detection rule based on the sixth indication information, and the first forwarding action rule is obtained by the intermediate session management network element by adding a tunnel endpoint identifier of the source offloading user plane network element and an Internet protocol address of the source offloading user plane network element to the second forwarding action rule based on the sixth indication information.

If the user plane network element is the source offloading user plane network element, the first packet detection rule is obtained by the intermediate session management network element by adding a tunnel endpoint identifier of the source offloading user plane network element and an Internet protocol address of the source offloading user plane network element to the second packet detection rule based on the sixth indication information, and the first forwarding action rule is obtained by the intermediate session management network element by adding a tunnel endpoint identifier of the source user plane network element and an Internet protocol address of the source user plane network element to the second forwarding action rule based on the sixth indication information.

It can be learned that, in the foregoing technical solution, because the first packet detection rule further includes the tunnel endpoint identifier of the target offloading user plane network element and the Internet protocol address of the target offloading user plane network element, and the first forwarding action rule further includes the tunnel endpoint identifier of the source offloading user plane network element and the Internet protocol address of the source offloading user plane network element, the target offloading user plane network element may receive and detect the packet based on the tunnel endpoint identifier of the target offloading user plane network element and the Internet protocol address of the target offloading user plane network element, and establish a tunnel with the source offloading user plane network element based on the tunnel endpoint identifier of the source offloading user plane network element and the Internet protocol address of the source offloading user plane network element, so that the packet can be transmitted through the tunnel, to avoid a loss of a downlink packet of the terminal device. Similarly, because the first packet detection rule further includes the tunnel endpoint identifier of the source offloading user plane network element and the Internet protocol address of the source offloading user plane network element, and the first forwarding action rule further includes the tunnel endpoint identifier of the source user plane network element and the Internet protocol address of the source user plane network element, the source offloading user plane network element may receive and detect the packet based on the tunnel endpoint identifier of the source offloading user plane network element and the Internet protocol address of the source offloading user plane network element, and establish a tunnel with the source user plane network element based on the tunnel endpoint identifier of the source user plane network element and the Internet protocol address of the source user plane network element, so that the packet can be transmitted through the tunnel, to avoid the loss of the downlink packet of the terminal device.

According to a seventh aspect, a message transmission method is provided. The method includes: An intermediate session management network element sends a third packet forwarding control protocol request message to a user plane network element, where the third packet forwarding control protocol request message includes a third packet detection rule and a third forwarding action rule.

If the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element.

If the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

It can be learned that, in the foregoing technical solution, the intermediate session management network element may send the third packet forwarding control protocol request message to the source offloading user plane network element or the target offloading user plane network element, where the third packet forwarding control protocol request message includes the third packet detection rule and the third forwarding action rule, so that the source offloading user plane network element or the target offloading user plane network element detects the packet according to the third packet detection rule, and forwards the packet according to the third forwarding action rule. This avoids a loss of a downlink packet of a terminal device, and improves reliability of packet transmission.

Optionally, the method further includes: A session management network element sends a fourth packet detection rule, a fourth forwarding action rule, and seventh indication information to the intermediate session management network element. The seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

It can be learned that, in the foregoing technical solution, the session management network element may send the fourth packet detection rule, the fourth forwarding action rule, and the seventh indication information to the intermediate session management network element, so that the intermediate session management network element can learn of the one or both of the following: the fourth packet detection rule is the corresponding rule for the source offloading user plane network element or the target offloading user plane network element to detect the packet, or the fourth forwarding action rule is the corresponding rule for the source offloading user plane network element or the target offloading user plane network element to forward the packet.

Optionally, if the user plane network element is the target offloading user plane network element, the third packet detection rule is obtained by the intermediate session management network element by adding a tunnel endpoint identifier of the target offloading user plane network element and an Internet protocol address of the target offloading user plane network element to the fourth packet detection rule based on the seventh indication information, and the third forwarding action rule is obtained by the intermediate session management network element by adding a tunnel endpoint identifier of the target access network device and an Internet protocol address of the target access network device to the fourth forwarding action rule based on the seventh indication information.

If the user plane network element is the source offloading user plane network element, the third packet detection rule is obtained by the intermediate session management network element by adding a tunnel endpoint identifier of the source offloading user plane network element and an Internet protocol address of the source offloading user plane network element to the fourth packet detection rule based on the seventh indication information, and the third forwarding action rule is obtained by the intermediate session management network element by adding a tunnel endpoint identifier of the target offloading user plane network element and an Internet protocol address of the target offloading user plane network element to the fourth forwarding action rule based on the seventh indication information.

It can be learned that, in the foregoing technical solution, because the third packet detection rule further includes the tunnel endpoint identifier of the target offloading user plane network element and the Internet protocol address of the target offloading user plane network element, and the third forwarding action rule further includes the tunnel endpoint identifier of the target access network device and the Internet protocol address of the target access network device, the target offloading user plane network element may receive and detect the packet based on the tunnel endpoint identifier of the target offloading user plane network element and the Internet protocol address of the target offloading user plane network element, and establish a tunnel with the target access network device based on the tunnel endpoint identifier of the target access network device and the Internet protocol address of the target access network device, so that the packet can be transmitted through the tunnel, to avoid the loss of the downlink packet of the terminal device. Similarly, because the third packet detection rule further includes the tunnel endpoint identifier of the source offloading user plane network element and the Internet protocol address of the source offloading user plane network element, and the third forwarding action rule further includes the tunnel endpoint identifier of the target offloading user plane network element and the Internet protocol address of the target offloading user plane network element, the source offloading user plane network element may receive and detect the packet based on the tunnel endpoint identifier of the source offloading user plane network element and the Internet protocol address of the source offloading user plane network element, and establish a tunnel with the target offloading user plane network element based on the tunnel endpoint identifier of the target offloading user plane network element and the Internet protocol address of the target offloading user plane network element, so that the packet can be transmitted through the tunnel, to avoid the loss of the downlink packet of the terminal device.

According to an eighth aspect, an intermediate session management network element is provided. The intermediate session management network element includes a transceiver module, and the transceiver module is configured to send first indication information to a session management network element, where the first indication information indicates that the intermediate session management network element has inserted a target offloading user plane network element and a target user plane network element, and has deleted a source offloading user plane network element and a source user plane network element.

The transceiver module is configured to receive second indication information from the session management network element, where the second indication information indicates the target user plane network element to buffer an uplink packet.

The transceiver module is configured to send third indication information to the target user plane network element based on the second indication information, where the third indication information indicates the target user plane network element to buffer the uplink packet.

The transceiver module is configured to receive fourth indication information from the session management network element, where the fourth indication information indicates the target user plane network element to forward the uplink packet.

The transceiver module is configured to send fifth indication information to the target user plane network element based on the fourth indication information, where the fifth indication information indicates the target user plane network element to forward the uplink packet.

Optionally, the transceiver module is further configured to send a first packet forwarding control protocol request message to a user plane network element, where the first packet forwarding control protocol request message includes a first packet detection rule and a first forwarding action rule.

If the user plane network element is the source offloading user plane network element, the first packet detection rule is a corresponding rule for the source offloading user plane network element to detect a packet that is from the target offloading user plane network element, and the first forwarding action rule is a corresponding rule for the source offloading user plane network element to forward, to the source user plane network element, the packet that is from the target offloading user plane network element.

If the user plane network element is the target offloading user plane network element, the first packet detection rule is a corresponding rule for the target offloading user plane network element to detect a packet that is from a target access network device, and the first forwarding action rule is a corresponding rule for the target offloading user plane network element to forward, to the source offloading user plane network element, the packet that is from the target access network device.

Optionally, the transceiver module is further configured to receive a second packet detection rule, a second forwarding action rule, and sixth indication information from the session management network element. The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

Optionally, if the user plane network element is the target offloading user plane network element, the first packet detection rule is obtained by the intermediate session management network element by adding a tunnel endpoint identifier of the target offloading user plane network element and an Internet protocol address of the target offloading user plane network element to the second packet detection rule based on the sixth indication information, and the first forwarding action rule is obtained by the intermediate session management network element by adding a tunnel endpoint identifier of the source offloading user plane network element and an Internet protocol address of the source offloading user plane network element to the second forwarding action rule based on the sixth indication information.

If the user plane network element is the source offloading user plane network element, the first packet detection rule is obtained by the intermediate session management network element by adding a tunnel endpoint identifier of the source offloading user plane network element and an Internet protocol address of the source offloading user plane network element to the second packet detection rule based on the sixth indication information, and the first forwarding action rule is obtained by the intermediate session management network element by adding a tunnel endpoint identifier of the source user plane network element and an Internet protocol address of the source user plane network element to the second forwarding action rule based on the sixth indication information.

According to a ninth aspect, an intermediate session management network element is provided. The intermediate session management network element includes a transceiver module, and the transceiver module is configured to send a third packet forwarding control protocol request message to a user plane network element, where the third packet forwarding control protocol request message includes a third packet detection rule and a third forwarding action rule.

If the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element.

If the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

Optionally, the transceiver module is further configured to receive a fourth packet detection rule, a fourth forwarding action rule, and seventh indication information from a session management network element. The seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

Optionally, if the user plane network element is the target offloading user plane network element, the third packet detection rule is obtained by the intermediate session management network element by adding a tunnel endpoint identifier of the target offloading user plane network and an Internet protocol address of the target offloading user plane network to the fourth packet detection rule based on the seventh indication information, and the third forwarding action rule is obtained by the intermediate session management network element by adding a tunnel endpoint identifier of the target access network device and an Internet protocol address of the target access network device to the fourth forwarding action rule based on the seventh indication information.

If the user plane network element is the source offloading user plane network element, the third packet detection rule is obtained by the intermediate session management network element by adding a tunnel endpoint identifier of the source offloading user plane network element and an Internet protocol address of the source offloading user plane network element to the fourth packet detection rule based on the seventh indication information, and the third forwarding action rule is obtained by the intermediate session management network element by adding a tunnel endpoint identifier of the target offloading user plane network element and an Internet protocol address of the target offloading user plane network element to the fourth forwarding action rule based on the seventh indication information.

According to a tenth aspect, a session management network element is provided. The session management network element includes a transceiver module, and the transceiver module is configured to receive first indication information from an intermediate session management network element, where the first indication information indicates that the intermediate session management network element has inserted a target offloading user plane network element and a target user plane network element, and has deleted a source offloading user plane network element and a source user plane network element. The transceiver module is configured to send second indication information to the intermediate session management network element based on the first indication information, where the second indication information indicates the target user plane network element to buffer an uplink packet. The transceiver module is configured to send fourth indication information to the intermediate session management network element, where the fourth indication information indicates the target user plane network element to forward the uplink packet, and is indication information sent by the session management network element after the session management network element learns that handover to a target application network element has been completed.

Optionally, the transceiver module is further configured to send a second packet detection rule, a second forwarding action rule, and sixth indication information to the intermediate session management network element. The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

According to an eleventh aspect, a user plane network element is provided. The user plane network element includes a transceiver module, and the transceiver module is configured to receive a first packet forwarding control protocol request message from an intermediate session management network element, where the first packet forwarding control protocol request message includes a first packet detection rule and a first forwarding action rule.

If the user plane network element is a source offloading user plane network element, the first packet detection rule is a corresponding rule for the source offloading user plane network element to detect a packet that is from a target offloading user plane network element, and the first forwarding action rule is a corresponding rule for the source offloading user plane network element to forward, to a source user plane network element, the packet that is from the target offloading user plane network element.

If the user plane network element is a target offloading user plane network element, the first packet detection rule is a corresponding rule for the target offloading user plane network element to detect a packet that is from a target access network device, and the first forwarding action rule is a corresponding rule for the target offloading user plane network element to forward, to a source offloading user plane network element, the packet that is from the target access network device.

Optionally, the transceiver module is further configured to receive the first packet forwarding control protocol request message from the intermediate session management network element, where the first packet forwarding control protocol request message includes the first packet detection rule and the first forwarding action rule.

If the user plane network element is the source offloading user plane network element, the first packet detection rule is the corresponding rule for the source offloading user plane network element to detect the packet that is from the target offloading user plane network element, and the first forwarding action rule is the corresponding rule for the source offloading user plane network element to forward, to the source user plane network element, the packet that is from the target offloading user plane network element.

If the user plane network element is the target offloading user plane network element, the first packet detection rule is the corresponding rule for the target offloading user plane network element to detect the packet that is from the target access network device, and the first forwarding action rule is the corresponding rule for the target offloading user plane network element to forward, to the source offloading user plane network element, the packet that is from the target access network device.

Optionally, if the user plane network element is the target offloading user plane network element, the first packet detection rule is obtained by the intermediate session management network element by adding a tunnel endpoint identifier of the target offloading user plane network element and an Internet protocol address of the target offloading user plane network element to a second packet detection rule based on sixth indication information, and the first forwarding action rule is obtained by the intermediate session management network element by adding a tunnel endpoint identifier of the source offloading user plane network element and an Internet protocol address of the source offloading user plane network element to a second forwarding action rule based on the sixth indication information.

If the user plane network element is the source offloading user plane network element, the first packet detection rule is obtained by the intermediate session management network element by adding a tunnel endpoint identifier of the source offloading user plane network element and an Internet protocol address of the source offloading user plane network element to a second packet detection rule based on sixth indication information, and the first forwarding action rule is obtained by the intermediate session management network element by adding a tunnel endpoint identifier of the source user plane network element and an Internet protocol address of the source user plane network element to a second forwarding action rule based on the sixth indication information.

The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

According to a twelfth aspect, a user plane network element is provided. The user plane network element includes a transceiver module, and the transceiver module is configured to receive a third packet forwarding control protocol request message from an intermediate session management network element, where the third packet forwarding control protocol request message includes a third packet detection rule and a third forwarding action rule.

If the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element.

If the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

Optionally, if the user plane network element is the target offloading user plane network element, the third packet detection rule is obtained by the intermediate session management network element by adding a tunnel endpoint identifier of the target offloading user plane network element and an Internet protocol address of the target offloading user plane network element to a fourth packet detection rule based on seventh indication information, and the third forwarding action rule is obtained by the intermediate session management network element by adding a tunnel endpoint identifier of the target access network device and an Internet protocol address of the target access network device to a fourth forwarding action rule based on the seventh indication information.

If the user plane network element is the source offloading user plane network element, the third packet detection rule is obtained by the intermediate session management network element by adding a tunnel endpoint identifier of the source offloading user plane network element and an Internet protocol address of the source offloading user plane network element to a fourth packet detection rule based on seventh indication information, and the third forwarding action rule is obtained by the intermediate session management network element by adding a tunnel endpoint identifier of the target offloading user plane network element and an Internet protocol address of the target offloading user plane network element to a fourth forwarding action rule based on the seventh indication information.

The seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

According to a thirteenth aspect, a communication apparatus is provided, including a processor, a memory, an input interface, and an output interface. The input interface is configured to receive information from a communication apparatus other than the communication apparatus, the output interface is configured to output information to a communication apparatus other than the communication apparatus, and the processor invokes a computer program stored in the memory, to implement the method according to any one of the first aspect, the second aspect, the third aspect, the fourth aspect, or the fifth aspect.

In a possible design, the communication apparatus may be a chip that implements the method according to any one of the first aspect, the second aspect, the third aspect, the fourth aspect, or the fifth aspect, or a device that includes the chip.

According to a fourteenth aspect, a computer-readable storage medium is provided. The computer-readable storage medium stores a computer program. When the computer program is run, the method according to any one of the first aspect, the second aspect, the third aspect, the fourth aspect, or the fifth aspect is implemented.

According to a fifteenth aspect, a chip is provided. The chip includes at least one processor and an interface, and the processor is configured to read and execute instructions stored in a memory. When the instructions are run, the chip is enabled to perform the method according to any one of the first aspect, the second aspect, the third aspect, the fourth aspect, or the fifth aspect.

According to a sixteenth aspect, a computer program product including instructions is provided. When the computer program product is executed on a computer, the method according to any one of the first aspect, the second aspect, the third aspect, the fourth aspect, or the fifth aspect is performed.

According to a seventeenth aspect, a communication system is provided. The communication system includes one or more of the following: an intermediate session management network element, a session management network element, and a user plane network element. The user plane network element includes one or more of the following: a target user plane network element, a source offloading user plane network element, and a target offloading user plane network element.

According to an eighteenth aspect, a communication system is provided. The communication system includes an intermediate session management network element, a session management network element, and a user plane network element. The intermediate session management network element is configured to perform the method according to any one of the first aspect, the session management network element is configured to perform the method according to any one of the third aspect, and the user plane network element is configured to perform the method according to any one of the fourth aspect.

According to a nineteenth aspect, a communication system is provided. The communication system includes an intermediate session management network element and a user plane network element. The intermediate session management network element is configured to perform the method according to the second aspect, and the user plane network element is configured to perform the method according to any one of the fifth aspect.

### BRIEF DESCRIPTION OF DRAWINGS

The following briefly describes accompanying drawings used in describing embodiments.
FIG. 1 shows a basic architecture of a communication system according to an embodiment of this application;
FIG. 2A is a schematic diagram of a 5G network architecture that is based on a service-oriented architecture;
FIG. 2B is a schematic diagram of a 5G network architecture that is based on a point-to-point interface;
FIG. 3 is a schematic diagram of a hardware structure of a communication apparatus usable in an embodiment of this application;
FIG. 4 is a schematic flowchart of an indication information transmission method according to an embodiment of this application;
FIG. 5 is a schematic flowchart of a message transmission method according to an embodiment of this application;
FIG. 6A is a schematic flowchart of another message transmission method according to an embodiment of this application;
FIG. 6B(1) and FIG. 6B(2) are a schematic flowchart of another message transmission method according to an embodiment of this application;
FIG. 6C(1) and FIG. 6C(2) are a schematic flowchart of another message transmission method according to an embodiment of this application;
FIG. 7A is a schematic flowchart of another message transmission method according to an embodiment of this application;
FIG. 7B(1) and FIG. 7B(2) are a schematic flowchart of another message transmission method according to an embodiment of this application;
FIG. 7C(1) and FIG. 7C(2) are a schematic flowchart of another message transmission method according to an embodiment of this application; and
FIG. 8 is a schematic diagram of a structure of a communication apparatus according to an embodiment of this application.

### DESCRIPTION OF EMBODIMENTS

The following describes technical solutions in embodiments of this application with reference to the accompanying drawings in embodiments of this application. Terms "system" and "network" may be used interchangeably in embodiments of this application. "/" represents an "or" relationship between associated objects unless otherwise specified. For example, A/B may represent A or B. "And/or" in this application is merely an association relationship for describing associated objects, and represents that three relationships may exist. For example, A and/or B may represent the following three cases: Only A exists, both A and B exist, and only B exists, where A and B may be singular or plural. In addition, in descriptions of this application, unless otherwise specified, "a plurality of means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or functions. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In the following specific implementations, objectives, technical solutions, and beneficial effects of this application are further described in detail. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that the technical solutions in embodiments of this application may be applied to a 5th generation mobile network (5th generation mobile network, 5G) and the like. The technical solutions in embodiments of this application may be further applied to another future communication system, for example, a 6G communication system. In the future communication system, a same function may be maintained, but a name may be changed.

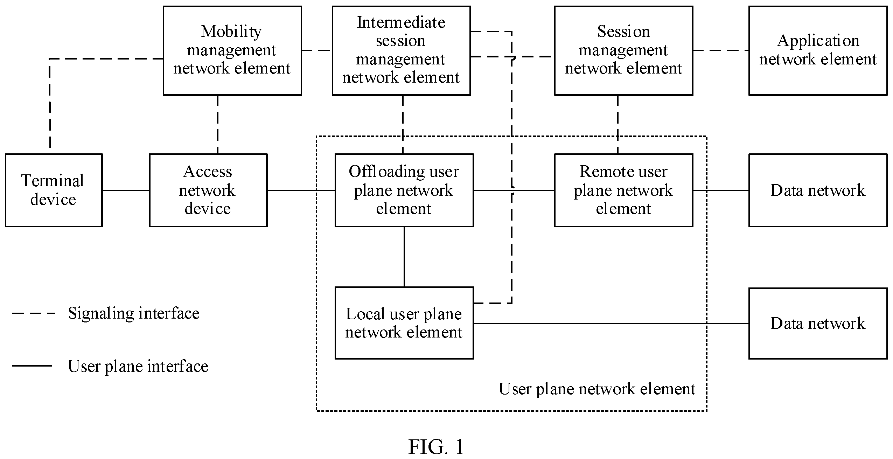

The following describes a basic architecture of a communication system provided in embodiments of this application. FIG. 1 shows a basic architecture of a communication system according to an embodiment of this application. As shown in FIG. 1, the communication system may include one or more of the following network elements: an intermediate session management network element, a session management network element, a user plane network element, an access network device, a terminal device, a mobility management network element, an application network element, and a data network (data network, DN) connected to an operator network. The terminal device may send a packet to and receive a packet from the data network through the access network device and the user plane network element. It may be understood that in this application, the packet may be service data. In addition, FIG. 1 is merely a schematic diagram, and does not constitute a limitation on a scenario to which the technical solutions provided in this application are applicable.

The intermediate session management network element selects an offloading user plane network element that provides an offloading function, a local user plane network element, and the like. It may be understood that in a movement procedure for the terminal device, for example, an Xn handover procedure, an N2 handover procedure, a service request procedure, and a tracking area update procedure, the intermediate session management network element may select the offloading user plane network element, the local user plane network element, and the like based on a location of the terminal device. In a 5G communication system, the intermediate session management network element may be an intermediate session management function (intermediate session management function, I-SMF) network element. In a future communication system (for example, a 6G communication system), the intermediate session management network element may still be the I-SMF network element, or may have another name. This is not limited in this application.

The session management network element is mainly for session management such as session establishment, modification, and release in a mobile network. Specific functions are, for example, assigning an Internet protocol (Internet protocol, IP) address to the terminal device and selecting a remote user plane network element that provides a packet forwarding function. In the 5G communication system, the session management network element may be a session management function (session management function, SMF) network element. In the future communication system (for example, the 6G communication system), the session management network element may still be the SMF network element, or may have another name. This is not limited in this application.

The user plane network element is mainly configured to perform processing such as forwarding, charging, and lawful interception on a user packet, and may be a remote user plane network element or a local user plane network element. The remote user plane network element or the local user plane network element may be a protocol data unit session anchor (PDU session anchor, PSA). The remote user plane network element and the local user plane network element are deployed in different locations. For example, the local user plane network element is selected by the intermediate session management network element and forwards a user packet, and the remote user plane network element is selected by the session management network element and forwards a user packet. In addition, the user plane network element may also be configured to offload a user packet, and may be an offloading user plane network element. The offloading user plane network element may be an uplink classifier or a branching point. In the 5G communication system, the user plane network element may be a user plane function (user plane function, UPF) network element. In the future communication system (for example, the 6G communication system), the user plane network element may still be the UPF network element, or may have another name. This is not limited in this application. It may be understood that in this application, both a source user plane network element and a target user plane network element are local user plane network elements, and both a source offloading user plane network element and a target offloading user plane network element are offloading user plane network elements. For example, the source user plane network element may be a local user plane network element determined by the intermediate session management network element based on a location that is of the terminal device and that is obtained before cell reselection, and the target user plane network element may be a local user plane network element determined by the intermediate session management network element based on a location that is of the terminal device and that is obtained after the cell reselection. The source offloading user plane network element may be an offloading user plane network element determined by the intermediate session management network element based on the location that is of the terminal device and that is obtained before the cell reselection, and the target offloading user plane network element may be an offloading user plane network element determined by the intermediate session management network element based on the location that is of the terminal device and that is after the cell reselection. Alternatively, the source user plane network element may be a local user plane network element determined by the intermediate session management network element based on a location that is of the terminal device and that is obtained before cell handover, and the target user plane network element may be a local user plane network element determined by the intermediate session management network element based on a location that is of the terminal device and that is obtained after the cell handover. The source offloading user plane network element may be an offloading user plane network element determined by the intermediate session management network element based on the location that is of the terminal device and that is obtained before the cell handover, and the target offloading user plane network element may be an offloading user plane network element determined by the intermediate session management network element based on the location that is of the terminal device and that is obtained after the cell handover.

The access network device is a network-side entity that is configured to send a signal, receive a signal, or send and receive a signal. The access network device may be an apparatus that is deployed in a radio access network (radio access network, RAN) and that provides a wireless communication function for the terminal device, for example, may be a transmission reception point (transmission reception point, TRP), a base station, or control nodes in various forms, for example, a network controller, a wireless controller, or a radio controller in a cloud radio access network (cloud radio access network, CRAN) scenario. Specifically, the access network device may be macro base stations in various forms, a micro base station (also referred to as a small cell), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission point (transmission point, TP), a mobile switching center, or the like, or may be an antenna panel of a base station. The control node may be connected to a plurality of base stations, and configure resources for a plurality of terminals covered by the plurality of base stations. In systems using different radio access technologies, devices having a base station function may have different names. For example, the access network device may be a gNB in 5G, a network side device in a network following 5G, or an access network device in a future evolved public land mobile network (public land mobile network, PLMN). A specific name of the access network device is not limited in this application. In addition, the access network device may alternatively include a central unit (central unit, CU) and a distributed unit (distributed unit, DU) that are integrated into the gNB. It may be understood that, in this application, the access network device may be a source access network device or a target access network device. For example, the source access network device is an access network device used before the cell reselection of the terminal device, and the target access network device is an access network device used after the cell reselection of the terminal device.

The terminal device is a user-side entity that is configured to receive a signal, send a signal, or receive and send a signal. The terminal device is configured to provide one or both of a voice service and a data connectivity service for a user. The terminal device may be a device that includes a wireless transceiver function and that can cooperate with the access network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, or a user apparatus. The terminal device may alternatively be an uncrewed aerial vehicle, an Internet of things (Internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. Alternatively, the terminal device may be a terminal in the 5G system, or may be a terminal in a next generation communication system. This is not limited in embodiments of this application.

The mobility management network element has one or more of the following functions: registration, security authentication, and key agreement for the terminal device in the mobile network, maintenance of a non-access stratum (Non-Access Stratum, NAS) connection, mobility management, and routing of signaling between the terminal device and another network element, for example, routing of a session management (session management, SM) message between the terminal device and the session management network element. In 5G communication, Namf is a service-oriented interface provided by the mobility management network element, and the mobility management network element may communicate with another network function through Namf. It may be understood that a name of the mobility management network element is not limited in this application. For example, the mobility management network element may be referred to as an AMF network element.

The application network element may provide service data of various applications for a control plane function of a communication network of an operator, obtain data information and control information of the network from the control plane function of the communication network, or provide service data of various applications for the terminal device. In the 5G communication system, the application network element may be an application function (application function, AF) network element. In the future communication system (for example, the 6G communication system), the application function may still be the AF network element, or may have another name. This is not limited in this application.

The data network is mainly configured to provide a data transmission service for the terminal device. The data network may be a private network, for example, a local area network, may be a public data network (public data network, PDN), for example, an Internet (Internet), or may be a dedicated network jointly deployed by operators, for example, a configured IP multimedia network subsystem (IP multimedia core network subsystem, IMS) network.

It should be noted that in this application, the intermediate session management network element may be independently deployed, or may be integrated into the session management network element. This is not limited in this application. In addition, the source offloading user plane network element and the source user plane network element may be jointly deployed or separately deployed. When being separately deployed, the source offloading user plane network element and the source user plane network element may have different service areas. The target offloading user plane network element and the target user plane network element may be jointly deployed or separately deployed. When being separately deployed, the target offloading user plane network element and the target user plane network element may have different service areas. This is not limited in this application.

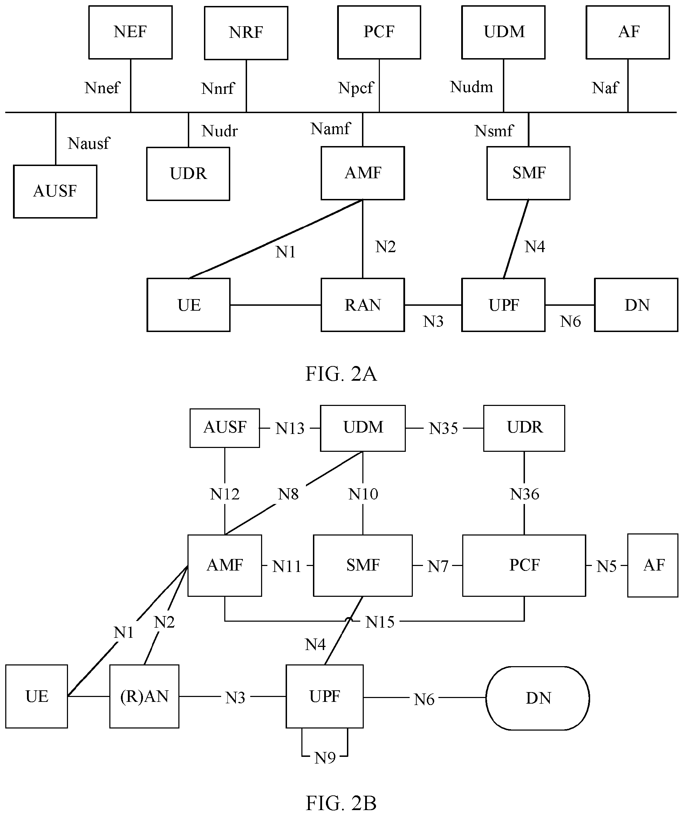

Using a 5G communication system as an example, the following describes a schematic diagram of a specific possible network architecture to which embodiments of this application are applicable. FIG. 2A is a schematic diagram of a 5G network architecture that is based on a service-oriented architecture. A 5G network architecture shown in FIG. 2B may include a data network and an operator network. The following briefly describes functions of some network elements in the 5G network architecture.

The operator network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an AF network element, an access and mobility management function (access and mobility management function, AMF) network element, an SMF network element, a RAN device, a UPF network element, a network slice selection function (Network Slice Selection Function, NSSF) network element (not shown in FIG. 2A or FIG. 2B), and the like. In the operator network, a network element or device other than the radio access network device may be referred to as a core network element or a core network device.

The radio access network device may be a base station (base station), an evolved NodeB (evolved NodeB, eNodeB), a TRP, a next generation NodeB (next generation NodeB, gNB) in a 5G mobile communication system, a next generation base station in a 6G mobile communication system, a base station in a future mobile communication system, an access node in a wireless fidelity (wireless fidelity, Wi-Fi) system, or the like, or may be a module or unit, for example, a CU or a distributed unit (DU), that completes a part of functions of a base station. The radio access network device may be a macro base station, may be a micro base station or an indoor base station, or may be a relay node, a donor node, or the like. A specific technology and a specific device form that are used by the radio access network device are not limited in embodiments of this application.

A terminal that communicates with a RAN may also be referred to as a terminal device, UE, a mobile station, a mobile terminal, or the like. The terminal may be widely used in various scenarios, for example, device-to-device (device-to-device, D2D), vehicle-to-everything (vehicle-to-everything, V2X) communication, MTC, an Internet of things (Internet of things, IOT), virtual reality, augmented reality, industrial control, self-driving, telemedicine, a smart grid, smart furniture, smart office, smart wearable, smart transportation, and a smart city. The terminal may be a mobile phone, a tablet computer, or a computer, a wearable device, a vehicle, an uncrewed aerial vehicle, a helicopter, an airplane, a ship, a robot, a mechanical arm, a smart home device, or the like that has a wireless transceiver function. A specific technology and a specific device form used by the terminal are not limited in embodiments of this application.

The base station and the terminal may be fixed or movable. The base station and the terminal may be deployed on land, including indoor or outdoor devices, handheld devices, or vehicle-mounted devices; may be deployed on water; or may be deployed on an airplane, a balloon, or an artificial satellite in the air. Application scenarios of the base station and the terminal are not limited in embodiments of this application.

The AMF network element performs functions such as mobility management and access authentication/authorization. In addition, the AMF network element is further responsible for transferring a user policy between the terminal and the PCF.

The SMF network element performs functions such as session management, execution of a control policy delivered by the PCF, UPF selection, and assignment of an IP address to the terminal.

The UPF network element, serving as an interface UPF with the data network, completes functions such as user plane data forwarding, charging statistics at a session/flow level, and bandwidth limiting.

The UDM network element performs functions such as subscription data management and user access authorization.

The UDR performs functions of storage and retrieval of data of types such as subscription data, policy data, and application data.

The NEF network element is configured to support exposure of a capability and an event.

The AF network element transfers a requirement of an application side on a network side, for example, a QoS requirement or user status event subscription. The AF may be a third-party functional entity, or may be an application service, for example, an IMS voice call service, deployed by an operator.

The PCF network element is responsible for policy control functions such as charging at a session or service flow level, QoS bandwidth assurance and mobility management, and terminal policy decision.

The NRF network element may be configured to provide a network element discovery function, and provide, based on a request of another network element, network element information corresponding to a network element type. The NRF further provides network element management services such as network element registration, update, and deregistration, and network element status subscription and push.

The AUSF network element is responsible for performing authentication on a user, to determine whether the user or a device is allowed to access the network.

The NSSF network element is configured to select a network slice, count users in the network slice, and so on.

The DN is a network located outside the operator network. A plurality of DNs can access the operator network, and a plurality of services can be deployed on the DN, to provide services such as data and/or a voice for the terminal. For example, the DN is a private network of an intelligent factory, a sensor mounted in a workshop of the intelligent factory may be the terminal, a control server of the sensor is deployed in the DN, and the control server can provide a service for the sensor. The sensor may communicate with the control server, to obtain instructions of the control server, transmit collected sensor data to the control server according to the instructions, and so on. For another example, the DN is an internal office network of a company, a mobile phone or a computer of an employee in the company may be the terminal, and the mobile phone or the computer of the employee can access information, a data resource, or the like in the internal office network of the company.

In FIG. 2A, Nausf, Nnef, Npcf, Nudm, Naf, Namf, and Nsmf are respectively service-oriented interfaces provided by the AUSF, the NEF, the PCF, the UDM, the AF, the AMF, and the SMF, and are configured to invoke a corresponding service-oriented operation. N1, N2, N3, N4, and N6 are interface sequence numbers. For definitions of these interface sequence numbers, refer to definitions defined in the 3rd generation partnership project (3rd generation partnership project, 3GPP) standard protocol. This is not limited herein.

FIG. 2B is a schematic diagram of a 5G network architecture that is based on a point-to-point interface. For descriptions of functions of network elements in FIG. 2B, refer to the descriptions of the functions of the corresponding network elements in FIG. 2A. Details are not described again. A main difference between FIG. 2B and FIG. 2A lies in that interfaces between control plane network elements in FIG. 2A are service-oriented interfaces, and interfaces between control plane network elements in FIG. 2B are point-to-point interfaces.

In the architecture shown in FIG. 2B, names and functions of the interfaces between the network elements are as follows:
(1) N1: is an interface between the AMF and the terminal, and may be configured to transfer a QoS control rule or the like to the terminal.
(2) N2: is an interface between the AMF and the RAN, and may be configured to transfer radio bearer control information or the like from a core network side to the RAN.
(3) N3: is an interface between the RAN and the UPF, and is mainly configured to transfer uplink and downlink user plane data between the RAN and the UPF.
(4) N4: is an interface between the SMF and the UPF, and may be configured to transfer information between a control plane and a user plane, including delivering a forwarding rule, a QoS control rule, a traffic statistics rule, or the like from the control plane to the user plane, and reporting user plane information.
(5) N5: is an interface between the AF and the PCF, and may be configured to deliver an application service request and report a network event.
(6) N6: is an interface between the UPF and the DN, and is configured to transfer uplink and downlink user data flows between the UPF and the DN.
(7) N7: is an interface between the PCF and the SMF, and may be configured to deliver control policies at a protocol data unit (protocol data unit, PDU) session granularity and a service data flow granularity.
(8) N8: is an interface between the AMF and the UDM, and may be used by the AMF to obtain, from the UDM, access and mobility management-related subscription data and authentication data, register current mobility management-related information of the terminal with the UDM, and so on.
(9) N9: is a user plane interface between UPFs, and is configured to transfer uplink and downlink user data flows between the UPFs.
(10) N10: is an interface between the SMF and the UDM, and may be used by the SMF to obtain session management-related subscription data from the UDM, register current session-related information of the terminal with the UDM, and so on.
(11) N11: is an interface between the SMF and the AMF, and may be configured to transfer PDU session tunnel information between the RAN and the UPF, a control message to be sent to the terminal, radio resource control information to be sent to the RAN, and the like.
(12) N12: is an interface between the AMF and the AUSF, and may be used by the AMF to initiate an authentication procedure to the AUSF, where a subscription concealed identifier (subscription concealed identifier, SUCI) may be carried as a subscription identifier.
(13) N13: is an interface between the UDM and the AUSF, and may be used by the AUSF to obtain a user authentication vector from the UDM to perform the authentication procedure.
(14) N15: is an interface between the PCF and the AMF, and may be configured to deliver a terminal policy and an access control-related policy.
(15) N35: is an interface between the UDM and the UDR, and may be used by the UDM to obtain user subscription data information from the UDR.
(16) N36: is an interface between the PCF and the UDR, and may be used by the PCF to obtain policy-related subscription data and application data-related information from the UDR.

It may be understood that the foregoing network element or function may be a network element in a hardware device, a software function running on dedicated hardware, or a virtualization function instantiated on a platform (for example, a cloud platform). Optionally, the foregoing network element or function may be implemented by one device, may be jointly implemented by a plurality of devices, or may be a function module in one device. This is not specifically limited in embodiments of this application.

The session management network element, the user plane network element, and the policy control network element in this application may be respectively the SMF, the UPF, and the PCF in FIG. 2A or FIG. 2B, or may be network elements that have functions of the SMF, the UPF, and the PCF in a future communication network, for example, a 6G network. This is not limited in this application. In embodiments of this application, descriptions are provided by respectively using the SMF, the UPF, and the PCF as examples of the session management network element, the user plane network element, and the policy control network element.

It may be understood that the foregoing network element or function may be the network element in the hardware device, the software function running on the dedicated hardware, or the virtualization function instantiated on the platform (for example, the cloud platform). One or more services may be obtained through division into the network elements or the functions. Further, there may be a service that is independent of a network function. In this application, an instance of the function, an instance of the service included in the function, and an instance of the service that is independent of the network function may all be referred to as service instances.

In addition, the technical solutions provided in embodiments of this application are applicable to a plurality of system architectures. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

Optionally, each network element (for example, the intermediate session management network element, the session management network element, the user plane network element, the access network device, the terminal device, the mobility management network element, and the application network element) in FIG. 1 may be implemented by one device, may be jointly implemented by a plurality of devices, or may be one function module in one device. This is not specifically limited in embodiments of this application. It may be understood that the foregoing function may be the network element in the hardware device, the software function running on the dedicated hardware, or the virtualization function instantiated on the platform (for example, the cloud platform).

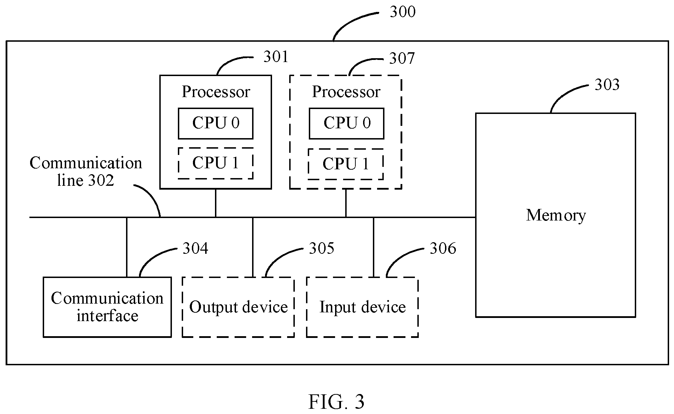

For example, each device in FIG. 1 may be implemented by a communication apparatus 300 in FIG. 3. FIG. 3 is a schematic diagram of a hardware structure of a communication apparatus usable in an embodiment of this application. The communication apparatus 300 includes at least one processor 301, a communication line 302, and at least one communication interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transmitting information between the foregoing components.

The communication interface 304 is any transceiver-type apparatus (such as an antenna), and is configured to communicate with another device or a communication network, for example, the Ethernet, a RAN, or a wireless local area network (wireless local area network, WLAN).

Optionally, the communication apparatus 300 further includes a memory 303. The memory 303 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that is accessible to a computer, but is not limited thereto. The memory may exist independently, and is connected to the processor through the communication line 302. The memory may alternatively be integrated with the processor. The memory provided in embodiments of this application may be usually non-volatile. The memory 303 is configured to store computer-executable instructions for executing the solutions in this application, and the processor 301 controls the execution. The processor 301 is configured to execute the computer-executable instructions stored in the memory 303, to implement methods provided in the following embodiments of this application.

Optionally, the computer-executable instructions in embodiments of this application may also be referred to as application program code. This is not specifically limited in embodiments of this application.

In a possible implementation, the processor 301 may include one or more CPUs, for example, a CPU 0 and a CPU 1 in FIG. 3.

In a possible implementation, the communication apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

The foregoing communication apparatus 300 may be a general-purpose device or a special-purpose device. In a specific implementation, the communication apparatus 300 may be a desktop computer, a portable computer, a network server, a palmtop computer, a mobile phone, a tablet computer, a wireless terminal device, an embedded device, or a device having a structure similar to the structure in FIG. 3. A type of the communication apparatus 300 is not limited in this embodiment of this application.

With reference to the accompanying drawings, the following describes the technical solutions provided in embodiments of this application.

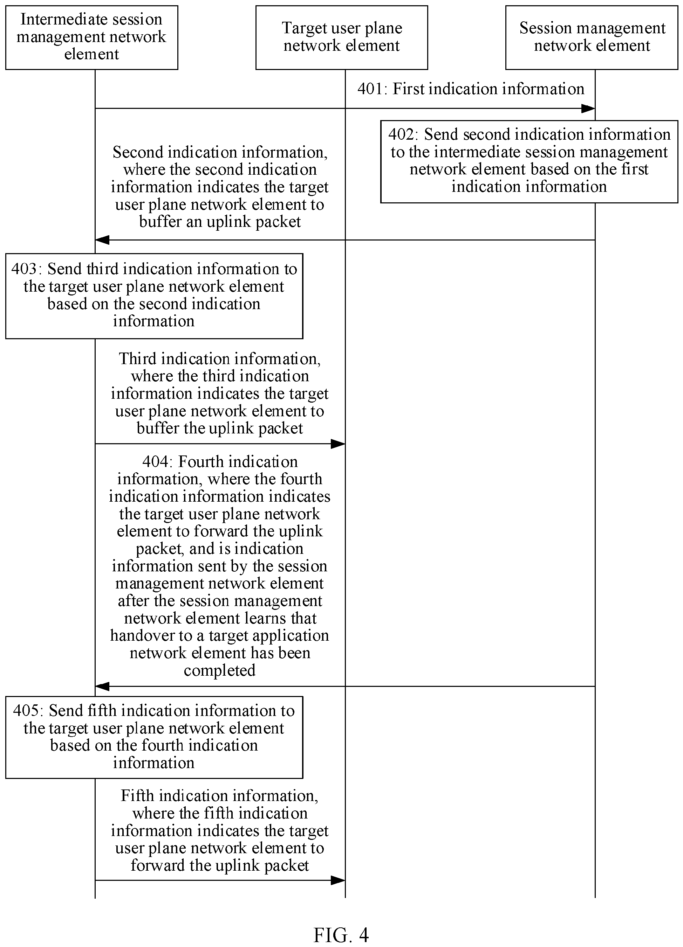

FIG. 4 is a schematic flowchart of an indication information transmission method according to an embodiment of this application. As shown in FIG. 4, the method includes but is not limited to the following steps.

401: An intermediate session management network element sends first indication information to a session management network element, where the first indication information indicates that the intermediate session management network element has inserted a target offloading user plane network element and a target user plane network element, and has deleted a source offloading user plane network element and a source user plane network element.

Correspondingly, the session management network element receives the first indication information from the intermediate session management network element.

It should be noted that, in this application, the first indication information indicates that the intermediate session management network element has inserted the target offloading user plane network element and the target user plane network element, and has deleted the source offloading user plane network element and the source user plane network element. In other words, the intermediate session management network element has selected the target offloading user plane network element and the target user plane network element based on current location information of a terminal device, and establishes packet forwarding control protocol (packet forwarding control protocol, PFCP) sessions for the terminal device with the target offloading user plane network element and the target user plane network element respectively. In addition, the intermediate session management network element needs to wait for an indication from the session management network element, to delete PFCP sessions for the terminal device that are respectively with the source offloading user plane network element and the source user plane network element.

Optionally, the first indication information may be included in a first PDU session update request message, and the first PDU session update request message indicates the session management network element to update a first PDU session. The first PDU session update request message may further include a tunnel endpoint identifier of the target offloading user plane network element and an Internet protocol address of the target offloading user plane network element. The first PDU session update request message may be an Nsmf_PDUSession_Update request.

402: The session management network element sends second indication information to the intermediate session management network element based on the first indication information, where the second indication information indicates the target user plane network element to buffer an uplink packet.

Correspondingly, the intermediate session management network element receives the second indication information from the session management network element.

Optionally, step 402 may be understood as: The session management network element may learn, based on the first indication information, that the intermediate session management network element has inserted the target offloading user plane network element and the target user plane network element. In other words, the session management network element may learn, based on the first indication information, that a local user plane network element has changed. The change of the local user plane network element may cause handover of an application network element, to be specific, the change of the local user plane network element may cause handover from a source application network element to a target application network element. To avoid forwarding of the uplink packet performed by the target user plane network element before the handover to the target application network element is completed, the session management network element may first send the second indication information to the intermediate session management network element, so that the target user plane network element may first buffer the uplink packet.

Optionally, the second indication information may be a value of a first field, and the value of the first field may be a value of at least one bit or an enumerated value. This is not limited herein. The first field may be implemented in any one of the following manners:
Manner 1.1: The first field may be a newly added field or an original field in a first PDU session update response message. The first PDU session update response message indicates that the session management network element successfully updates the first PDU session, and the first PDU session update response message may be an Nsmf_PDUSession_Update response.
Manner 1.2: The first field may be a newly added field or an original field in first information. The first information indicates to establish a PFCP session between the intermediate session management network element and the target user plane network element, and may be N4 information. Optionally, the first information may be included in a first PDU session update response message.
Manner 1.3: The first field may be a field in a first information element. The first information element is a forwarding action information element, an information element with a similar definition or function, or an information element of an extension field in a fifth forwarding action rule. This is not limited herein. The fifth forwarding action rule may be a corresponding rule for the target user plane network element to forward, to a data network, a packet that is from the target offloading user plane network element. Optionally, the fifth forwarding action rule may be included in first information.

For example, when the value of the first field is 1, the first field indicates the target user plane network element to buffer the uplink packet; and when the value of the first field is 0, the first field indicates the target user plane network element not to buffer the uplink packet, or has no meaning. Alternatively, when the value of the first field is 0, the first field indicates the target user plane network element to buffer the uplink packet; and when the value of the first field is 1, the first field indicates the target user plane network element not to buffer the uplink packet, or has no meaning. This is not limited herein.

For the manner 1.3, the value of the first field may be a value of a buffer bit in the first information element, the value of the buffer bit may be a first value, and the first value may be 0, 1, or another value. This is not limited herein.

403: The intermediate session management network element sends third indication information to the target user plane network element based on the second indication information, where the third indication information indicates the target user plane network element to buffer the uplink packet.

Correspondingly, the target user plane network element receives the third indication information from the intermediate session management network element.

Optionally, for the manner 1.2 and the manner 1.3 in step 402, the second indication information is the same as the third indication information. In other words, step 403 may be replaced with: The intermediate session management network element sends the second indication information to the target user plane network element, where the second indication information may be included in a packet forwarding control protocol session modification request (PFCP session modification request) message, and the packet forwarding control protocol session modification request message indicates the target user plane network element to modify a PFCP session for the terminal device.

Optionally, for the manner 1.1 in step 402, the third indication information may be a value of a second field, and the value of the second field may be a value of at least one bit or an enumerated value. This is not limited herein. The second field may be a field in a second information element, and the second information element is a forwarding action information element, an information element with a similar definition or function, or an information element of an extension field in a fifth forwarding action rule. This is not limited herein. In other words, for the manner 1.1 in step 402, the intermediate session management network element may receive the fifth forwarding action rule from the session management network element. Therefore, the intermediate session management network element may send the fifth forwarding action rule to the target user plane network element based on the first indication information, where the fifth forwarding action rule may be included in a packet forwarding control protocol session modification request message, and the packet forwarding control protocol session modification request message indicates the target user plane network element to modify a PFCP session for the terminal device.

The first information element may be the same as or different from the second information element. This is not limited herein.

The first field may be the same as or different from the second field. This is not limited herein.

For example, when the value of the second field is 1, the second field indicates the target user plane network element to buffer the uplink packet; and when the value of the second field is 0, the second field indicates the target user plane network element not to buffer the uplink packet, or has no meaning. Alternatively, when the value of the second field is 0, the second field indicates the target user plane network element to buffer the uplink packet; and when the value of the second field is 1, the second field indicates the target user plane network element not to buffer the uplink packet, or has no meaning. This is not limited herein.

404: The session management network element sends fourth indication information to the intermediate session management network element, where the fourth indication information indicates the target user plane network element to forward the uplink packet, and is indication information sent by the session management network element after the session management network element learns that the handover to the target application network element has been completed.

Correspondingly, the intermediate session management network element receives the fourth indication information from the session management network element.

That the fourth indication information is indication information sent by the session management network element after the session management network element learns that the handover to the target application network element has been completed may be understood as: The fourth indication information is indication information sent by the session management network element after the session management network element receives an acknowledgment message from the target application network element, where the acknowledgment message indicates that the handover to the target application network element has been completed.

Optionally, the fourth indication information may be included in a second PDU session update request message, the second PDU session update request message indicates the intermediate session management network element to update a second PDU session, and the second PDU session update request message may be an Nsmf_PDUSession _Update request.

Optionally, the fourth indication information may be a value of a third field, and the value of the third field may be a value of at least one bit or an enumerated value. This is not limited herein. The third field may be implemented in any one of the following manners:
Manner 2.1: The third field may be a newly added field or an original field in the second PDU session update request message. The second PDU session update request message may be the Nsmf_PDUSession _Update request.
Manner 2.2: The third field may be a newly added field or an original field in second information. The second information indicates to modify a PFCP session between the intermediate session management network element and the target user plane network element, and may be N4 information. Optionally, the second information may be included in the second PDU session update request message.
Manner 2.3: The third field may be a field in a third information element. The third information element is a forwarding action information element, an information element with a similar definition or function, or an information element of an extension field in a sixth forwarding action rule. This is not limited herein. The sixth forwarding action rule may be a corresponding rule for the target user plane network element to forward, to the data network, a packet that is from the target offloading user plane network element. Optionally, the sixth forwarding action rule may be included in second information.

For example, when the value of the third field is 1, the third field indicates the target user plane network element to buffer the uplink packet; and when the value of the third field is 0, the third field indicates the target user plane network element not to buffer the uplink packet, or has no meaning. Alternatively, when the value of the third field is 0, the third field indicates the target user plane network element to buffer the uplink packet; and when the value of the third field is 1, the third field indicates the target user plane network element not to buffer the uplink packet, or has no meaning. This is not limited herein.

For the manner 2.3, the value of the third field may be a value of a buffer bit in the third information element, the value of the buffer bit may be a second value, and the second value may be 0, 1, or another value. This is not limited herein. It may be understood that, in this application, the sixth forwarding action rule may be the same as the fifth forwarding action rule.

405: The intermediate session management network element sends fifth indication information to the target user plane network element based on the fourth indication information, where the fifth indication information indicates the target user plane network element to forward the uplink packet.

Correspondingly, the target user plane network element receives the fifth indication information from the intermediate session management network element.

Optionally, for the manner 2.2 and the manner 2.3 in step 404, the fourth indication information is the same as the fifth indication information. In other words, step 404 may be replaced with: The intermediate session management network element sends the fourth indication information to the target user plane network element, where the fourth indication information may be included in a packet forwarding control protocol session modification request message, and the packet forwarding control protocol session modification request message indicates the target user plane network element to modify a PFCP session for the terminal device.

Optionally, for the manner 2.1 in step 404, the fifth indication information may be a value of a fourth field, and the value of the fourth field may be a value of at least one bit or an enumerated value. This is not limited herein. The fourth field may be a field in a fourth information element, and the fourth information element is a forwarding action information element, an information element with a similar definition or function, or an information element of an extension field in a sixth forwarding action rule. This is not limited herein. In other words, for the manner 2.1 in step 404, the intermediate session management network element may receive the sixth forwarding action rule from the session management network element. Therefore, the intermediate session management network element may send the sixth forwarding action rule to the target user plane network element based on the fourth indication information, where the sixth forwarding action rule may be included in a packet forwarding control protocol session modification request message, and the packet forwarding control protocol session modification request message indicates the target user plane network element to modify a PFCP session for the terminal device.

The third information element may be the same as or different from the fourth information element. This is not limited herein.

The third field may be the same as or different from the fourth field. This is not limited herein.

For example, when the value of the fourth field is 1, the fourth field indicates the target user plane network element to buffer the uplink packet; and when the value of the fourth field is 0, the fourth field indicates the target user plane network element not to buffer the uplink packet, or has no meaning. Alternatively, when the value of the fourth field is 0, the fourth field indicates the target user plane network element to buffer the uplink packet; and when the value of the fourth field is 1, the fourth field indicates the target user plane network element not to buffer the uplink packet, or has no meaning. This is not limited herein.

It can be learned that, in the foregoing technical solution, the intermediate session management network element sends the first indication information to the session management network element, so that the session management network element can learn that the intermediate session management network element has inserted the target offloading user plane network element and the target user plane network element, and has deleted the source offloading user plane network element and the source user plane network element. In this way, the intermediate session management network element can send the third indication information to the target user plane network element based on the second indication information from the session management network element, so that the target user plane network element buffers the uplink packet based on the third indication information. In addition, when learning that the handover to the target application network element has been completed, the session management network element may send the fourth indication information to the intermediate session management network element, so that the intermediate session management network element sends the fifth indication information to the target user plane network element based on the fourth indication information, and the target user plane network element forwards the uplink packet based on the fifth indication information. It may be understood that the target user plane network element does not forward but buffers the uplink packet before the handover to the target application network element is completed, so that the uplink packet is not forwarded, thereby avoiding a loss of the uplink packet. In addition, the target user plane network element forwards the uplink packet only after the handover to the target application network element is completed, so that the uplink packet can be forwarded to the target application network element. This improves continuity and reliability of packet transmission.

Optionally, the method may further include: The intermediate session management network element sends a first packet forwarding control protocol request message to a user plane network element, where the first packet forwarding control protocol request message includes a first packet detection rule and a first forwarding action rule. Correspondingly, the user plane network element receives the first packet forwarding control protocol request message from the intermediate session management network element.

If the user plane network element is the source offloading user plane network element, the first packet detection rule is a corresponding rule for the source offloading user plane network element to detect a packet that is from the target offloading user plane network element, and the first forwarding action rule is a corresponding rule for the source offloading user plane network element to forward, to the source user plane network element, the packet that is from the target offloading user plane network element. If the user plane network element is the target offloading user plane network element, the first packet detection rule is a corresponding rule for the target offloading user plane network element to detect a packet that is from a target access network device, and the first forwarding action rule is a corresponding rule for the target offloading user plane network element to forward, to the source offloading user plane network element, the packet that is from the target access network device.

Optionally, the first packet forwarding control protocol request message indicates the user plane network element to establish or modify a PFCP session for the terminal device. If the user plane network element is the source offloading user plane network element, the first packet forwarding control protocol request message indicates the source offloading user plane network element to modify the PFCP session for the terminal device, and may be a packet forwarding control protocol session modification request (PFCP session modification request) message. If the user plane network element is the target offloading user plane network element, the first packet forwarding control protocol request message indicates the target offloading user plane network element to establish or modify the PFCP session for the terminal device, and may be a packet forwarding control protocol session modification request (PFCP session modification request) message or a packet forwarding control protocol session modification request (PFCP session establishment request) message.

Optionally, after receiving the first packet forwarding control protocol request message, the user plane network element may further send a first packet forwarding control protocol response message to the intermediate session management network element, where the first packet forwarding control protocol response message indicates that the user plane network element successfully establishes or modifies the PFCP session for the terminal device.

For example, after receiving the first packet forwarding control protocol request message, the source offloading user plane network element may further send the first packet forwarding control protocol response message to the intermediate session management network element, where the first packet forwarding control protocol response message indicates that the source offloading user plane network element successfully modifies the PFCP session for the terminal device, and the first packet forwarding control protocol response message may be a packet forwarding control protocol session modification response (PFCP session modification response) message. After receiving the first packet forwarding control protocol request message, the target offloading user plane network element may further send the first packet forwarding control protocol response message to the intermediate session management network element, where the first packet forwarding control protocol response message indicates that the target offloading user plane network element successfully establishes or modifies the PFCP session for the terminal device, and the first packet forwarding control protocol response message may be a packet forwarding control protocol session modification response (PFCP session modification response) message or a packet forwarding control protocol session establishment response (PFCP session establishment response) message. It may be understood that, if the first packet forwarding control protocol request message indicates the target offloading user plane network element to establish the PFCP session for the terminal device, the first packet forwarding control protocol response message indicates that the target offloading user plane network element successfully establishes the PFCP session for the terminal device. If the first packet forwarding control protocol request message indicates the target offloading user plane network element to modify the PFCP session for the terminal device, the first packet forwarding control protocol response message indicates that the target offloading user plane network element successfully modifies the PFCP session for the terminal device.

Optionally, the first packet detection rule is an uplink packet detection rule, and the first forwarding action rule is an uplink forwarding action rule.

Optionally, the first packet forwarding control protocol request message may further include a third packet detection rule and a third forwarding action rule. If the third data packet detection rule is a corresponding rule for the source offloading user plane network element to detect a data packet that is from a remote user plane network element, and, the third forwarding action rule is a corresponding rule for the source offloading user plane network element to forward, to the target offloading user plane network element, the packet that is from the remote user plane network element; or the third packet detection rule is a corresponding rule for the source offloading user plane network element to detect a packet that is from the source user plane network element, and the third forwarding action rule is a corresponding rule for the source offloading user plane network element to forward, to the target offloading user plane network element, the packet that is from the source user plane network element. If the user plane network element is the target offloading user plane network element, the third packet detection rule is a corresponding rule for the target offloading user plane network element to detect a packet that is from the source offloading user plane network element, and the third forwarding action rule is a corresponding rule for the target offloading user plane network element to forward, to the target access network device, the packet that is from the source offloading user plane network element.

Optionally, the third packet detection rule is a downlink packet detection rule, and the third forwarding action rule is a downlink forwarding action rule.

It can be learned that, in the foregoing technical solution, the intermediate session management network element may send the first packet forwarding control protocol request message to the source offloading user plane network element or the target offloading user plane network element, where the first packet forwarding control protocol request message includes the first packet detection rule and the first forwarding action rule, so that the source offloading user plane network element or the target offloading user plane network element detects the packet according to the first packet detection rule, and forwards the packet according to the first forwarding action rule. This avoids a loss of the uplink packet of the terminal device, and improves the continuity and the reliability of the packet transmission.

Optionally, the method may further include: The intermediate session management network element receives a second packet detection rule, a second forwarding action rule, and sixth indication information from the session management network element. Correspondingly, the session management network element sends the second packet detection rule, the second forwarding action rule, and the sixth indication information to the intermediate session management network element.

Optionally, before sending the first packet forwarding control protocol request message to the user plane network element, the intermediate session management network element receives the second packet detection rule, the second forwarding action rule, and the sixth indication information from the session management network element.

The second packet detection rule is a rule for detecting a packet that is from the target access network device, and the second forwarding action rule is a rule for forwarding, to the source offloading user plane network element, the packet that is from the target access network device. Alternatively, the second packet detection rule is a rule for detecting a packet that is from the target offloading user plane network element, and the second forwarding action rule is a rule for forwarding, to the source user plane network element, the packet that is from the target offloading user plane network element.

Optionally, the second packet detection rule and the second forwarding action rule may be included in third information, and the third information may be N4 information. It may be understood that the third information indicates the intermediate session management network element to delete or modify a PFCP session between the intermediate session management network element and the source offloading user plane network element, or indicates the intermediate session management network element to establish a PFCP session between the intermediate session management network element and the target offloading user plane network element. For example, if the second packet detection rule is the rule for detecting the packet that is from the target offloading user plane network element, the third information indicates the intermediate session management network element to delete or modify the PFCP session between the intermediate session management network element and the source offloading user plane network element. If the second forwarding action rule is the rule for forwarding, to the source user plane network element, the packet that is from the target offloading user plane network element, the third information indicates the intermediate session management network element to delete or modify the PFCP session between the intermediate session management network element and the source offloading user plane network element. If the second packet detection rule is the rule for detecting the packet that is from the target access network device, the third information indicates the intermediate session management network element to establish the PFCP session between the intermediate session management network element and the target offloading user plane network element. If the second forwarding action rule is the rule for forwarding, to the source offloading user plane network element, the packet that is from the target access network device, the third information indicates the intermediate session management network element to establish the PFCP session between the intermediate session management network element and the target offloading user plane network element. In addition, the third information may be included in the first PDU session update response message.

Optionally, the second packet detection rule is an uplink packet detection rule, and the second forwarding action rule is an uplink forwarding action rule.

The sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

For example, the sixth indication information indicates one or both of the following: the second packet detection rule is a corresponding rule for the source offloading user plane network element to detect a packet, or the second forwarding action rule is a corresponding rule for the source offloading user plane network element to forward the packet.

For another example, the sixth indication information indicates one or both of the following: the second packet detection rule is a corresponding rule for the target offloading user plane network element to detect a packet, or the second forwarding action rule is a corresponding rule for the target offloading user plane network element to forward the packet.

Optionally, the sixth indication information may be a value of a fifth field, and the value of the fifth field may be a value of at least one bit or an enumerated value. This is not limited herein. The fifth field may be implemented in any one of the following manners:
Manner 3.1: The fifth field may be a newly added field or an original field in the first PDU session update request message.
Manner 3.2: The fifth field may be a newly added field or an original field in the third information.
Manner 3.3: The fifth field may be a field in a fifth information element. The fifth information element is a forwarding action information element, an information element with a similar definition or function, or an information element of an extension field in the second packet detection rule or the second forwarding action rule. This is not limited herein.

For example, when the value of the fifth field is 1, the fifth field indicates one or both of the following: the second packet detection rule is the corresponding rule for the source offloading user plane network element to detect the packet, or the second forwarding action rule is the corresponding rule for the source offloading user plane network element to forward the packet; and when the value of the fifth field is 0, the fifth field indicates one or more of the following: the second packet detection rule is not the corresponding rule for the source offloading user plane network element to detect a packet, the second forwarding action rule is not the corresponding rule for the source offloading user plane network element to forward the packet, or there is no meaning. Alternatively, when the value of the fifth field is 0, the fifth field indicates one or both of the following: the second packet detection rule is the corresponding rule for the source offloading user plane network element to detect the packet, or the second forwarding action rule is the corresponding rule for the source offloading user plane network element to forward the packet; and when the value of the fifth field is 1, the fifth field indicates one or more of the following: the second packet detection rule is not the corresponding rule for the source offloading user plane network element to detect a packet, the second forwarding action rule is not the corresponding rule for the source offloading user plane network element to forward the packet, or there is no meaning. This is not limited herein.

Optionally, the sixth indication information may be a forwarding tunnel rule indication.

It can be learned that, in the foregoing technical solution, the intermediate session management network element may receive the second packet detection rule, the second forwarding action rule, and the sixth indication information from the session management network element, so that the intermediate session management network element can learn of the one or both of the following: the second packet detection rule is the corresponding rule for the source offloading user plane network element or the target offloading user plane network element to detect the packet, or the second forwarding action rule is the corresponding rule for the source offloading user plane network element or the target offloading user plane network element to forward the packet.

Optionally, if the user plane network element is the target offloading user plane network element, the first packet detection rule is obtained by the intermediate session management network element by adding a tunnel endpoint identifier of the target offloading user plane network element and an Internet protocol address of the target offloading user plane network element to the second packet detection rule based on the sixth indication information, and the first forwarding action rule is obtained by the intermediate session management network element by adding a tunnel endpoint identifier of the source offloading user plane network element and an Internet protocol address of the source offloading user plane network element to the second forwarding action rule based on the sixth indication information. If the user plane network element is the source offloading user plane network element, the first packet detection rule is obtained by the intermediate session management network element by adding a tunnel endpoint identifier of the source offloading user plane network element and an Internet protocol address of the source offloading user plane network element to the second packet detection rule based on the sixth indication information, and the first forwarding action rule is obtained by the intermediate session management network element by adding a tunnel endpoint identifier of the source user plane network element and an Internet protocol address of the source user plane network element to the second forwarding action rule based on the sixth indication information.

The tunnel endpoint identifier of the target offloading user plane network element and the Internet protocol address of the target offloading user plane network element indicate the target offloading user plane network element to receive an uplink service packet. The tunnel endpoint identifier of the source offloading user plane network element and the Internet protocol address of the source offloading user plane network element indicate the source offloading user plane network element to receive the uplink service packet.

The sixth indication information may be "Y".

For example, refer to Table 1. The second packet detection rule and the second forwarding action rule in Table 1 are included in the N4 information that is used by the session management network element to indicate the intermediate session management network element to establish the PFCP session between the intermediate session management network element and the target offloading user plane network element. Table 1 enumerates a correspondence among a packet detection rule, a forwarding action rule, and indication information. As enumerated in Table 1, there is a correspondence among UL PDR 259 (an identifier of the second packet detection rule), the tunnel endpoint identifier of the source offloading user plane network element and the Internet protocol address of the source offloading user plane network element (where the tunnel endpoint identifier of the source offloading user plane network element and the Internet protocol address of the source offloading user plane network element are included in the first forwarding action rule), Access (a source interface), N3 (a source interface type), ULFAR 259 (an identifier of the second forwarding action rule), Core (a target interface), N9 (a target interface type), and the sixth indication information. Because the sixth indication information is "Y", the intermediate session management network element may add the tunnel endpoint identifier of the source offloading user plane network element and the Internet protocol address of the source offloading user plane network element to the second forwarding action rule based on the sixth indication information, to obtain the first forwarding action rule.

**Table 1: Correspondence among the packet detection rule, the forwarding action rule, and the indication information**

| PDR identifier | Tunnel endpoint identifier and Internet protocol address in the FAR | Source interface | Source interface type | FAR identifier | Target interface | Target interface type | Indication information |
|---|---|---|---|---|---|---|---|
| Uplink (uplink, UL) PDR 259 | Tunnel endpoint identifier of the source offloading user plane network element and Internet protocol address of the source offloading user plane network element | Access | N3 | UL FAR 259 | Core | N9 | Y (sixth indication information) |

It can be learned that, in the foregoing technical solution, because the first packet detection rule further includes the tunnel endpoint identifier of the target offloading user plane network element and the Internet protocol address of the target offloading user plane network element, and the first forwarding action rule further includes the tunnel endpoint identifier of the source offloading user plane network element and the Internet protocol address of the source offloading user plane network element, the target offloading user plane network element may receive and detect the packet based on the tunnel endpoint identifier of the target offloading user plane network element and the Internet protocol address of the target offloading user plane network element, and establish a tunnel with the source offloading user plane network element based on the tunnel endpoint identifier of the source offloading user plane network element and the Internet protocol address of the source offloading user plane network element, so that the packet can be transmitted through the tunnel, to avoid the loss of the uplink packet of the terminal device. Similarly, because the first packet detection rule further includes the tunnel endpoint identifier of the source offloading user plane network element and the Internet protocol address of the source offloading user plane network element, and the first forwarding action rule further includes the tunnel endpoint identifier of the source user plane network element and the Internet protocol address of the source user plane network element, the source offloading user plane network element may receive and detect the packet based on the tunnel endpoint identifier of the source offloading user plane network element and the Internet protocol address of the source offloading user plane network element, and establish a tunnel with the source user plane network element based on the tunnel endpoint identifier of the source user plane network element and the Internet protocol address of the source user plane network element, so that the packet can be transmitted through the tunnel, to avoid the loss of the uplink packet of the terminal device.

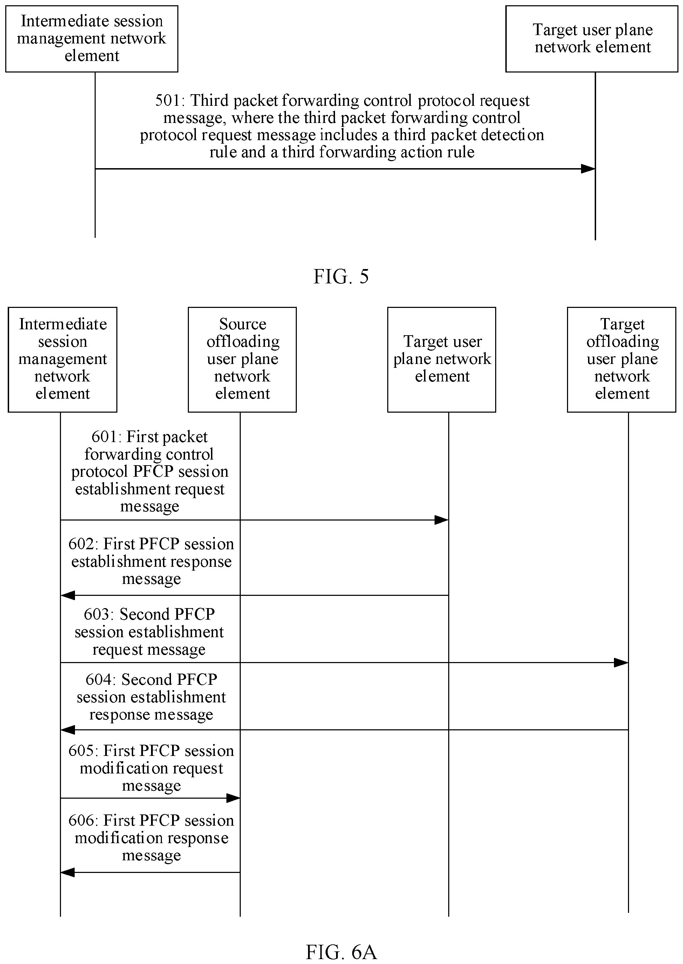

FIG. 5 is a schematic flowchart of a message transmission method according to an embodiment of this application. As shown in FIG. 5, the method includes but is not limited to the following steps.

501: An intermediate session management network element sends a third packet forwarding control protocol request message to a user plane network element, where the third packet forwarding control protocol request message includes a third packet detection rule and a third forwarding action rule.

Correspondingly, the user plane network element receives the third packet forwarding control protocol request message from the intermediate session management network element.

For the third packet detection rule and the third forwarding action rule, refer to related descriptions of step 405 in FIG. 4. Details are not described herein again.

Optionally, the third packet forwarding control protocol request message indicates the user plane network element to establish or modify a PFCP session for a terminal device. If the user plane network element is a source offloading user plane network element, the third packet forwarding control protocol request message indicates the source offloading user plane network element to modify the PFCP session for the terminal device, and may be a packet forwarding control protocol session modification request (PFCP session modification request) message. If the user plane network element is a target offloading user plane network element, the third packet forwarding control protocol request message indicates the target offloading user plane network element to establish or modify the PFCP session for the terminal device, and may be a packet forwarding control protocol session modification request (PFCP session modification request) message or a packet forwarding control protocol session establishment request (PFCP session establishment request) message.

Optionally, after receiving the third packet forwarding control protocol request message, the user plane network element may further send a third packet forwarding control protocol response message to the intermediate session management network element, where the third packet forwarding control protocol response message indicates that the user plane network element successfully establishes or modifies the PFCP session for the terminal device.

For example, after receiving the third packet forwarding control protocol request message, the source offloading user plane network element may further send the third packet forwarding control protocol response message to the intermediate session management network element, where the third packet forwarding control protocol response message indicates that the source offloading user plane network element successfully modifies the PFCP session for the terminal device. After receiving the third packet forwarding control protocol request message, the target offloading user plane network element may further send the third packet forwarding control protocol response message to the intermediate session management network element, where the third packet forwarding control protocol response message indicates that the target offloading user plane network element successfully establishes or modifies the PFCP session for the terminal device, and the third packet forwarding control protocol response message may be a packet forwarding control protocol session modification response (PFCP session modification response) message or a packet forwarding control protocol session establishment response (PFCP session establishment response) message. It may be understood that, if the third packet forwarding control protocol request message indicates the target offloading user plane network element to establish the PFCP session for the terminal device, the third packet forwarding control protocol response message indicates that the target offloading user plane network element successfully establishes the PFCP session for the terminal device. If the third packet forwarding control protocol request message indicates the target offloading user plane network element to modify the PFCP session for the terminal device, the third packet forwarding control protocol response message indicates that the target offloading user plane network element successfully modifies the PFCP session for the terminal device.

Optionally, the third packet forwarding control protocol request message may further include a first packet detection rule and a first forwarding action rule.

Optionally, in this application, a first packet forwarding control protocol request message and the third packet forwarding control protocol request message may be a same message or different messages. This is not limited herein. If the first packet forwarding control protocol request message and the third packet forwarding control protocol request message are the same message, a first packet forwarding control protocol response message and the third packet forwarding control protocol response message may be a same message. This is not limited herein.

It can be learned that, in the foregoing technical solution, the intermediate session management network element may send the third packet forwarding control protocol request message to the source offloading user plane network element or the target offloading user plane network element, where the third packet forwarding control protocol request message includes the third packet detection rule and the third forwarding action rule, so that the source offloading user plane network element or the target offloading user plane network element detects a packet according to the third packet detection rule, and forwards a packet according to the third forwarding action rule. This avoids a loss of a downlink packet of the terminal device, and improves reliability of packet transmission.

Optionally, the method may further include: The intermediate session management network element receives a fourth packet detection rule, a fourth forwarding action rule, and seventh indication information from a session management network element. Correspondingly, the session management network element sends the fourth packet detection rule, the fourth forwarding action rule, and the seventh indication information to the intermediate session management network element.

Optionally, before sending the third packet forwarding control protocol request message to the user plane network element, the intermediate session management network element receives the fourth packet detection rule, the fourth forwarding action rule, and the seventh indication information from the session management network element.

Optionally, the fourth packet detection rule is a rule for detecting a packet that is from the source offloading user plane network element, and the fourth forwarding action rule is a rule for forwarding, to a target access network device, the packet that is from the source offloading user plane network element.

Alternatively, the fourth packet detection rule is a rule for detecting a packet that is from a remote user plane network element, and the fourth forwarding action rule is a rule for forwarding, to the target offloading user plane network element, the packet that is from the remote user plane network element.

Alternatively, the fourth packet detection rule is a rule for detecting a packet that is from a source user plane network element, and the fourth forwarding action rule is a rule for forwarding, to the target offloading user plane network element, the packet that is from the source user plane network element.

Optionally, the fourth packet detection rule and the fourth forwarding action rule may be included in fourth information, and the fourth information may be N4 information. It may be understood that the fourth information indicates the intermediate session management network element to delete or modify a PFCP session between the intermediate session management network element and the source offloading user plane network element, or indicates the intermediate session management network element to establish a PFCP session between the intermediate session management network element and the target offloading user plane network element. For example, if the fourth packet detection rule is the rule for detecting the packet that is from the remote user plane network element, the fourth information indicates the intermediate session management network element to delete or modify the PFCP session between the intermediate session management network element and the source offloading user plane network element. If the fourth forwarding action rule is the rule for forwarding, to the target offloading user plane network element, the packet that is from the remote user plane network element, the fourth information indicates the intermediate session management network element to delete or modify the PFCP session between the intermediate session management network element and the source offloading user plane network element. If the fourth packet detection rule is the rule for detecting the packet that is from the source user plane network element, the fourth information indicates the intermediate session management network element to delete or modify the PFCP session between the intermediate session management network element and the source offloading user plane network element. If the fourth forwarding action rule is the rule for forwarding, to the target offloading user plane network element, the packet that is from the source user plane network element, the fourth information indicates the intermediate session management network element to delete or modify the PFCP session between the intermediate session management network element and the source offloading user plane network element. If the fourth packet detection rule is the rule for detecting the packet that is from the source offloading user plane network element, the fourth information indicates the intermediate session management network element to establish the PFCP session between the intermediate session management network element and the target offloading user plane network element. If the fourth forwarding action rule is the rule for forwarding, to the target access network device, the packet that is from the source offloading user plane network element, the fourth information indicates the intermediate session management network element to establish the PFCP session between the intermediate session management network element and the target offloading user plane network element. In addition, the fourth information may be included in a first PDU session update response message.

The fourth packet detection rule is a downlink packet detection rule, and the fourth forwarding action rule is a downlink forwarding action rule.

The seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

For example, the seventh indication information indicates one or both of the following: the fourth packet detection rule is a corresponding rule for the source offloading user plane network element to detect a packet, or the fourth forwarding action rule is a corresponding rule for the source offloading user plane network element to forward the packet.

For another example, the seventh indication information indicates one or both of the following: the fourth packet detection rule is a corresponding rule for the target offloading user plane network element to detect a packet, or the fourth forwarding action rule is a corresponding rule for the target offloading user plane network element to forward the packet.

Optionally, the seventh indication information may be a value of a sixth field, and the value of the sixth field may be a value of at least one bit or an enumerated value. This is not limited herein. The sixth field may be implemented in any one of the following manners:
Manner 4.1: The sixth field may be a newly added field or an original field in a first PDU session update request message.
Manner 4.2: The sixth field may be a newly added field or an original field in the fourth information.
Manner 4.3: The sixth field may be a field in a sixth information element. The sixth information element is a forwarding action information element, an information element with a similar definition or function, or an information element of an extension field in the fourth packet detection rule or the fourth forwarding action rule. This is not limited herein.

For example, when the value of the sixth field is 1, the sixth field indicates one or both of the following: the fourth packet detection rule is the corresponding rule for the source offloading user plane network element to detect the packet, or the fourth forwarding action rule is the corresponding rule for the source offloading user plane network element to forward the packet; and when the value of the sixth field is 0, the sixth field indicates one or more of the following: the fourth packet detection rule is not the corresponding rule for the source offloading user plane network element to detect the packet, the fourth forwarding action rule is not the corresponding rule for the source offloading user plane network element to forward the packet, or there is no meaning. Alternatively, when the value of the sixth field is 0, the sixth field indicates one or both of the following: the fourth packet detection rule is the corresponding rule for the source offloading user plane network element to detect the packet, or the fourth forwarding action rule is the corresponding rule for the source offloading user plane network element to forward the packet; and when the value of the sixth field is 1, the sixth field indicates one or more of the following: the fourth packet detection rule is not the corresponding rule for the source offloading user plane network element to detect the packet, the fourth forwarding action rule is not the corresponding rule for the source offloading user plane network element to forward the packet, or there is no meaning. This is not limited herein.

Optionally, the seventh indication information may be a forwarding tunnel rule indication.

In this application, sixth indication information and the seventh indication information may be the same. For example, both the sixth indication information and the seventh indication information are "Y".

For example, refer to Table 2. Table 2 enumerates a correspondence among a packet detection rule, a forwarding action rule, and indication information. As enumerated in Table 2, the fourth packet detection rule and the fourth forwarding action rule in Table 2 are included in the N4 information that is used by the session management network element to indicate the intermediate session management network element to delete or modify the PFCP session between the intermediate session management network element and the source offloading user plane network element. There is a correspondence among DL PDR 258 (an identifier of the fourth packet detection rule), a tunnel endpoint identifier of the target offloading user plane network element and an Internet protocol address of the target offloading user plane network element, Core (a source interface), N9 (a source interface type), DLFAR 258 (an identifier of the fourth forwarding action rule), Access (a target interface), N3 (a target interface type), and the seventh indication information. Because the seventh indication information is "Y", the intermediate session management network element may add the tunnel endpoint identifier of the target offloading user plane network element and the Internet protocol address of the target offloading user plane network element to the fourth forwarding action rule based on the seventh indication information.

**Table 2: Correspondence among the packet detection rule, the forwarding action rule, and the indication information**

| PDR identifier | Tunnel endpoint identifier and Internet protocol address in the FAR | Source interface | Source interface type | FAR identifier | Target interface | Target interface type | Indication information |
|---|---|---|---|---|---|---|---|
| Downlink (downlink, DL) PDR 258 | Tunnel endpoint identifier of the target offloading user plane network element and Internet protocol address of the target offloading user plane network element | Core | N9 | DLFAR 258 | Access | N3 | Y (seventh indication information) |

It can be learned that in the foregoing technical solution, the intermediate session management network element may receive the fourth packet detection rule, the fourth forwarding action rule, and the seventh indication information from the session management network element, so that the intermediate session management network element can learn of the one or both of the following: the fourth packet detection rule is the corresponding rule for the source offloading user plane network element or the target offloading user plane network element to detect the packet, or the fourth forwarding action rule is the corresponding rule for the source offloading user plane network element or the target offloading user plane network element to forward the packet.

Optionally, if the user plane network element is the target offloading user plane network element, the third packet detection rule is obtained by the intermediate session management network element by adding the tunnel endpoint identifier of the target offloading user plane network element and the Internet protocol address of the target offloading user plane network element to the fourth packet detection rule based on the seventh indication information, and the third forwarding action rule is obtained by the intermediate session management network element by adding a tunnel endpoint identifier of the target access network device and an Internet protocol address of the target access network device to the fourth forwarding action rule based on the seventh indication information. If the user plane network element is the source offloading user plane network element, the third packet detection rule is obtained by the intermediate session management network element by adding a tunnel endpoint identifier of the source offloading user plane network element and an Internet protocol address of the source offloading user plane network element to the fourth packet detection rule based on the seventh indication information, and the third forwarding action rule is obtained by the intermediate session management network element by adding the tunnel endpoint identifier of the target offloading user plane network element and the Internet protocol address of the target offloading user plane network element to the fourth forwarding action rule based on the seventh indication information.

It can be learned that, in the foregoing technical solution, because the third packet detection rule further includes the tunnel endpoint identifier of the target offloading user plane network element and the Internet protocol address of the target offloading user plane network element, and the third forwarding action rule further includes the tunnel endpoint identifier of the target access network device and the Internet protocol address of the target access network device, the target offloading user plane network element may receive and detect the packet based on the tunnel endpoint identifier of the target offloading user plane network element and the Internet protocol address of the target offloading user plane network element, and establish a tunnel with the target access network device based on the tunnel endpoint identifier of the target access network device and the Internet protocol address of the target access network device, so that the packet can be transmitted through the tunnel, to avoid a loss of the packet between the target offloading user plane network element and the target access network device. Similarly, because the third packet detection rule further includes the tunnel endpoint identifier of the source offloading user plane network element and the Internet protocol address of the source offloading user plane network element, and the third forwarding action rule further includes the tunnel endpoint identifier of the target offloading user plane network element and the Internet protocol address of the target offloading user plane network element, the source offloading user plane network element may receive and detect the packet based on the tunnel endpoint identifier of the source offloading user plane network element and the Internet protocol address of the source offloading user plane network element, and establish a tunnel with the target offloading user plane network element based on the tunnel endpoint identifier of the target offloading user plane network element and the Internet protocol address of the target offloading user plane network element, so that the packet can be transmitted through the tunnel, to avoid the loss of the downlink packet of the terminal device.

The following describes this solution by using an example in which an intermediate session management network element determines, based on an N3 interface between a source offloading user plane network element and a source access network device, to establish a forwarding tunnel for a service packet between the intermediate session management network element and a user plane network element (where the user plane network element may be a target user plane network element and/or a target offloading user plane network element). Specifically, FIG. 6A is a schematic flowchart of another message transmission method according to an embodiment of this application. As shown in FIG. 6A, the method includes but is not limited to the following steps.

601: The intermediate session management network element sends a first PFCP session establishment request message to the target user plane network element, where the PFCP session establishment request message notifies the target user plane network element to establish a PFCP session for a terminal device.

Correspondingly, the target user plane network element receives the first PFCP session establishment request message from the intermediate session management network element.

The first PFCP session establishment request message in step 601 includes a first uplink packet detection rule, a first uplink forwarding action rule, a first downlink packet detection rule, and a first downlink forwarding action rule. The first uplink packet detection rule and the first uplink forwarding action rule are used by the target user plane network element to establish uplink forwarding channels for all service packets, and the first downlink packet detection rule and the first downlink forwarding action rule are used by the target user plane network element to establish downlink forwarding channels for all the service packets. It may be understood that an uplink service packet is received by the target user plane network element and then forwarded to a data network, and a downlink service packet is received by the target user plane network element and then forwarded to the target offloading user plane network element.

602: The target user plane network element returns a first PFCP session establishment response (PFCP session establishment response) message to the intermediate session management network element, where the first PFCP session establishment response message indicates that a first PFCP session is successfully established.

Correspondingly, the intermediate session management network element receives the first PFCP session establishment response message from the target user plane network element.

The PFCP session establishment response message in step 602 includes service packet forwarding information allocated by the target user plane network element, the service packet forwarding information includes a tunnel endpoint identifier of the target user plane network element and an Internet protocol address of the target user plane network element, and the tunnel endpoint identifier of the target user plane network element and the Internet protocol address of the target user plane network element are used by the intermediate session management network element to indicate the target offloading user plane network element to establish a forwarding channel for the uplink service packet.

It may be understood that, in this embodiment shown in FIG. 6A, the intermediate session management network element determines and establishes the forwarding tunnel for the uplink or downlink service packet, to ensure continuity of the uplink or downlink service packet in a procedure in which both an offloading user plane network element and a user plane network element change. For example, the intermediate session management network element determines, depending on whether an N3 user plane tunnel is established between the source offloading user plane network element and the source access network device, whether the forwarding tunnel for the uplink or downlink service packet needs to be established. To be specific, if the N3 user plane tunnel is established between the source offloading user plane network element and the source access network device, the intermediate session management network element determines that the forwarding tunnel for the uplink or downlink service packet needs to be established.

603: The intermediate session management network element sends a second PFCP session establishment request message to the target offloading user plane network element, where the PFCP session establishment request message notifies the target offloading user plane network element to establish a PFCP session for the terminal device.

Correspondingly, the target offloading user plane network element receives the second PFCP session establishment request message from the intermediate session management network element.

The second PFCP session establishment request message in step 603 includes a first uplink packet detection rule, a first uplink forwarding action rule, a first downlink packet detection rule, and a first downlink forwarding action rule. The first uplink packet detection rule and the first uplink forwarding action rule are used by the target offloading user plane network element to establish uplink forwarding channels for all the service packets, and the first downlink packet detection rule and the first downlink forwarding action rule are used by the target offloading user plane network element to establish downlink forwarding channels for all the service packets. It may be understood that the uplink service packet is sent by a target access network device to the target offloading user plane network element and then forwarded by the target offloading user plane network element to a remote user plane network element, and the downlink service packet is sent by the remote user plane network element to the target offloading user plane network element and then forwarded by the target offloading user plane network element to the target access network device.

In addition, the second PFCP session establishment request message in step 603 further includes a second downlink packet detection rule and a second downlink forwarding action rule. The second downlink packet detection rule and the second downlink forwarding action rule are used by the target offloading user plane network element to establish a forwarding channel for the downlink service packet, to ensure the continuity of the downlink service packet in the procedure in which both the offloading user plane network element and the user plane network element change. The downlink service packet is sent by the source offloading user plane network element to the target offloading user plane network element and then forwarded by the target offloading user plane network element to the target access network device. It may be understood that the second PFCP session establishment request message in step 603 and the third PFCP request message sent by the intermediate session management network element to the target offloading user plane network element in step 501 in FIG. 5 are a same message, the second downlink packet detection rule in step 603 is the same as the third packet detection rule sent by the intermediate session management network element to the target offloading user plane network element in step 501 in FIG. 5, and the second downlink forwarding action rule is the same as the third forwarding action rule sent by the intermediate session management network element to the target offloading user plane network element in step 501 in FIG. 5.

604: The target offloading user plane network element returns a second PFCP session establishment response message to the intermediate session management network element, where the second PFCP session establishment response message indicates that a second PFCP session is successfully established.

Correspondingly, the intermediate session management network element receives the second PFCP session establishment response message from the target offloading user plane network element.

The second PFCP session establishment response message in step 604 includes first service packet forwarding information, second service packet forwarding information, and third service packet forwarding information that are allocated by the target offloading user plane network element. The first service packet forwarding information, the second service packet forwarding information, and the third service packet forwarding information each include a tunnel endpoint identifier of the target offloading user plane network element and an Internet protocol address of the target offloading user plane network element. The first service packet forwarding information is used by the intermediate session management network element to indicate the target access network device to establish a forwarding channel for the uplink service packet, the second service packet forwarding information is used by the intermediate session management network element to indicate the target user plane network element or the remote user plane network element to establish a forwarding channel for the downlink service packet, and the third service packet forwarding information is used by the intermediate session management network element to indicate the source offloading user plane network element to establish a forwarding channel that is for the downlink service packet and that is for ensuring the continuity of the downlink service packet.

605: The intermediate session management network element sends a first PFCP session modification request message to the source offloading user plane network element, where the first PFCP session modification request message notifies the source offloading user plane network element to modify a third PFCP session for the terminal device.

Correspondingly, the source offloading user plane network element receives the first PFCP session modification request message from the intermediate session management network element.

The first PFCP session modification request message in step 605 includes a first uplink packet detection rule, a first uplink forwarding action rule, a first downlink packet detection rule, and a first downlink forwarding action rule. The first uplink packet detection rule and the first uplink forwarding action rule are used by the source offloading user plane network element to establish an uplink forwarding channel for a service packet offloaded from a source user plane network element. The first downlink packet detection rule and the first downlink forwarding action rule are used by the source offloading user plane network element to establish downlink forwarding channels for all the service packets, to ensure the continuity of the uplink or downlink service packet in the procedure in which both the offloading user plane network element and the user plane network element change. It may be understood that the uplink service packet is sent by the target offloading user plane network element to the source offloading user plane network element and then forwarded by the source offloading user plane network element to the source user plane network element. The downlink service packet is sent by the remote user plane network element or the source user plane network element to the source offloading user plane network element and then forwarded by the source offloading user plane network element to the target offloading user plane network element. It may be understood that the first PFCP session modification request message in step 605 and the first packet forwarding control protocol request message sent by the intermediate session management network element to the source offloading user plane network element in step 405 in FIG. 4 are a same message, the first uplink packet detection rule in step 605 is the same as the first packet detection rule sent by the intermediate session management network element to the source offloading user plane network element in step 405 in FIG. 4, and the first uplink forwarding action rule is the same as the first forwarding action rule sent by the intermediate session management network element to the source offloading user plane network element in step 405 in FIG. 4. The first PFCP session modification request message in step 605 and the third packet forwarding control protocol request message sent by the intermediate session management network element to the source offloading user plane network element in step 501 in FIG. 5 are a same message, the first downlink packet detection rule in step 605 is the same as the third packet detection rule sent by the intermediate session management network element to the source offloading user plane network element in step 501 in FIG. 5, and the first downlink forwarding action rule is the same as the third forwarding action rule sent by the intermediate session management network element to the source offloading user plane network element in step 501 in FIG. 5.

606: The source offloading user plane network element returns a first PFCP session modification response message to the intermediate session management network element, where the first PFCP session modification response message indicates that the third PFCP session is successfully modified.

Correspondingly, the intermediate session management network element receives the first PFCP session modification response message from the source offloading user plane network element.

The first PFCP session modification response message in step 606 includes service packet forwarding information allocated by the source offloading user plane network element, and the service packet forwarding information includes a tunnel endpoint identifier of the source offloading user plane network element and an Internet protocol address of the source offloading user plane network element. The service packet forwarding information is used by the intermediate session management network element to indicate the target offloading user plane network element to establish a forwarding channel that is for the uplink service packet and that is for ensuring the continuity of the uplink service packet.

After step 606, a forwarding path of the downlink service packet is:
the remote user plane network element to the source offloading user plane network element to the target offloading user plane network element to the target access network device to the terminal device; or
the source user plane network element to the source offloading user plane network element to the target offloading user plane network element to the target access network device to the terminal device.

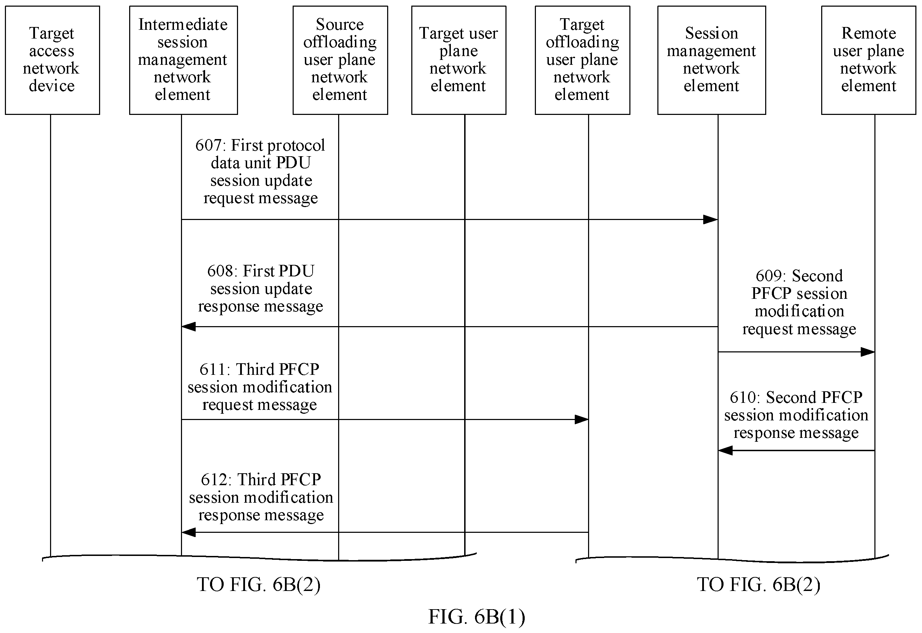

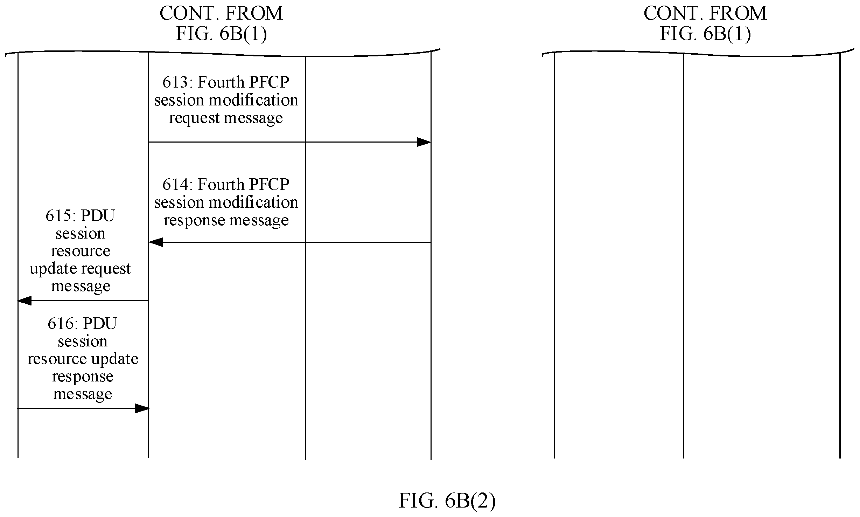

Optionally, after step 606, this solution may further include but is not limited to the following step 607 to step 616. Specifically, FIG. 6B(1) and FIG. 6B(2) are a schematic flowchart of another message transmission method according to this embodiment of this application.

607: The intermediate session management network element sends a first PDU session update request (Nsmf_PDUSession_Update request) to the session management network element, where the first PDU session update request message includes first indication information and the second service packet forwarding information allocated by the target offloading user plane network element in step 604.

Correspondingly, the session management network element receives the first PDU session update request from the intermediate session management network element.

For the first indication information, refer to related descriptions of step 401 in FIG. 4. Details are not described herein again.

608: The session management network element returns a first PDU session update response (Nsmf_PDUSession_Update response) message to the intermediate session management network element, where the first PDU session update response message includes first N4 information, second N4 information, third N4 information, and fourth N4 information.

Correspondingly, the intermediate session management network element receives the first PDU session update response message from the session management network element.

The first N4 information indicates the intermediate session management network element to establish a PFCP session between the intermediate session management network element and the target offloading user plane network element, and includes a third uplink packet detection rule, a third uplink forwarding action rule, a third downlink packet detection rule, and a third downlink forwarding action rule. The third uplink packet detection rule and the third uplink forwarding action rule indicate the target offloading user plane network element to establish an uplink forwarding channel for a service packet offloaded from the target user plane network element, and the third downlink packet detection rule and the third downlink forwarding action rule indicate the target offloading user plane network element to establish a downlink forwarding channel for the service packet offloaded from the target user plane network element. The uplink service packet is sent by the target access network device to the target offloading user plane network element and then forwarded by the target offloading user plane network element to the target user plane network element, and the downlink service packet is sent by the target user plane network element to the target offloading user plane network element and then forwarded by the target offloading user plane network element to the target access network device. For example, if a service packet corresponding to a service whose application identifier is 100 is offloaded from the target user plane network element, the first N4 information includes an uplink packet detection rule and an uplink forwarding action rule that correspond to the service, or includes a downlink packet detection rule and a downlink forwarding action rule that correspond to the service.

The second N4 information indicates the intermediate session management network element to establish a PFCP session between the intermediate session management network element and the target user plane network element, and includes a second uplink packet detection rule, a second uplink forwarding action rule, a second downlink packet detection rule, and a second downlink forwarding action rule. The second uplink packet detection rule and the second uplink forwarding action rule indicate the target user plane network element to establish an uplink forwarding channel for the service packet offloaded from the target user plane network element, and the second downlink packet detection rule and the second downlink forwarding action rule indicate the target user plane network element to establish a downlink forwarding channel for the service packet offloaded from the target user plane network element. It may be understood that the uplink service packet is sent by the target offloading user plane network element to the target user plane network element and then forwarded by the target user plane network element to the data network, and the downlink service packet is sent by the data network to the target user plane network element and then forwarded by the target user plane network element to the target offloading user plane network element.

The third N4 information indicates the intermediate session management network element to delete a PFCP session between the intermediate session management network element and the source offloading user plane network element.

The fourth N4 information indicates the intermediate session management network element to delete a PFCP session between the intermediate session management network element and the source user plane network element.

In addition, a change of a local user plane network element may cause handover of an application network element. The session management network element may notify a source application network element of an access point identifier (DN Access Identifier, DNAI) of the target user plane network element, so that the source application network element triggers the handover of the application network element based on the access point identifier. If the application network element indicates, when subscribing to an event of the session management network element, that an acknowledgment of the application network element is needed, an uplink packet can be sent to a new application network element only after the handover of the application network element is performed and a positive acknowledgment is sent to the session management network element. In other words, a target application network element may send a positive acknowledgment to the session management network element when handover from the source application network element to the target application network element is completed. In this case, the target user plane network element can send the uplink packet to the target application network element. Therefore, to implement this process, the first PDU session update response message in step 608 further includes second indication information. For the second indication information, refer to related descriptions of step 402 in FIG. 4. Details are not described herein again.

For example, the second indication information may be implemented in any one of the following cases:
In a case 1.1, the session management network element may indicate, by using one bit or through enumeration in the first PDU session update response message in step 608, the target user plane network element to buffer the uplink packet. For example, the indication is implemented by using one bit in a new parameter or an original parameter. If the bit is set to 1, the bit indicates the target user plane network element to buffer the uplink packet. If the bit is set to 0, the bit indicates that the target user plane network element does not need to buffer the uplink packet, the bit indicates to forward the uplink packet, or the bit has no special meaning. Alternatively, if the bit is set to 0, the bit indicates the target user plane network element to buffer the uplink packet. If the bit is set to 1, the bit indicates that the target user plane network element does not need to buffer the uplink packet, the bit indicates to forward the uplink packet, or the bit has no special meaning. Alternatively, the indication is implemented through enumeration in a new parameter or an original parameter, and a specific enumerated value indicates the target user plane network element to buffer the uplink packet.

Alternatively, in a case 1.2, the session management network element may indicate, by using one bit or through enumeration in the second N4 information, the target user plane network element to buffer the uplink packet. For a specific indication manner, refer to the indication manner in the foregoing case 1.1. Details are not described herein again.

Alternatively, in a case 1.3, the session management network element may set, to 1, a buffer bit in a forwarding action information element included in the second uplink forwarding action rule included in the second N4 information, to indicate the target user plane network element to buffer the uplink packet.

609: The session management network element sends a second PFCP session modification request message to the remote user plane network element, where the second PFCP session modification request message notifies the remote user plane network element to modify a PFCP session for the terminal device.

Correspondingly, the remote user plane network element receives the second PFCP session modification request message from the session management network element.

The second PFCP session modification request message in step 609 includes the second service packet forwarding information allocated by the target offloading user plane network element in step 607. After receiving the downlink service packet from the data network, the remote user plane network element sends the downlink service packet to the target offloading user plane network element based on the second service packet forwarding information allocated by the target offloading user plane network element.

610: The remote user plane network element returns a second PFCP session modification response message to the session management network element, where the second PFCP session modification response message indicates that a fourth PFCP session is successfully modified.

Correspondingly, the session management network element receives the PFCP session modification response message from the remote user plane network element.

After step 610, a forwarding path of the downlink service packet is:
the remote user plane network element to the target offloading user plane network element to the target access network device to the terminal device; or
the source user plane network element to the source offloading user plane network element to the target offloading user plane network element to the target access network device to the terminal device.

611: The intermediate session management network element sends a third PFCP session modification request message to the target offloading user plane network element, where the third PFCP session modification request message notifies the target offloading user plane network element to modify a PFCP session for the terminal device.

Correspondingly, the target offloading user plane network element receives the third PFCP session modification request message from the intermediate session management network element.

The third PFCP session modification request message in step 611 includes the third uplink packet detection rule, the third uplink forwarding action rule, the third downlink packet detection rule, and the third downlink forwarding action rule that are included in the first N4 information in step 608.

In addition, the third PFCP session modification request message in step 611 further includes a second uplink packet detection rule and a second uplink forwarding action rule. The second uplink packet detection rule and the second uplink forwarding action rule are used by the target offloading user plane network element to establish an uplink forwarding channel for a service packet offloaded from the source user plane network element, to ensure the continuity of the uplink service packet in the procedure in which both the offloading user plane network element and the user plane network element change. The uplink service packet is sent by the target access network device to the target offloading user plane network element and then forwarded by the target offloading user plane network element to the source offloading user plane network element. It may be understood that the third PFCP session modification request message in step 611 and the first packet forwarding control protocol request message sent by the intermediate session management network element to the target offloading user plane network element in step 405 in FIG. 4 are a same message, the second uplink packet detection rule in step 611 is the same as the first packet detection rule sent by the intermediate session management network element to the target offloading user plane network element in step 405 in FIG. 4, and the second uplink forwarding action rule is the same as the first forwarding action rule sent by the intermediate session management network element to the target offloading user plane network element in step 405 in FIG. 4.

612: The target offloading user plane network element returns a third PFCP session modification response message to the intermediate session management network element, where the third PFCP session modification response message indicates that the PFCP session is successfully modified.

Correspondingly, the intermediate session management network element receives the third PFCP session modification response message from the target offloading user plane network element.

613: The intermediate session management network element sends a fourth PFCP session modification request message to the target user plane network element, where the fourth PFCP session modification request message notifies the target user plane network element to modify a PFCP session for the terminal device.

Correspondingly, the target user plane network element receives the fourth PFCP session modification request message from the intermediate session management network element.

The fourth PFCP session modification request message in step 613 includes the second uplink packet detection rule, the second uplink forwarding action rule, the second downlink packet detection rule, and the second downlink forwarding action rule that are included in the second N4 information in step 608.

In addition, the fourth PFCP session modification request message in step 613 further includes third indication information. For the third indication information, refer to related descriptions of step 403 in FIG. 4. Details are not described herein again.

For example, for the case 1.2 and the case 1.3 in step 608, the intermediate session management network element forwards the third indication information to the target user plane network element. For the case 1.1 in step 608, the intermediate session management network element sets, to 1 based on the received second indication information, a buffer bit in a forwarding action information element included in the second uplink forwarding action rule to be sent to the target user plane network element, to indicate the target user plane network element to buffer the uplink packet.

614: The target user plane network element returns a fourth PFCP session modification response message to the intermediate session management network element, where the fourth PFCP session modification response message indicates that the PFCP session is successfully modified.

Correspondingly, the intermediate session management network element receives the fourth PFCP session modification response message from the target user plane network element.

After step 614, a forwarding path of the downlink service packet is:
the remote user plane network element to the target offloading user plane network element to the target access network device to the terminal device; or
the target user plane network element to the target offloading user plane network element to the target access network device to the terminal device.

615: The intermediate session management network element sends a PDU session resource update request message to the target access network device, where the PDU session resource update request message includes the first service packet forwarding information in step 604.

Correspondingly, the target access network device receives the PDU session resource update request message from the intermediate session management network element.

616: The target access network device returns a PDU session resource update response message to the intermediate session management network element, where the PDU session resource update response message indicates that a PDU session resource is successfully updated.

Correspondingly, the intermediate session management network element receives the PDU session resource update response message from the target access network device.

After step 616, a forwarding path of the uplink service packet is:
the terminal device to the target access network device to the target offloading user plane network element to the source offloading user plane network element to the source user plane network element; or
the terminal device to the target access network device to the target offloading user plane network element to the remote user plane network element.

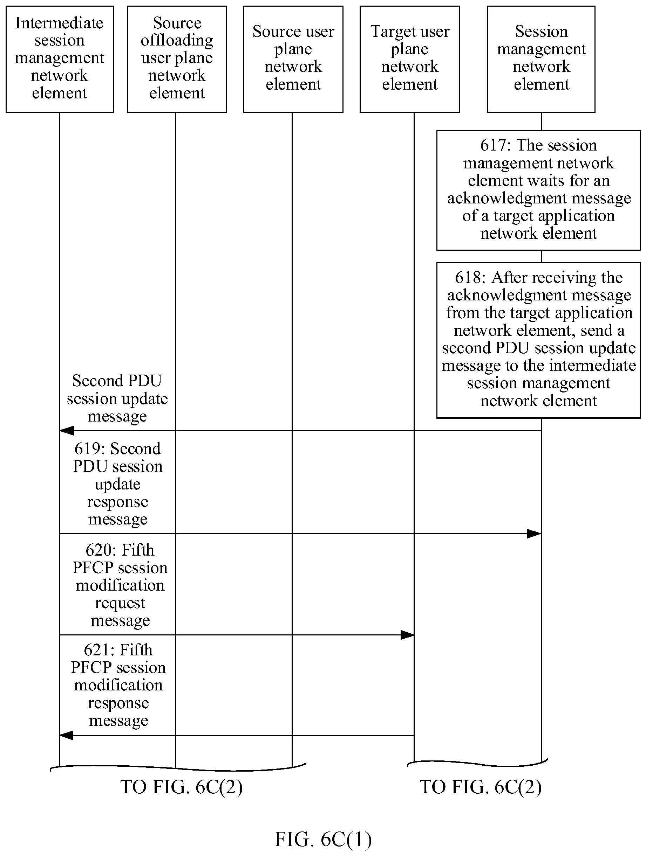

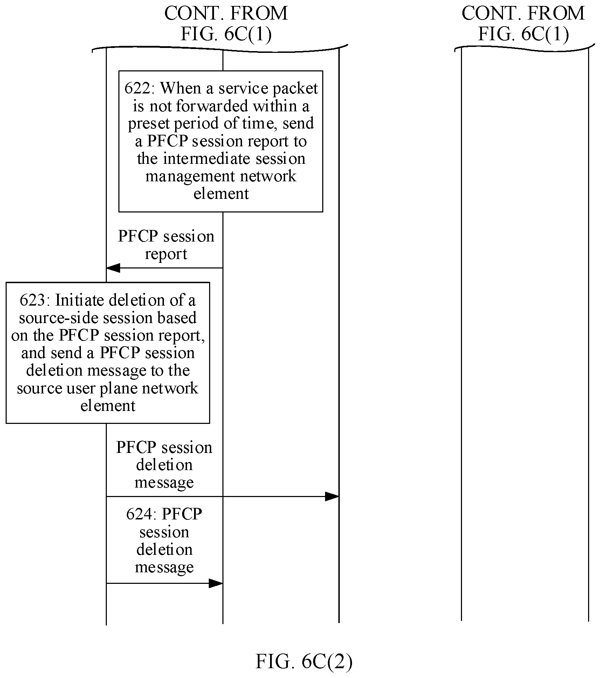

Optionally, after step 616, this solution may further include but is not limited to the following step 617 to step 624. Specifically, FIG. 6C(1) and FIG. 6C(2) are a schematic flowchart of another message transmission method according to this embodiment of this application.

617: The session management network element waits for an acknowledgment message of the target application network element.

618: After receiving the acknowledgment message from the target application network element, the session management network element sends a second PDU session update request (Nsmf_PDUSession_Update request) message to the intermediate session management network element, where the second PDU session update message includes fourth indication information.

Correspondingly, the target application network element sends the acknowledgment message to the session management network element.

For the fourth indication information, refer to related descriptions of step 404 in FIG. 4. Details are not described herein again.

For example, the fourth indication information may be implemented in any one of the following cases:
In a case 2.1, the session management network element may indicate, by using one bit or through enumeration in the message, the target user plane network element to forward the uplink packet. For example, the indication is implemented by using one bit in a new parameter or an original parameter. If the bit is set to 1, the bit indicates the target user plane network element to forward the uplink packet. If the bit is set to 0, the bit indicates that the target user plane network element does not need to forward the uplink packet, the bit indicates to buffer the uplink packet, or the bit has no special meaning. Alternatively, if the bit is set to 0, the bit indicates the target user plane network element to forward the uplink packet. If the bit is set to 1, the bit indicates that the target user plane network element does not need to forward the uplink packet, the bit indicates to buffer the uplink packet, or the bit has no special meaning. Alternatively, the indication is implemented through enumeration in a new parameter or an original parameter, and a specific enumerated value indicates the target user plane network element to forward the uplink packet.

Alternatively, in a case 2.2, the session management network element may include fifth N4 information in the message, where the fifth N4 information indicates to modify a PFCP session between the intermediate session management network element and the target user plane network element. The target user plane network element may be indicated by using one bit or through enumeration in the fifth N4 information to forward the uplink packet. For a specific indication manner, refer to the indication manner in the foregoing case 2.1. Details are not described herein again.

Alternatively, in a case 2.3, the session management network element may include an uplink forwarding action rule in fifth N4 information, and set a forwarding bit in a forwarding action information element included in the uplink forwarding action rule to 1, to indicate to forward the uplink packet. The uplink forwarding action rule herein is the second uplink forwarding action rule in the second N4 information in step 608.

619: The intermediate session management network element returns a second PDU session update response (Nsmf_PDUSession_Update response) message to the session management network element, where the second PDU session update response message indicates that a second PDU session is successfully updated.

Correspondingly, the session management network element receives the second PDU session update response message from the intermediate session management network element.

620: The intermediate session management network element sends a fifth PFCP session modification request message to the target user plane network element, where the fifth PFCP session modification request message notifies the target user plane network element to modify a PFCP session for the terminal device.

Correspondingly, the target user plane network element receives the fifth PFCP session modification request message from the intermediate session management network element.

The fifth PFCP session modification request message in step 620 includes fifth indication information. For the fifth indication information, refer to related descriptions of step 405 in FIG. 4. Details are not described herein again. Specifically, for the case 2.2 and the case 2.3 in step 618, the intermediate session management network element forwards the fourth indication information to the target user plane network element. For the case 2.1 in step 618, the intermediate session management network element sets, to 1 based on the fourth indication information, a forwarding bit in the forwarding action information element included in the second uplink forwarding action rule to be sent to the target user plane network element, to indicate to forward the uplink packet. In other words, the intermediate session management network element sends the fifth indication information to the target user plane network element based on the fourth indication information.

621: The target user plane network element returns a fifth PFCP session modification response message, where the fifth PFCP session modification response message indicates that the PFCP session is successfully modified.

Correspondingly, the intermediate session management network element receives the fifth PFCP session modification response message from the target user plane network element.

After step 621, a forwarding path of the uplink service packet is:
the terminal device to the target access network device to the target offloading user plane network element to the target user plane network element; or
the terminal device to the target access network device to the target offloading user plane network element to the remote user plane network element.

622: When the source offloading user plane network element does not forward a service packet within a preset period of time, the source offloading user plane network element sends a PFCP session report to the intermediate session management network element, where the PFCP session report notifies the intermediate session management network element of this event, in other words, the PFCP session report notifies that the source offloading user plane network element does not forward the service packet within the preset period of time.

Correspondingly, the intermediate session management network element receives the PFCP session report from the source offloading user plane network element.

623: The intermediate session management network element initiates deletion of a source-side session based on the PFCP session report, and sends a PFCP session deletion message to the source user plane network element.

624: The intermediate session management network element sends a PFCP session deletion message to the source offloading user plane network element.

It can be learned that, in the foregoing technical solution, the target user plane network element does not forward but buffers the uplink packet before the handover to the target application network element is completed, so that the uplink packet is not forwarded, thereby avoiding a loss of the uplink packet. In addition, the target user plane network element forwards the uplink packet only after the handover to the target application network element is completed, so that the uplink packet can be forwarded to the target application network element. This improves reliability of packet transmission. In addition, this avoids a loss of the uplink and downlink packets of the terminal device, and improves continuity and the reliability of the packet transmission.

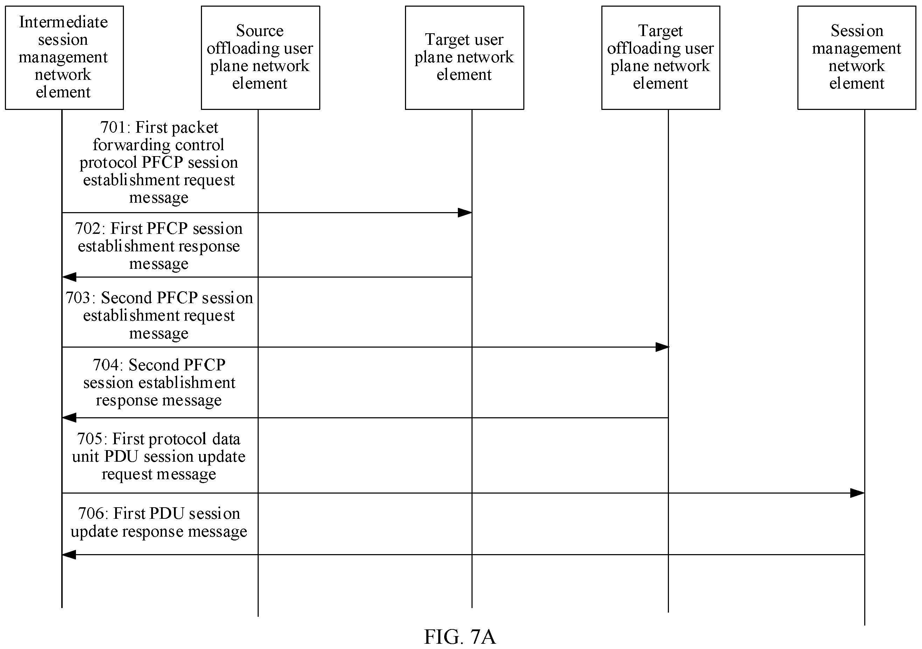

The following describes this solution by using an example in which a session management network element determines to establish a forwarding tunnel for a service packet between the session management network element and a user plane network element (where the user plane network element may be a target user plane network element and/or a target offloading user plane network element). Specifically, FIG. 7A is a schematic flowchart of another message transmission method according to an embodiment of this application. As shown in FIG. 7A, the method includes but is not limited to the following steps.

701: An intermediate session management network element sends a first PFCP session establishment request message to the target user plane network element, where the first PFCP session establishment request message notifies the target user plane network element to establish a PFCP session for a terminal device.

Correspondingly, the target user plane network element receives the first PFCP session establishment request message from the intermediate session management network element.

The first PFCP session establishment request message in step 701 includes a first uplink packet detection rule, a first uplink forwarding action rule, a first downlink packet detection rule, and a first downlink forwarding action rule. The first uplink packet detection rule and the first uplink forwarding action rule are used by the target user plane network element to establish uplink forwarding channels for all service packets, and the first downlink packet detection rule and the first downlink forwarding action rule are used by the target user plane network element to establish downlink forwarding channels for all the service packets. It may be understood that an uplink service packet is received by the target user plane network element and then forwarded to a data network, and a downlink service packet is received by the target user plane network element and then forwarded to the target offloading user plane network element.

702: The target user plane network element returns a first PFCP session establishment response message to the intermediate session management network element, where the first PFCP session establishment response message indicates that the PFCP session is successfully established.

Correspondingly, the intermediate session management network element receives the first PFCP session establishment response message from the target user plane network element.

The PFCP session establishment response message in step 702 includes service packet forwarding information allocated by the target user plane network element, the service packet forwarding information includes a tunnel endpoint identifier of the target user plane network element and an Internet protocol address of the target user plane network element, and the tunnel endpoint identifier of the target user plane network element and the Internet protocol address of the target user plane network element are used by the intermediate session management network element to indicate a target access network device to establish a forwarding channel for the uplink service packet.

703: The intermediate session management network element sends a second PFCP session establishment request message to the target offloading user plane network element, where the second PFCP session establishment request message notifies the target offloading user plane network element to establish a PFCP session for the terminal device.

Correspondingly, the target offloading user plane network element receives the second PFCP session establishment request message from the intermediate session management network element.

The second PFCP session establishment request message in step 703 includes a first uplink packet detection rule, a first uplink forwarding action rule, a first downlink packet detection rule, and a first downlink forwarding action rule. The first uplink packet detection rule and the first uplink forwarding action rule are used by the target offloading user plane network element to establish uplink forwarding channels for all the service packets, and the first downlink packet detection rule and the first downlink forwarding action rule are used by the target offloading user plane network element to establish downlink forwarding channels for all the service packets. It may be understood that the uplink service packet is sent by the target access network device to the target offloading user plane network element and then forwarded by the target offloading user plane network element to a remote user plane network element, and the downlink service packet is sent by the remote user plane network element to the target offloading user plane network element and then forwarded by the target offloading user plane network element to the target access network device.

704: The target offloading user plane network element returns a second PFCP session establishment response message to the intermediate session management network element, where the second PFCP session establishment response message indicates that the PFCP session is successfully established.

Correspondingly, the intermediate session management network element receives the second PFCP session establishment response message from the target offloading user plane network element.

The second PFCP session establishment response message in step 704 includes first service packet forwarding information, second service packet forwarding information, and third service packet forwarding information that are allocated by the target offloading user plane network element. The first service packet forwarding information, the second service packet forwarding information, and the third service packet forwarding information each include a tunnel endpoint identifier of the target offloading user plane network element and an Internet protocol address of the target offloading user plane network element. The first service packet forwarding information is used by the intermediate session management network element to indicate the target access network device to establish a forwarding channel for the uplink service packet, the second service packet forwarding information is used by the intermediate session management network element to indicate the target user plane network element/the remote user plane network element to establish a forwarding channel for the downlink service packet, and the third service packet forwarding information is used by the intermediate session management network element to indicate a source offloading user plane network element to establish a forwarding channel that is for the downlink service packet and that is for ensuring continuity of the downlink service packet.

705: The intermediate session management network element sends a first PDU session update request (Nsmf_PDUSession_Update request) to the session management network element, where the first PDU session update request message includes first indication information and the second service packet forwarding information allocated by the target offloading user plane network element in step 704.

Correspondingly, the session management network element receives the first PDU session update request from the intermediate session management network element.

For the first indication information, refer to related descriptions of step 401 in FIG. 4. Details are not described herein again.

In this embodiment shown in FIG. 7A, the session management network element determines and establishes the forwarding tunnel for the uplink or downlink service packet, to ensure continuity of the uplink or downlink service packet in a procedure in which both an offloading user plane network element and the user plane network element change. It may be understood that the session management network element may establish a forwarding tunnel for the uplink or downlink service packet for each session, or establish a forwarding tunnel for the uplink or downlink service packet for a specific session.

706: The session management network element returns a first PDU session update response (Nsmf_PDUSession_Updateresponse) message to the intermediate session management network element, where the first PDU session update response message includes first N4 information, second N4 information, third N4 information, and fourth N4 information.

Correspondingly, the intermediate session management network element receives the first PDU session update response message from the session management network element.

The first N4 information indicates the intermediate session management network element to establish a PFCP session between the intermediate session management network element and the target offloading user plane network element, and includes a second uplink packet detection rule, a second uplink forwarding action rule, a second downlink packet detection rule, and a second downlink forwarding action rule. The second uplink packet detection rule and the second uplink forwarding action rule indicate the target offloading user plane network element to establish an uplink forwarding channel for a service packet offloaded from the target user plane network element, and the second downlink packet detection rule and the second downlink forwarding action rule indicate the target offloading user plane network element to establish a downlink forwarding channel for the service packet offloaded from the target user plane network element. The uplink service packet is sent by the target access network device to the target offloading user plane network element and then forwarded by the target offloading user plane network element to the target user plane network element, and the downlink service packet is sent by the target user plane network element to the target offloading user plane network element and then forwarded by the target offloading user plane network element to the target access network device. For example, if a service packet corresponding to a service whose application identifier is 100 is offloaded from the target user plane network element, the first N4 information includes an uplink packet detection rule and an uplink forwarding action rule that correspond to the service, or includes a downlink packet detection rule and a downlink forwarding action rule that correspond to the service.

In addition, the first N4 information further includes a third uplink packet detection rule, a third uplink forwarding action rule, a third downlink packet detection rule, and a third downlink forwarding action rule. The third uplink packet detection rule and the third uplink forwarding action rule are used by the target offloading user plane network element to establish an uplink forwarding channel for a service packet offloaded from a source user plane network element, and the third downlink packet detection rule and the third downlink forwarding action rule are used by the target offloading user plane network element to establish downlink forwarding channels for all the service packets, to ensure the continuity of the uplink or downlink service packet in the procedure in which both the offloading user plane network element and the user plane network element change. The uplink service packet is sent by the target access network device to the target offloading user plane network element and then forwarded by the target offloading user plane network element to the source offloading user plane network element. The downlink service packet is sent by the source offloading user plane network element to the target offloading user plane network element and then forwarded by the target offloading user plane network element to the target access network device. It may be understood that the third uplink packet detection rule included in the first N4 information is the same as the second packet detection rule received by the intermediate session management network element from the session management network element in step 405 in FIG. 4, and the third uplink forwarding action rule included in the first N4 information is the same as the second forwarding action rule received by the intermediate session management network element from the session management network element in step 405 in FIG. 4. The third downlink packet detection rule included in the first N4 information is the same as the fourth packet detection rule received by the intermediate session management network element from the session management network element in step 501 in FIG. 5, and the third downlink forwarding action rule included in the first N4 information is the same as the fourth forwarding action rule received by the intermediate session management network element from the session management network element in step 501 in FIG. 5. The second packet detection rule is a corresponding rule for the target offloading user plane network element to detect a packet, and the second forwarding action rule is a corresponding rule for the target offloading user plane network element to forward the packet. The fourth packet detection rule is a corresponding rule for the target offloading user plane network element to detect a packet, and the fourth forwarding action rule is a corresponding rule for the target offloading user plane network element to forward the packet.

The first N4 information further includes a forwarding tunnel rule indication indicating that the third uplink packet detection rule and the third uplink forwarding action rule are rules corresponding to a packet forwarding tunnel that needs to be established to ensure the continuity of the uplink service packet in the procedure in which both the offloading user plane network element and the user plane network element change, and that the third downlink packet detection rule and the third downlink forwarding action rule are rules corresponding to a packet forwarding tunnel that needs to be established to ensure the continuity of the downlink service packet in the procedure in which both the offloading user plane network element and the user plane network element change. It may be understood that the forwarding tunnel rule indication included in the first N4 information includes the sixth indication information and the seventh indication information described above.

For example, the forwarding tunnel rule indication included in the first N4 information may be implemented in any one of the following cases:
In a case 3.1, the session management network element may indicate a forwarding tunnel rule by using one bit or through enumeration in the first PDU session update response message. For example, the indication is implemented by using one bit in a new parameter or an original parameter. If the bit is set to 1, the bit indicates that the third uplink packet detection rule, the third uplink forwarding action rule, the third downlink packet detection rule, and the third downlink forwarding action rule are forwarding tunnel rules. If the bit is set to 0, the bit indicates that the third uplink packet detection rule, the third uplink forwarding action rule, the third downlink packet detection rule, and the third downlink forwarding action rule are not forwarding tunnel rules, or the bit has no special meaning. Alternatively, if the bit is set to 0, the bit indicates that the third uplink packet detection rule, the third uplink forwarding action rule, the third downlink packet detection rule, and the third downlink forwarding action rule are forwarding tunnel rules. If the bit is set to 1, the bit indicates that the third uplink packet detection rule, the third uplink forwarding action rule, the third downlink packet detection rule, and the third downlink forwarding action rule are not forwarding tunnel rules, or the bit has no special meaning. Alternatively, the indication is implemented through enumeration in a new parameter or an original parameter, and a specific enumerated value indicates the forwarding tunnel rule.

Alternatively, in a case 3.2, the session management network element may indicate a forwarding tunnel rule by using one bit or through enumeration in the first N4 information, the third uplink packet detection rule, the third uplink forwarding action rule, the third downlink packet detection rule, or the third downlink forwarding action rule. For a specific indication manner of the forwarding tunnel rule indication, refer to the case 3.1. Details are not described herein again.

The second N4 information indicates the intermediate session management network element to establish a PFCP session between the intermediate session management network element and the target user plane network element, and includes a second uplink packet detection rule, a second uplink forwarding action rule, a second downlink packet detection rule, and a second downlink forwarding action rule. The second uplink packet detection rule and the second uplink forwarding action rule indicate the target user plane network element to establish an uplink forwarding channel for the service packet offloaded from the target user plane network element, and the second downlink packet detection rule and the second downlink forwarding action rule indicate the target user plane network element to establish a downlink forwarding channel for the service packet offloaded from the target user plane network element. It may be understood that the uplink service packet is sent by the target offloading user plane network element to the target user plane network element and then forwarded by the target user plane network element to the data network, and the downlink service packet is sent by the data network to the target user plane network element and then forwarded by the target user plane network element to the target offloading user plane network element.

The third N4 information indicates the intermediate session management network element to delete a PFCP session between the intermediate session management network element and the source offloading user plane network element.

Alternatively, the third N4 information indicates to modify a PFCP session between the intermediate session management network element and the source offloading user plane network element, and includes a first uplink packet detection rule, a first uplink forwarding action rule, a first downlink packet detection rule, and a first downlink forwarding action rule. The first uplink packet detection rule and the first uplink forwarding action rule are used by the source offloading user plane network element to establish an uplink forwarding channel for the service packet offloaded from the source user plane network element, and the first downlink packet detection rule and the first downlink forwarding action rule are used by the source offloading user plane network element to establish downlink forwarding channels for all the service packets, to ensure the continuity of the uplink or downlink service packet in the procedure in which both the offloading user plane network element and the user plane network element change. It may be understood that the first uplink packet detection rule included in the third N4 information is the same as the second packet detection rule received by the intermediate session management network element from the session management network element in step 405 in FIG. 4, and the first uplink forwarding action rule included in the third N4 information is the same as the second forwarding action rule received by the intermediate session management network element from the session management network element in step 405 in FIG. 4. The first downlink packet detection rule included in the third N4 information is the same as the fourth packet detection rule received by the intermediate session management network element from the session management network element in step 501 in FIG. 5, and the first downlink forwarding action rule included in the third N4 information is the same as the fourth forwarding action rule received by the intermediate session management network element from the session management network element in step 501 in FIG. 5. The second packet detection rule is a corresponding rule for the source offloading user plane network element to detect a packet, and the second forwarding action rule is a corresponding rule for the source offloading user plane network element to forward the packet. The fourth packet detection rule is a corresponding rule for the source offloading user plane network element to detect a packet, and the fourth forwarding action rule is a corresponding rule for the source offloading user plane network element to forward the packet.

The third N4 information further includes a forwarding tunnel rule indication, where the forwarding tunnel rule indication indicates that the first uplink packet detection rule and the first uplink forwarding action rule are rules corresponding to a packet forwarding tunnel that needs to be established to ensure the continuity of the uplink service packet in the procedure in which both the offloading user plane network element and the user plane network element change, and that the first downlink packet detection rule and the first downlink forwarding action rule are rules corresponding to a packet forwarding tunnel that needs to be established to ensure the continuity of the downlink service packet in the procedure in which both the offloading user plane network element and the user plane network element change. For a specific indication manner of the forwarding tunnel rule indication, refer to the indication manner of the forwarding tunnel rule indication in the first N4 information. Details are not described herein again.

The fourth N4 information indicates the intermediate session management network element to delete a PFCP session between the intermediate session management network element and the source user plane network element.

In addition, a change of a local user plane network element may cause handover of an application network element. The session management network element may notify a source application network element of an access point identifier of the target user plane network element, so that the source application network element triggers the handover of the application network element based on the access point identifier. If the application network element indicates, when subscribing to an event of the session management network element, that an acknowledgment of the application network element is needed, an uplink packet can be sent to a new application network element only after the handover of the application network element is performed and a positive acknowledgment is sent to the session management network element. In other words, a target application network element may send a positive acknowledgment to the session management network element when handover from the source application network element to the target application network element is completed. In this case, the target user plane network element can send the uplink packet to the target application network element. Therefore, to implement this process, the first PDU session update response message in step 706 further includes second indication information. For the second indication information, refer to related descriptions of step 402 in FIG. 4. Details are not described herein again.

For example, the second indication information may be implemented in any one of the following cases:
In a case 4.1, the session management network element may indicate, by using one bit or through enumeration in the first PDU session update response message in step 706, the target user plane network element to buffer the uplink packet. For example, the indication is implemented by using one bit in a new parameter or an original parameter. If the bit is set to 1, the bit indicates the target user plane network element to buffer the uplink packet. If the bit is set to 0, the bit indicates that the target user plane network element does not need to buffer the uplink packet, the bit indicates to forward the uplink packet, or the bit has no special meaning. Alternatively, if the bit is set to 0, the bit indicates the target user plane network element to buffer the uplink packet. If the bit is set to 1, the bit indicates that the target user plane network element does not need to buffer the uplink packet, the bit indicates to forward the uplink packet, or the bit has no special meaning. Alternatively, the indication is implemented through enumeration in a new parameter or an original parameter, and a specific enumerated value indicates the target user plane network element to buffer the uplink packet.

Alternatively, in a case 4.2, the session management network element may indicate, by using one bit or enumeration in the second N4 information, the target user plane network element to buffer the uplink packet. For a specific indication manner, refer to the indication manner in the foregoing case 1.1. Details are not described herein again.

Alternatively, in a case 4.3, the session management network element may set, to 1, a buffer bit in a forwarding action information element included in the second uplink forwarding action rule included in the second N4 information, to indicate the target user plane network element to buffer the uplink packet.

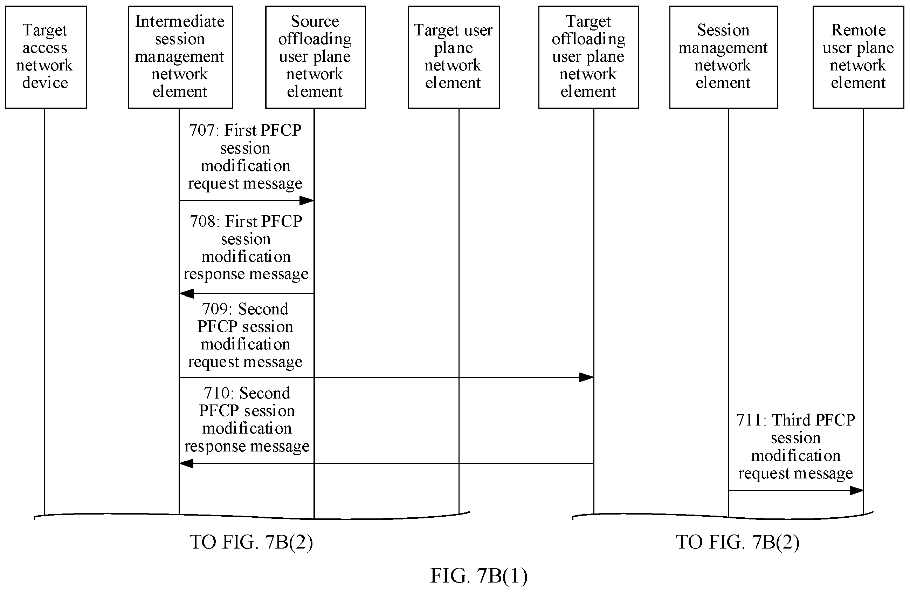

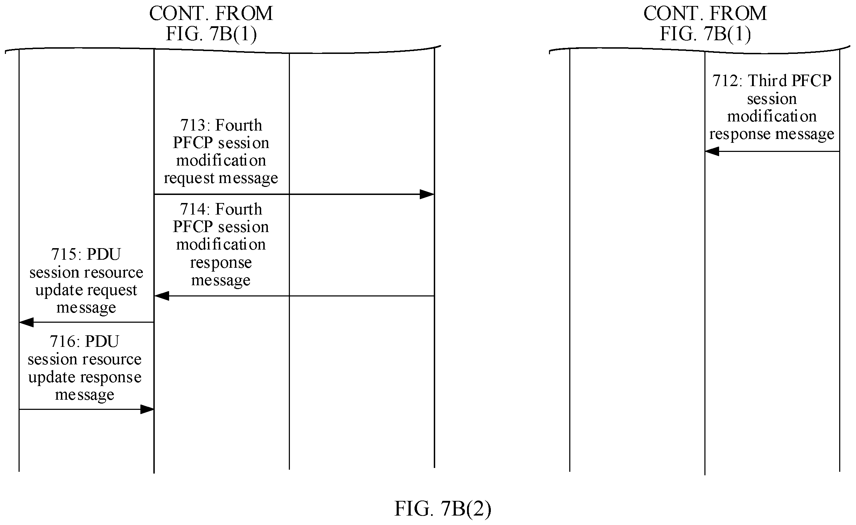

Optionally, after step 706, this solution may further include but is not limited to the following step 707 to step 716. Specifically, FIG. 7B(1) and FIG. 7B(2) are a schematic flowchart of another message transmission method according to this embodiment of this application.

707: The intermediate session management network element sends a first PFCP session modification request message to the source offloading user plane network element, where the first PFCP session modification request message notifies the source offloading user plane network element to modify a PFCP session for the terminal device.

Correspondingly, the source offloading user plane network element receives the first PFCP session modification request message from the intermediate session management network element.

The first PFCP session modification request message in step 707 includes a first uplink packet detection rule, a first uplink forwarding action rule, a first downlink packet detection rule, and a first downlink forwarding action rule. The first uplink packet detection rule and the first uplink forwarding action rule are used by the source offloading user plane network element to establish an uplink forwarding channel for the service packet offloaded from the source user plane network element, and the first downlink packet detection rule and the first downlink forwarding action rule are used by the source offloading user plane network element to establish downlink forwarding channels for all the service packets, to ensure the continuity of the uplink or downlink service packet in the procedure in which both the offloading user plane network element and the user plane network element change. It may be understood that the uplink service packet is sent by the target offloading user plane network element to the source offloading user plane network element and then forwarded by the source offloading user plane network element to the source user plane network element. The downlink service packet is sent by the remote user plane network element or the source user plane network element to the source offloading user plane network element and then forwarded by the source offloading user plane network element to the target offloading user plane network element.

In an implementation, the first uplink packet detection rule, the first uplink forwarding action rule, the first downlink packet detection rule, and the first downlink forwarding action rule in step 707 are a first uplink packet detection rule, a first uplink forwarding action rule, a first downlink packet detection rule, and a first downlink forwarding action rule that are determined by the intermediate session management network element based on the forwarding tunnel rule indication in the third N4 information in step 706. To ensure the continuity of the uplink or downlink service packet in the procedure in which both the offloading user plane function and the user plane function change, after the packet forwarding tunnel is established, the first uplink packet detection rule in step 707 needs to be obtained by the intermediate session management network element by adding a tunnel endpoint identifier of the source offloading user plane network element and an Internet protocol address of the source offloading user plane network element to the first uplink packet detection rule in the third N4 information in step 706, the first uplink forwarding action rule in step 707 needs to be obtained by the intermediate session management network element by adding a tunnel endpoint identifier of the source user plane network element and an Internet protocol address of the source user plane network element to the first uplink forwarding action rule in the third N4 information in step 706 based on the forwarding tunnel rule indication in the third N4 information in step 706, the first downlink packet detection rule in step 707 needs to be obtained by the intermediate session management network element by adding the tunnel endpoint identifier of the source offloading user plane network element and the Internet protocol address of the source offloading user plane network element to the first downlink packet detection rule in the third N4 information in step 706 based on the forwarding tunnel rule indication in the third N4 information in step 706, and the first downlink forwarding action rule in step 707 needs to be obtained by the intermediate session management network element by adding the tunnel endpoint identifier of the target offloading user plane network element and the Internet protocol address of the target offloading user plane network element to the first downlink forwarding action rule in the third N4 information in step 706 based on the forwarding tunnel rule indication in the third N4 information in step 706.

In another implementation, if the third N4 information indicates to delete the PFCP session between the intermediate session management network element and the source offloading user plane network element, the intermediate session management network element determines, based on the forwarding tunnel rule indication in the first N4 information in step 706, that a packet forwarding tunnel needs to be established, to ensure the continuity of the uplink or downlink service packet in the procedure in which both the offloading user plane function and the user plane function change. In this case, the first uplink packet detection rule, the first uplink forwarding action rule, the first downlink packet detection rule, and the first downlink forwarding action rule in step 707 are generated by the intermediate session management network element.

It may be understood that the first uplink packet detection rule in step 707 is the same as the first packet detection rule sent by the intermediate session management network element to the source offloading user plane network element in step 405 in FIG. 4, and the first packet detection rule is obtained by the intermediate session management network element by adding the tunnel endpoint identifier of the source offloading user plane network element and the Internet protocol address of the source offloading user plane network element to the second packet detection rule based on the sixth indication information. The first uplink forwarding action rule in step 707 is the same as the first forwarding action rule sent by the intermediate session management network element to the source offloading user plane network element in step 405 in FIG. 4, and the first forwarding action rule is obtained by the intermediate session management network element by adding the tunnel endpoint identifier of the source user plane network element and the Internet protocol address of the source user plane network element to the second forwarding action rule based on the sixth indication information. The first downlink packet detection rule in step 707 is the same as the third packet detection rule sent by the intermediate session management network element to the source offloading user plane network element in step 501 in FIG. 5, and the third packet detection rule is obtained by the intermediate session management network element by adding the tunnel endpoint identifier of the source offloading user plane network element and the Internet protocol address of the source offloading user plane network element to the fourth packet detection rule based on the seventh indication information. The first downlink forwarding action rule in step 707 is the same as the third forwarding action rule sent by the intermediate session management network element to the source offloading user plane network element in step 405 in FIG. 4, and the third forwarding action rule is obtained by the intermediate session management network element by adding the tunnel endpoint identifier of the target offloading user plane network element and the Internet protocol address of the target offloading user plane network element to the fourth forwarding action rule based on the seventh indication information.

708: The source offloading user plane network element returns a first PFCP session modification response message to the intermediate session management network element, where the first PFCP session modification response message indicates that the PFCP session is successfully modified.

Correspondingly, the intermediate session management network element receives the first PFCP session modification response message from the source offloading user plane network element.

The first PFCP session modification response message in step 708 includes service packet forwarding information allocated by the source offloading user plane network element, and the service packet forwarding information includes the tunnel endpoint identifier of the source offloading user plane network element and the Internet protocol address of the source offloading user plane network element. The service packet forwarding information is used by the target offloading user plane network element to establish a forwarding channel that is for the uplink service packet and that is for ensuring the continuity of the uplink service packet.

709: The intermediate session management network element sends a second PFCP session modification request message to the target offloading user plane network element, where the second PFCP session modification request message notifies the target offloading user plane network element to modify a PFCP session for the terminal device.

Correspondingly, the target offloading user plane network element receives the second PFCP session modification request message from the intermediate session management network element.

The second PFCP session modification request message in step 709 includes the second uplink packet detection rule, the second uplink forwarding action rule, the second downlink packet detection rule, the second downlink forwarding action rule, the third uplink packet detection rule, the third uplink forwarding action rule, the third downlink packet detection rule, and the third downlink forwarding action rule that are included in the first N4 information in step 706.

It should be noted that the intermediate session management network element determines the third uplink packet detection rule, the third uplink forwarding action rule, the third downlink packet detection rule, and the third downlink forwarding action rule based on the forwarding tunnel rule indication associated with the third uplink packet detection rule, the third uplink forwarding action rule, the third downlink packet detection rule, and the third downlink forwarding action rule in the first N4 information in step 708. To ensure the continuity of the uplink or downlink service packet in the procedure in which both the offloading user plane function and the user plane function change, after a packet forwarding tunnel is established, the third uplink packet detection rule in step 709 needs to be obtained by the intermediate session management network element by adding the tunnel endpoint identifier of the target offloading user plane network element and the Internet protocol address of the target offloading user plane network element to the third uplink packet detection rule in the first N4 information in step 706 based on the forwarding tunnel rule indication in the first N4 information in step 706, the third uplink forwarding action rule in step 709 needs to be obtained by the intermediate session management network element by adding the tunnel endpoint identifier of the source offloading user plane network element and the Internet protocol address of the source offloading user plane network element to the third uplink forwarding action rule in the first N4 information in step 706 based on the forwarding tunnel rule indication in the first N4 information in step 706, the first downlink packet detection rule in step 709 needs to be obtained by the intermediate session management network element by adding the tunnel endpoint identifier of the target offloading user plane network element and the Internet protocol address of the target offloading user plane network element to the first downlink packet detection rule in the first N4 information in step 706 based on the forwarding tunnel rule indication in the first N4 information in step 706, and the first downlink forwarding action rule in step 709 needs to be obtained by the intermediate session management network element by adding the tunnel endpoint identifier of the target access network device and the Internet protocol address of the target access network device to the first downlink forwarding action rule in the first N4 information in step 706 based on the forwarding tunnel rule indication in the first N4 information in step 706.

It may be understood that the third uplink packet detection rule in step 709 is the same as the first packet detection rule sent by the intermediate session management network element to the target offloading user plane network element in step 405 in FIG. 4, and the first packet detection rule is obtained by the intermediate session management network element by adding the tunnel endpoint identifier of the target offloading user plane network element and the Internet protocol address of the target offloading user plane network element to the second packet detection rule based on the sixth indication information. The third uplink forwarding action rule in step 709 is the same as the first forwarding action rule sent by the intermediate session management network element to the target offloading user plane network element in step 405 in FIG. 4, and the first forwarding action rule is obtained by the intermediate session management network element by adding the tunnel endpoint identifier of the source offloading user plane network element and the Internet protocol address of the source offloading user plane network element to the second forwarding action rule based on the sixth indication information. The third downlink packet detection rule in step 707 is the same as the third packet detection rule sent by the intermediate session management network element to the target offloading user plane network element in step 501 in FIG. 5, and the third packet detection rule is obtained by the intermediate session management network element by adding the tunnel endpoint identifier of the target offloading user plane network element and the Internet protocol address of the target offloading user plane network element to the fourth packet detection rule based on the seventh indication information. The third downlink forwarding action rule in step 707 is the same as the third forwarding action rule sent by the intermediate session management network element to the target offloading user plane network element in step 405 in FIG. 4, and the third forwarding action rule is obtained by the intermediate session management network element by adding the tunnel endpoint identifier of the target access network device and the Internet protocol address of the target access network device to the fourth forwarding action rule based on the seventh indication information.

For example, the following describes a function of the forwarding tunnel rule indication with reference to Table 3. Table 3 enumerates a correspondence among a packet detection rule, a forwarding action rule, and a forwarding tunnel rule indication.

**Table 3: Correspondence among the packet detection rule, the forwarding action rule, and the forwarding tunnel rule indication**

| PDR identifier | Service packet forwarding information | Source interface | Source interface type | FAR identifier | Service packet forwarding information | Target interface | Target interface type | Forwarding tunnel rule indication |
|---|---|---|---|---|---|---|---|---|
| DL PDR 258 (third downlink packet detection rule) | Fourth service packet forwarding information allocated by the target offloading user plane network element | Core | N9 | DLFAR 258 (third downlink forwarding action rule) | First service packet forwarding information allocated by the target access network device | Access | N3 | Y |
| UL PDR 259 (third uplink packet detection rule) | Third service packet forwarding information allocated by the target offloading user plane network element | Access | N3 | ULFAR 259 (third uplink forwarding action rule) | Service packet forwarding information allocated by the source offloading user plane network element | Core | N9 | Y |
| DL PDR 256 (second downlink packet detection rule) | Second service packet forwarding information allocated by the target offloading user plane network element | Core | N9 | DLFAR 256 (second downlink forwarding action rule) | Second service packet forwarding information allocated by the target access network device | Access | N3 | N |
| UL PDR 257 (second uplink packet detection rule) | First service packet forwarding information allocated by the target offloading user plane network element | Access | N3 | ULFAR 257 (second uplink forwarding action rule) | Service packet forwarding information allocated by the target user plane network element | Core | N9 | N |

As enumerated in Table 3, the service packet forwarding information in the PDR and the service packet forwarding information in the FAR need to be included by the intermediate session management network element in the second uplink packet detection rule, the second uplink forwarding action rule, the second downlink packet detection rule, the second downlink forwarding action rule, the third uplink packet detection rule, the third uplink forwarding action rule, the third downlink forwarding action rule, and the third downlink forwarding action rule that are to be sent to the source offloading user plane network element/target offloading user plane network element. Service packet forwarding information allocated by a network element, for example, the target offloading user plane network element, to a packet forwarding tunnel established to ensure the continuity of the uplink or downlink service packet in the procedure in which both the offloading user plane network element and the user plane network element change is different from service packet forwarding information allocated to normal service packet forwarding. The intermediate session management network element needs to distinguish between rules in the foregoing two cases based on the forwarding tunnel rule indication, and add the corresponding service packet forwarding information. As enumerated in Table 3, there is a correspondence among DL PDR 258 (an identifier of the third downlink packet detection rule), the fourth service packet forwarding information allocated by the target offloading user plane network element, Core (a source interface), N9 (a source interface type), DL FAR 258 (an identifier of the third downlink forwarding action rule), the first service packet forwarding information allocated by the target access network device, Access (a target interface), N3 (a target interface type), and a forwarding tunnel rule indication (Y). Because the forwarding tunnel rule indication is Y, it indicates that the third downlink packet detection rule, the third downlink forwarding action rule, and the like are service packet forwarding information allocated to the packet forwarding tunnel established to ensure the continuity of the downlink service packet. Similarly, there is a correspondence among UL PDR 259 (an identifier of the third uplink packet detection rule), the third service packet forwarding information allocated by the target offloading user plane network element, Access (a source interface), N3 (a source interface type), UL FAR 259 (an identifier of the third uplink forwarding action rule), the service packet forwarding information allocated by the source offloading user plane network element, Core (a target interface), N9 (a target interface type), and the forwarding tunnel rule indication (Y). Because the forwarding tunnel rule indication is Y, it indicates that the third uplink packet detection rule, the third uplink forwarding action rule, and the like are service packet forwarding information allocated to the packet forwarding tunnel established to ensure the continuity of the uplink service packet.

In addition, there is a correspondence among DL PDR 256 (an identifier of the second downlink packet detection rule), the second service packet forwarding information allocated by the target offloading user plane network element, Core (a source interface), N9 (a source interface type), DL FAR 256 (an identifier of the second downlink forwarding action rule), the second service packet forwarding information allocated by the target access network device, Access (a target interface), N3 (a target interface type), and a forwarding tunnel rule indication (N). Because the forwarding tunnel rule indication is N, it indicates that the second downlink packet detection rule, the second downlink forwarding action rule, and the like are service packet forwarding information allocated to the normal service packet forwarding. Similarly, there is a correspondence among UL PDR 257 (an identifier of the second uplink packet detection rule), the first service packet forwarding information allocated by the target offloading user plane network element, Access (a source interface), N3 (a source interface type), UL FAR 257 (an identifier of the second uplink forwarding action rule), the service packet forwarding information allocated by the target user plane network element, Core (a target interface), N9 (a target interface type), and the forwarding tunnel rule indication (N). Because the forwarding tunnel rule indication is N, it indicates that the second uplink packet detection rule, the second uplink forwarding action rule, and the like are service packet forwarding information allocated to the normal service packet forwarding.

710: The target offloading user plane network element returns a second PFCP session modification response message to the intermediate session management network element, where the second PFCP session modification response message indicates that the PFCP session is successfully modified.

Correspondingly, the intermediate session management network element receives the second PFCP session modification response message from the target offloading user plane network element.

The second PFCP session modification response message in step 710 includes third service packet forwarding information and fourth service packet forwarding information that are allocated by the target offloading user plane network element. The third service packet forwarding information and the fourth service packet forwarding information each include the tunnel endpoint identifier of the target offloading user plane network element and the Internet protocol address of the target offloading user plane network element. It may be understood that the third service packet forwarding information is used by a source access network device to establish a forwarding channel for the uplink service packet to ensure the continuity of the uplink service packet, and the fourth service packet forwarding information is used by the source offloading user plane network element to establish a forwarding channel for the downlink service packet to ensure the continuity of the downlink service packet.

After step 710, a forwarding path of the downlink service packet is:
the remote user plane network element to the source offloading user plane network element to the target offloading user plane network element to the target access network device to the terminal device; or
the source user plane network element to the source offloading user plane network element to the target offloading user plane network element to the target access network device to the terminal device.

711: The session management network element sends a third PFCP session modification request message to the remote user plane network element, where the third PFCP session modification request message notifies the remote user plane network element to modify a PFCP session for the terminal device.

Correspondingly, the remote user plane network element receives the third PFCP session modification request message from the session management network element.

The third PFCP session modification request message in step 711 includes the second service packet forwarding information allocated by the target offloading user plane network element in step 705, where the second service packet forwarding information is used by the remote user plane network element to send, based on the second service packet forwarding information allocated by the target offloading user plane network element, the downlink service packet to the target offloading user plane network element after receiving the downlink service packet from the data network.

712: The remote user plane network element returns a third PFCP session modification response message to the session management network element, where the third PFCP session modification response message indicates that the PFCP session is successfully modified.

Correspondingly, the session management network element receives the third PFCP session modification response message from the remote user plane network element.

After step 712, a forwarding path of the downlink service packet is:
the remote user plane network element to the target offloading user plane network element to the target access network device to the terminal device; or
the source user plane network element to the source offloading user plane network element to the target offloading user plane network element to the target access network device to the terminal device.

713: The intermediate session management network element sends a fourth PFCP session modification request message to the target user plane network element, where the fourth PFCP session modification request message notifies the target user plane network element to modify a PFCP session for the terminal device.

Correspondingly, the target user plane network element receives the fourth PFCP session modification request message from the intermediate session management network element.

The fourth PFCP session modification request message in step 713 includes the second uplink packet detection rule, the second uplink forwarding action rule, the second downlink packet detection rule, and the second downlink forwarding action rule that are included in the second N4 information in step 706.

The fourth PFCP session modification request message in step 713 further includes third indication information. For the third indication information, refer to related descriptions of step 403 in FIG. 4. Details are not described herein again.

For example, for the case 1.2 and the case 1.3 in step 706, the intermediate session management network element forwards the third indication information to the target user plane network element. For the case 1.1 in step 706, the intermediate session management network element sets, to 1 based on the received second indication information, a buffer bit in a forwarding action information element included in the second uplink forwarding action rule to be sent to the target user plane network element, to indicate the target user plane network element to buffer the uplink packet.

714: The target user plane network element returns a fourth PFCP session modification response message to the intermediate session management network element, where the fourth PFCP session modification response message indicates that the PFCP session is successfully modified.

Correspondingly, the intermediate session management network element receives the fourth PFCP session modification response message from the target user plane network element.

After step 714, a forwarding path of the downlink service packet is:
the remote user plane network element to the target offloading user plane network element to the target access network device to the terminal device; or
the target user plane network element to the target offloading user plane network element to the target access network device to the terminal device.

715: The intermediate session management network element sends a PDU session resource update request message to the target access network device, where the PDU session resource update request message includes the first service packet forwarding information in step 704.

Correspondingly, the target access network device receives the PDU session resource update request message from the intermediate session management network element.

716: The target access network device returns a PDU session resource update response message to the intermediate session management network element, where the PDU session resource update response message indicates that a PDU session resource is successfully updated.

Correspondingly, the intermediate session management network element receives the PDU session resource update response message from the target access network device.

After step 716, a forwarding path of the uplink service packet is:
the terminal device to the target access network device to the target offloading user plane network element to the source offloading user plane network element to the source user plane network element; or
the terminal device to the target access network device to the target offloading user plane network element to the remote user plane network element.

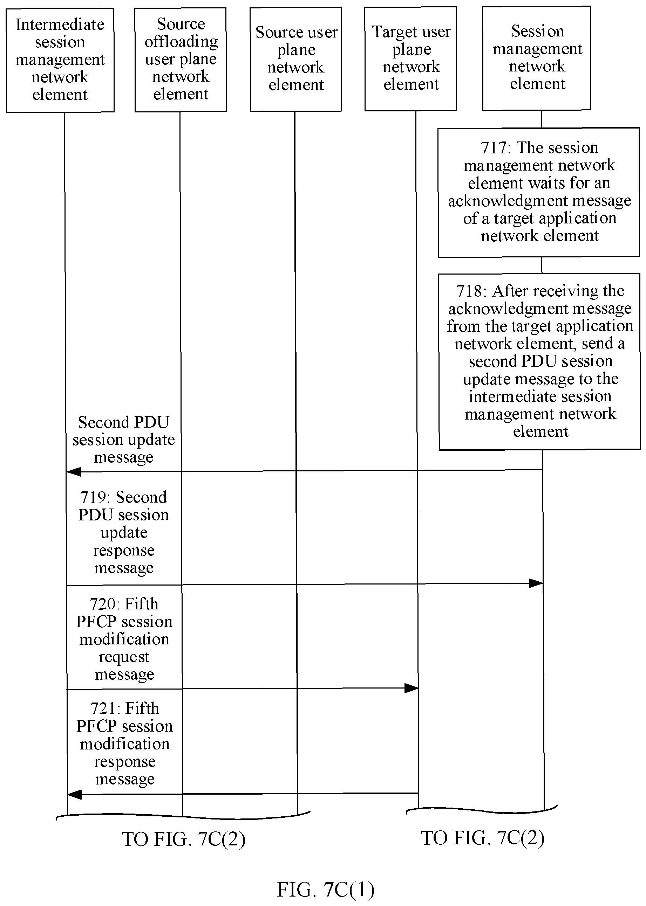

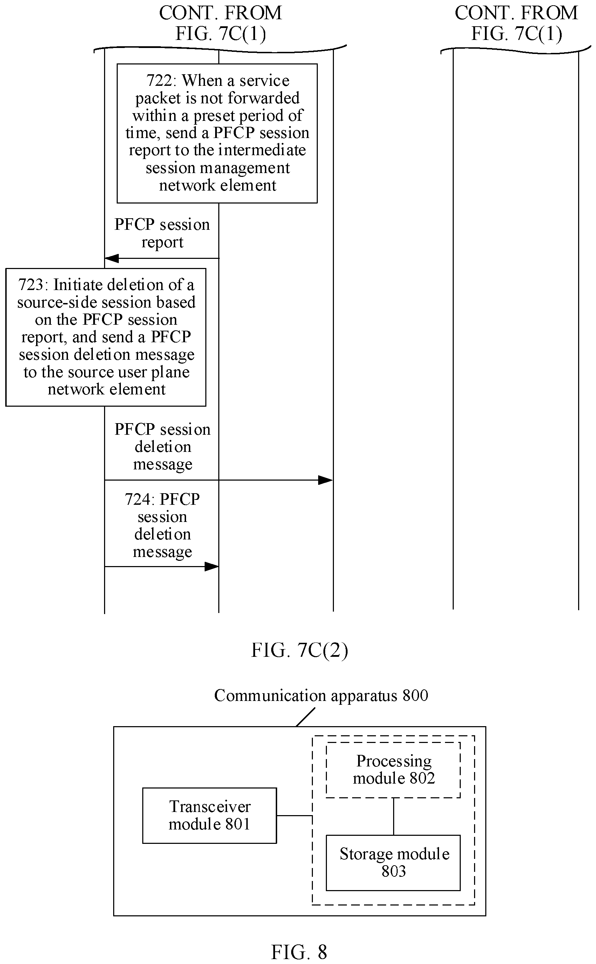

Optionally, after step 716, this solution may further include but is not limited to the following step 717 to step 724. Specifically, FIG. 7C(1) and FIG. 7C(2) are a schematic flowchart of another message transmission method according to this embodiment of this application.

717: The session management network element waits for an acknowledgment message of the target application network element.

718: After receiving the acknowledgment message from the target application network element, the session management network element sends a second PDU session update (Nsmf_PDUSession_Update request) message to the intermediate session management network element, where the second PDU session update message includes fourth indication information.

Step 718 is the same as step 618 in FIG. 6C(1), and details are not described herein again.

719: The intermediate session management network element returns a second PDU session update response (Nsmf_PDUSession _Update response) message to the session management network element, where the second PDU session update response message indicates that a second PDU session is successfully updated.

Correspondingly, the session management network element receives the second PDU session update response message from the intermediate session management network element.

720: The intermediate session management network element sends a fifth PFCP session modification request message to the target user plane network element, where the fifth PFCP session modification request message notifies the target user plane network element to modify a PFCP session for the terminal device.

Step 720 is the same as step 620 in FIG. 6C(1), and details are not described herein again.

721: The target user plane network element returns a fifth PFCP session modification response message, where the fifth PFCP session modification response message indicates that the PFCP session is successfully modified.

Correspondingly, the intermediate session management network element receives the fifth PFCP session modification response message from the target user plane network element.

After step 712, a forwarding path of the uplink service packet is:
the terminal device to the target access network device to the target offloading user plane network element to the target user plane network element; or
the terminal device to the target access network device to the target offloading user plane network element to the remote user plane network element.

722: When the source offloading user plane network element does not forward a service packet within a preset period of time, the source offloading user plane network element sends a PFCP session report to the intermediate session management network element, where the PFCP session report notifies the intermediate session management network element of this event, in other words, the PFCP session report notifies that the source offloading user plane network element does not forward the service packet within the preset period of time.

Correspondingly, the intermediate session management network element receives the PFCP session report from the source offloading user plane network element.

723: The intermediate session management network element initiates deletion of a source-side session based on the PFCP session report, and sends a PFCP session deletion message to the source user plane network element.

724: The intermediate session management network element sends a PFCP session deletion message to the source offloading user plane network element.

It can be learned that, in the foregoing technical solution, the target user plane network element does not forward but buffers the uplink packet before the handover to the target application network element is completed, so that the uplink packet is not forwarded, thereby avoiding a loss of the uplink packet. In addition, the target user plane network element forwards the uplink packet only after the handover to the target application network element is completed, so that the uplink packet can be forwarded to the target application network element. This improves reliability of packet transmission. In addition, this avoids a loss of the uplink or downlink packet of the terminal device, and improves continuity and the reliability of the packet transmission.

This application further provides a communication system. The communication system includes an intermediate session management network element, a session management network element, and a target user plane network element. The intermediate session management network element is configured to implement an action performed by the intermediate session management network element in FIG. 4. The session management network element is configured to implement an action performed by the session management network element in FIG. 4. The target user plane network element is configured to implement an action performed by the target user plane network element in FIG. 4. In addition, the communication system further includes a user plane network element. The user plane network element includes a source offloading user plane network element and/or a target offloading user plane network element. The intermediate session management network element is configured to implement an action performed by the intermediate session management network element in FIG. 6A to FIG. 7C(1) and FIG. 7C(2). The session management network element is configured to implement an action performed by the session management network element in FIG. 6A to FIG. 7C(1) and FIG. 7C(2). The target user plane network element is configured to implement an action performed by the target user plane network element in FIG. FIG. 6A to FIG. 7C(1) and FIG. 7C(2). The source offloading user plane network element is configured to implement an action performed by the source offloading user plane network element in FIG. 6A to FIG. 7C(1) and FIG. 7C(2). The target offloading user plane network element is configured to implement an action performed by the target offloading user plane network element in FIG. 6A to FIG. 7C(1) and FIG. 7C(2). In addition, the communication system further includes a target access network device, a source user plane network element, and a remote user plane network element. The target access network device is configured to implement an action performed by the target access network device in FIG. 6A to FIG. 7C(1) and FIG. 7C(2). The source user plane network element is configured to implement an action performed by the source user plane network element in FIG. 6A to FIG. 7C(1) and FIG. 7C(2). The remote user plane network element is configured to implement an action performed by the remote user plane network element in FIG. 6A to FIG. 7C(1) and FIG. 7C(2).

This application further provides another communication system. The communication system includes an intermediate session management network element and a user plane network element. The user plane network element includes a source offloading user plane network element and/or a target offloading user plane network element. The intermediate session management network element is configured to implement an action performed by the intermediate session management network element in FIG. 5 to FIG. 7C(1) and FIG. 7C(2). The source offloading user plane network element is configured to implement an action performed by the source offloading user plane network element in FIG. 5 to FIG. 7C(1) and FIG. 7C(2). The target offloading user plane network element is configured to implement an action performed by the target offloading user plane network element in FIG. 5 to FIG. 7C(1) and FIG. 7C(2). In addition, the communication system further includes a session management network element and a target user plane network element. The session management network element is configured to implement an action performed by the session management network element in FIG. 6A to FIG. 7C(1) and FIG. 7C(2). The target user plane network element is configured to implement an action performed by the target user plane network element in FIG. 6A to FIG. 7C(1) and FIG. 7C(2). In addition, the communication system further includes a target access network device, a source user plane network element, and a remote user plane network element. The target access network device is configured to implement an action performed by the target access network device in FIG. 6A to FIG. 7C(1) and FIG. 7C(2). The source user plane network element is configured to implement an action performed by the source user plane network element in FIG. 6A to FIG. 7C(1) and FIG. 7C(2). The remote user plane network element is configured to implement an action performed by the remote user plane network element in FIG. 6A to FIG. 7C(1) and FIG. 7C(2).

The foregoing mainly describes, from a perspective of interaction between the network elements, the solutions provided in this application. It may be understood that, to implement the foregoing functions, the foregoing network elements include corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the intermediate session management network element, the user plane network element (for example, the source offloading user plane network element, the target offloading user plane network element, and the target user plane network element), and the session management network element may be divided into function modules based on the foregoing method examples. For example, each function module may be obtained through division based on each function, or two or more functions may be integrated into one processing module. The integrated module may be implemented in a form of hardware, or may be implemented in a form of a software function module. It should be noted that, in embodiments of this application, division into modules is an example, and is merely a logical function division. During actual implementation, another division manner may be used.

When an integrated unit is used, FIG. 8 is a schematic diagram of a structure of a communication apparatus according to an embodiment of this application. The communication apparatus 800 may be used in the methods shown in FIG. 4 to FIG. 7C(1) and FIG. 7C(2). As shown in FIG. 8, the communication apparatus 800 includes a transceiver module 801. The transceiver module 801 may be a transceiver or a communication interface. The communication apparatus may be configured to implement a function of the intermediate session management network element, the user plane network element (for example, the source offloading user plane network element, the target offloading user plane network element, or the target user plane network element), or the session management network element in any one of the foregoing method embodiments, or configured to implement a function of a network element in any one of the foregoing method embodiments. The network element or the network function may be a network element in a hardware device, a software function running on dedicated hardware, or a virtualization function instantiated on a platform (for example, a cloud platform). Optionally, the communication apparatus 800 may further include a processing module 802 and a storage module 803. The processing module 802 may be one or more processors. The processing module 802 may be configured to support the communication apparatus 800 in performing a processing action in the foregoing method embodiments. The storage module 803 is configured to store program code and data of the communication apparatus 800.

In an example, when the communication apparatus is used as the intermediate session management network element or a chip used in the intermediate session management network element, and performs the step performed by the intermediate session management network element in the foregoing method embodiments, the transceiver module 801 is configured to support communication with the session management network element, the user plane network element (for example, the source offloading user plane network element, the target offloading user plane network element, or the target user plane network element), and the like. The transceiver module specifically performs a sending action and/or a receiving action performed by the intermediate session management network element in FIG. 4 to FIG. 7C(1) and FIG. 7C(2), for example, supports the intermediate session management network element in performing one or both of step 401 and step 403, and/or another process of the technology described in this specification.

In an example, when the communication apparatus is used as the session management network element or a chip used in the session management network element, and performs the step performed by the session management network element in the foregoing method embodiments, the transceiver module 801 is configured to support communication with the intermediate session management network element and the like. The transceiver module specifically performs a sending action and/or a receiving action performed by the session management network element in FIG. 4 to FIG. 7C(1) and FIG. 7C(2), for example, supports the session management network element in performing one or both of step 402 and step 404, and/or another process of the technology described in this specification.

In an example, when the communication apparatus is used as the source offloading user plane network element or a chip used in the source offloading user plane network element, and performs the step performed by the source offloading user plane network element in the foregoing method embodiments, the transceiver module 801 is configured to support communication with the intermediate session management network element and the like. The transceiver module specifically performs a sending action and/or a receiving action performed by the source offloading user plane network element in FIG. 4 to FIG. 7C(1) and FIG. 7C(2), for example, supports the source offloading user plane network element in performing one or both of step 604 and step 616, and/or another process of the technology described in this specification.

In an example, when the communication apparatus is used as the target offloading user plane network element or a chip used in the target offloading user plane network element, and performs the step performed by the target offloading user plane network element in the foregoing method embodiments, the transceiver module 801 is configured to support communication with the intermediate session management network element and the like. The transceiver module specifically performs a sending action and/or a receiving action performed by the target offloading user plane network element in FIG. 4 to FIG. 7C(1) and FIG. 7C(2), for example, supports the target offloading user plane network element in performing one or both of step 602 and step 610, and/or another process of the technology described in this specification.

In an example, when the communication apparatus is used as the target user plane network element or a chip used in the target user plane network element, and performs the step performed by the target user plane network element in the foregoing method embodiments, the transceiver module 801 is configured to support communication with the intermediate session management network element and the like. The transceiver module specifically performs a sending action and/or a receiving action performed by the target user plane network element in FIG. 4 to FIG. 7C(1) and FIG. 7C(2), for example, supports the target user plane network element in performing another process of the technology described in this specification.

In a possible implementation, when the intermediate session management network element, the source offloading user plane network element, the target offloading user plane network element, the target user plane network element, or the session management network element is the chip, the transceiver module 801 may be an interface, a pin, a circuit, or the like. The interface may be configured to input to-be-processed data to a processor, and may output a processing result of the processor to the outside. During specific implementation, the interface may be a general purpose input/output (general purpose input/output, GPIO) interface, and may be connected to a plurality of peripheral devices (for example, a display (LCD), a camera (camera), a radio frequency (radio frequency, RF) module, and an antenna). The interface is connected to the processor through a bus. Certainly, the interface may also be understood as a communication interface.

The processing module 802 may be the processor. The processor may execute computer-executable instructions stored in the storage module, so that the chip performs the method in the foregoing embodiments.

Further, the processor may include a controller, an arithmetic unit, and a register. For example, the controller is mainly responsible for instruction decoding, and transmitting a control signal for an operation corresponding to an instruction. The arithmetic unit is mainly responsible for performing a fixed-point or floating-point arithmetic operation, a shift operation, a logic operation, and the like, and may also perform an address operation and address translation. The register is mainly responsible for storing a quantity of register operations, an intermediate operation result, and the like that are temporarily stored during instruction execution. During specific implementation, a hardware architecture of the processor may be an application-specific integrated circuit architecture, a microprocessor without interlocked piped stages (microprocessor without interlocked piped stages, MIPS) architecture, an advanced reduced instruction set computer machine (advanced RISC machine, ARM) architecture, a network processor (network processor, NP) architecture, or the like. The processor may be a single-core or multi-core processor.

The storage module 803 may be a storage module, for example, a register or a buffer, inside the chip. Alternatively, the storage module 803 may be a storage module, for example, a ROM, another type of static storage device that can store static information and instructions, or a RAM, located outside the chip.

It should be noted that a function corresponding to each of the processor and the interface may be implemented by using a hardware design, a software design, or a combination of software and hardware. This is not limited herein.

An embodiment of this application further provides a communication apparatus, including a processor, a memory, an input interface, and an output interface. The input interface is configured to receive information from a communication apparatus other than the communication apparatus, the output interface is configured to output information to a communication apparatus other than the communication apparatus, and the processor invokes a computer program stored in the memory, to implement any one of the embodiments shown in FIG. 4 to FIG. 8.

An embodiment of this application further provides a computer-readable storage medium. The computer-readable storage medium stores a computer program. When the computer program is run, any one of the embodiments shown in FIG. 4 to FIG. 8 is implemented.

An embodiment of this application further provides a chip. The chip includes at least one processor and an interface. The processor is configured to read and execute instructions stored in a memory. When the instructions are run, the chip is enabled to perform any one of the embodiments shown in FIG. 4 to FIG. 8.

An embodiment of this application further provides a computer program product including instructions. When the computer program product is executed on a computer, any one of the embodiments shown in FIG. 4 to FIG. 8 is performed.

The foregoing units described as separate parts may or may not be physically separate, and parts displayed as units may or may not be physical units, to be specific, may be located at one position, or may be distributed on a plurality of network units. Some or all of the units may be selected according to actual requirements to achieve the objectives of the solutions of embodiments in this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the foregoing integrated unit is implemented in the form of a software network element unit and sold or used as an independent product, the integrated unit may be stored in a computer-readable storage medium. Based on such an understanding, the part of the technical solutions of this application that essentially makes a contribution or all or some of the technical solutions may be implemented in a form of a software product. The computer software product is stored in a storage medium, and includes several instructions for instructing a computer device (which may be a personal computer, a cloud server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An indication information transmission method, wherein the method is applied to an intermediate session management network element, and comprises:
sending first indication information to a session management network element, wherein the first indication information indicates that the intermediate session management network element has inserted a target offloading user plane network element and a target user plane network element, and has deleted a source offloading user plane network element and a source user plane network element;
receiving second indication information from the session management network element, wherein the second indication information indicates the target user plane network element to buffer an uplink packet;
sending third indication information to the target user plane network element based on the second indication information, wherein the third indication information indicates the target user plane network element to buffer the uplink packet;
receiving fourth indication information from the session management network element, wherein the fourth indication information indicates the target user plane network element to forward the uplink packet; and
sending fifth indication information to the target user plane network element based on the fourth indication information, wherein the fifth indication information indicates the target user plane network element to forward the uplink packet.

2. The method according to claim 1, wherein the method further comprises:
sending a first packet forwarding control protocol request message to a user plane network element, wherein the first packet forwarding control protocol request message comprises a first packet detection rule and a first forwarding action rule, wherein
if the user plane network element is the source offloading user plane network element, the first packet detection rule is a corresponding rule for the source offloading user plane network element to detect a packet that is from the target offloading user plane network element, and the first forwarding action rule is a corresponding rule for the source offloading user plane network element to forward, to the source user plane network element, the packet that is from the target offloading user plane network element; or
if the user plane network element is the target offloading user plane network element, the first packet detection rule is a corresponding rule for the target offloading user plane network element to detect a packet that is from a target access network device, and the first forwarding action rule is a corresponding rule for the target offloading user plane network element to forward, to the source offloading user plane network element, the packet that is from the target access network device.

3. The method according to claim 1 or 2, wherein the method further comprises:
receiving a second packet detection rule, a second forwarding action rule, and sixth indication information from the session management network element, wherein the sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

4. The method according to claim 2 or 3, wherein
if the user plane network element is the target offloading user plane network element, the first packet detection rule is obtained by the intermediate session management network element by adding a tunnel endpoint identifier of the target offloading user plane network element and an Internet protocol address of the target offloading user plane network element to the second packet detection rule based on the sixth indication information, and the first forwarding action rule is obtained by the intermediate session management network element by adding a tunnel endpoint identifier of the source offloading user plane network element and an Internet protocol address of the source offloading user plane network element to the second forwarding action rule based on the sixth indication information; or
if the user plane network element is the source offloading user plane network element, the first packet detection rule is obtained by the intermediate session management network element by adding a tunnel endpoint identifier of the source offloading user plane network element and an Internet protocol address of the source offloading user plane network element to the second packet detection rule based on the sixth indication information, and the first forwarding action rule is obtained by the intermediate session management network element by adding a tunnel endpoint identifier of the source user plane network element and an Internet protocol address of the source user plane network element to the second forwarding action rule based on the sixth indication information.

5. A message transmission method, wherein the method is applied to an intermediate session management network element, and comprises:
sending a third packet forwarding control protocol request message to a user plane network element, wherein the third packet forwarding control protocol request message comprises a third packet detection rule and a third forwarding action rule, wherein
if the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element; or
if the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

6. The method according to claim 5, wherein the method further comprises:
receiving a fourth packet detection rule, a fourth forwarding action rule, and seventh indication information from a session management network element, wherein
the seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

7. The method according to claim 5 or 6, wherein
if the user plane network element is the target offloading user plane network element, the third packet detection rule is obtained by the intermediate session management network element by adding a tunnel endpoint identifier of the target offloading user plane network element and an Internet protocol address of the target offloading user plane network element to the fourth packet detection rule based on the seventh indication information, and the third forwarding action rule is obtained by the intermediate session management network element by adding a tunnel endpoint identifier of the target access network device and an Internet protocol address of the target access network device to the fourth forwarding action rule based on the seventh indication information; or
if the user plane network element is the source offloading user plane network element, the third packet detection rule is obtained by the intermediate session management network element by adding a tunnel endpoint identifier of the source offloading user plane network element and an Internet protocol address of the source offloading user plane network element to the fourth packet detection rule based on the seventh indication information, and the third forwarding action rule is obtained by the intermediate session management network element by adding a tunnel endpoint identifier of the target offloading user plane network element and an Internet protocol address of the target offloading user plane network element to the fourth forwarding action rule based on the seventh indication information.

8. An indication information transmission method, wherein the method is applied to a session management network element, and comprises:
receiving first indication information from an intermediate session management network element, wherein the first indication information indicates that the intermediate session management network element has inserted a target offloading user plane network element and a target user plane network element, and has deleted a source offloading user plane network element and a source user plane network element;
sending second indication information to the intermediate session management network element based on the first indication information, wherein the second indication information indicates the target user plane network element to buffer an uplink packet; and
sending fourth indication information to the intermediate session management network element, wherein the fourth indication information indicates the target user plane network element to forward the uplink packet, and is indication information sent by the session management network element after the session management network element learns that handover to a target application network element has been completed.

9. The method according to claim 8, wherein the method further comprises:
sending a second packet detection rule, a second forwarding action rule, and sixth indication information to the intermediate session management network element, wherein the sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

10. An indication information transmission method, wherein the method is applied to a user plane network element, and comprises:
receiving third indication information from an intermediate session management network element, wherein the third indication information indicates the user plane network element to buffer an uplink packet; and
receiving fifth indication information from the intermediate session management network element, wherein the fifth indication information indicates the user plane network element to forward the uplink packet.

11. The method according to claim 10, wherein the method further comprises:
receiving a first packet forwarding control protocol request message from the intermediate session management network element, wherein the first packet forwarding control protocol request message comprises a first packet detection rule and a first forwarding action rule, wherein
if the user plane network element is a source offloading user plane network element, the first packet detection rule is a corresponding rule for the source offloading user plane network element to detect a packet that is from a target offloading user plane network element, and the first forwarding action rule is a corresponding rule for the source offloading user plane network element to forward, to a source user plane network element, the packet that is from the target offloading user plane network element; or
if the user plane network element is a target offloading user plane network element, the first packet detection rule is a corresponding rule for the target offloading user plane network element to detect a packet that is from a target access network device, and the first forwarding action rule is a corresponding rule for the target offloading user plane network element to forward, to a source offloading user plane network element, the packet that is from the target access network device.

12. The method according to claim 10 or 11, wherein
if the user plane network element is the target offloading user plane network element, the first packet detection rule is obtained by the intermediate session management network element by adding a tunnel endpoint identifier of the target offloading user plane network element and an Internet protocol address of the target offloading user plane network element to a second packet detection rule based on sixth indication information, and the first forwarding action rule is obtained by the intermediate session management network element by adding a tunnel endpoint identifier of the source offloading user plane network element and an Internet protocol address of the source offloading user plane network element to a second forwarding action rule based on the sixth indication information; or
if the user plane network element is the source offloading user plane network element, the first packet detection rule is obtained by the intermediate session management network element by adding a tunnel endpoint identifier of the source offloading user plane network element and an Internet protocol address of the source offloading user plane network element to a second packet detection rule based on sixth indication information, and the first forwarding action rule is obtained by the intermediate session management network element by adding a tunnel endpoint identifier of the source user plane network element and an Internet protocol address of the source user plane network element to a second forwarding action rule based on the sixth indication information, wherein
the sixth indication information indicates one or both of the following: the second packet detection rule is a corresponding rule for the source offloading user plane network element or the target offloading user plane network element to detect a packet, or the second forwarding action rule is a corresponding rule for the source offloading user plane network element or the target offloading user plane network element to forward the packet.

13. A message transmission method, wherein the method is applied to a user plane network element, and comprises:
receiving a third packet forwarding control protocol request message from an intermediate session management network element, wherein the third packet forwarding control protocol request message comprises a third packet detection rule and a third forwarding action rule, wherein
if the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element; or
if the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

14. The method according to claim 13, wherein
if the user plane network element is the target offloading user plane network element, the third packet detection rule is obtained by the intermediate session management network element by adding a tunnel endpoint identifier of the target offloading user plane network element and an Internet protocol address of the target offloading user plane network element to a fourth packet detection rule based on seventh indication information, and the third forwarding action rule is obtained by the intermediate session management network element by adding a tunnel endpoint identifier of the target access network device and an Internet protocol address of the target access network device to a fourth forwarding action rule based on the seventh indication information; or
if the user plane network element is the source offloading user plane network element, the third packet detection rule is obtained by the intermediate session management network element by adding a tunnel endpoint identifier of the source offloading user plane network element and an Internet protocol address of the source offloading user plane network element to a fourth packet detection rule based on seventh indication information, and the third forwarding action rule is obtained by the intermediate session management network element by adding a tunnel endpoint identifier of the target offloading user plane network element and an Internet protocol address of the target offloading user plane network element to a fourth forwarding action rule based on the seventh indication information, wherein
the seventh indication information indicates one or both of the following: the fourth packet detection rule is a corresponding rule for the source offloading user plane network element or the target offloading user plane network element to detect a packet, or the fourth forwarding action rule is a corresponding rule for the source offloading user plane network element or the target offloading user plane network element to forward the packet.

15. An indication information transmission method, wherein the method comprises:
sending, by an intermediate session management network element, first indication information to a session management network element, wherein the first indication information indicates that the intermediate session management network element has inserted a target offloading user plane network element and a target user plane network element, and has deleted a source offloading user plane network element and a source user plane network element;
sending, by the session management network element, second indication information to the intermediate session management network element based on the first indication information, wherein the second indication information indicates the target user plane network element to buffer an uplink packet;
receiving, by the target user plane network element, third indication information from the intermediate session management network element, wherein the third indication information is sent by the intermediate session management network element based on the second indication information, and indicates the target user plane network element to buffer the uplink packet;
sending, by the session management network element, fourth indication information to the intermediate session management network element, wherein the fourth indication information indicates the target user plane network element to forward the uplink packet, and is indication information sent by the session management network element after the session management network element learns that handover to a target application network element has been completed; and
sending, by the intermediate session management network element, fifth indication information to the target user plane network element based on the fourth indication information, wherein the fifth indication information indicates the target user plane network element to forward the uplink packet.

16. A message transmission method, wherein the method comprises:
sending, by an intermediate session management network element, a third packet forwarding control protocol request message to a user plane network element, wherein the third packet forwarding control protocol request message comprises a third packet detection rule and a third forwarding action rule, wherein
if the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element; or
if the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

17. An intermediate session management network element, wherein the intermediate session management network element comprises a transceiver module, and the transceiver module is configured to:
send first indication information to a session management network element, wherein the first indication information indicates that the intermediate session management network element has inserted a target offloading user plane network element and a target user plane network element, and has deleted a source offloading user plane network element and a source user plane network element;
receive second indication information from the session management network element, wherein the second indication information indicates the target user plane network element to buffer an uplink packet;
send third indication information to the target user plane network element based on the second indication information, wherein the third indication information indicates the target user plane network element to buffer the uplink packet;
receive fourth indication information from the session management network element, wherein the fourth indication information indicates the target user plane network element to forward the uplink packet; and
send fifth indication information to the target user plane network element based on the fourth indication information, wherein the fifth indication information indicates the target user plane network element to forward the uplink packet.

18. An intermediate session management network element, wherein the intermediate session management network element comprises a transceiver module, and the transceiver module is configured to send a third packet forwarding control protocol request message to a user plane network element, wherein the third packet forwarding control protocol request message comprises a third packet detection rule and a third forwarding action rule, wherein
if the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element; or
if the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

19. A session management network element, wherein the session management network element comprises a transceiver module, wherein
the transceiver module is configured to: receive first indication information from an intermediate session management network element, wherein the first indication information indicates that the intermediate session management network element has inserted a target offloading user plane network element and a target user plane network element, and has deleted a source offloading user plane network element and a source user plane network element;
send second indication information to the intermediate session management network element based on the first indication information, wherein the second indication information indicates the target user plane network element to buffer an uplink packet; and
send fourth indication information to the intermediate session management network element, wherein the fourth indication information indicates the target user plane network element to forward the uplink packet, and is indication information sent by the session management network element after the session management network element learns that handover to a target application network element has been completed.

20. A user plane network element, wherein the user plane network element comprises a transceiver module, wherein
the transceiver module is configured to receive a first packet forwarding control protocol request message from an intermediate session management network element, wherein the first packet forwarding control protocol request message comprises a first packet detection rule and a first forwarding action rule, wherein
if the user plane network element is a source offloading user plane network element, the first packet detection rule is a corresponding rule for the source offloading user plane network element to detect a packet that is from a target offloading user plane network element, and the first forwarding action rule is a corresponding rule for the source offloading user plane network element to forward, to a source user plane network element, the packet that is from the target offloading user plane network element; or
if the user plane network element is a target offloading user plane network element, the first packet detection rule is a corresponding rule for the target offloading user plane network element to detect a packet that is from a target access network device, and the first forwarding action rule is a corresponding rule for the target offloading user plane network element to forward, to a source offloading user plane network element, the packet that is from the target access network device.

21. A user plane network element, wherein the user plane network element comprises a transceiver module, wherein
the transceiver module is configured to receive a third packet forwarding control protocol request message from an intermediate session management network element, wherein the third packet forwarding control protocol request message comprises a third packet detection rule and a third forwarding action rule, wherein
if the user plane network element is a source offloading user plane network element, the third packet detection rule is a corresponding rule for the source offloading user plane network element to detect a packet that is from a remote user plane network element, and the third forwarding action rule is a corresponding rule for the source offloading user plane network element to forward, to a target offloading user plane network element, the packet that is from the remote user plane network element; or the third packet detection rule is a corresponding rule for the source offloading user plane network element to detect a packet that is from a source user plane network element, and the third forwarding action rule is a corresponding rule for the source offloading user plane network element to forward, to a target offloading user plane network element, the packet that is from the source user plane network element; or
if the user plane network element is a target offloading user plane network element, the third packet detection rule is a corresponding rule for the target offloading user plane network element to detect a packet that is from a source offloading user plane network element, and the third forwarding action rule is a corresponding rule for the target offloading user plane network element to forward, to a target access network device, the packet that is from the source offloading user plane network element.

22. A communication apparatus, comprising a processor, wherein the processor invokes a computer program stored in a memory, to implement the method according to any one of claims 1 to 14.

23. A computer-readable storage medium, wherein the computer-readable storage medium stores a computer program; and when the computer program is run, the method according to any one of claims 1 to 14 is implemented.

24. A chip, wherein the chip comprises at least one processor and an interface, and the processor is configured to read and execute instructions stored in a memory; and when the instructions are run, the chip is enabled to perform the method according to any one of claims 1 to 14.

25. A computer program product comprising instructions, wherein when the computer program product is executed on a computer, the method according to any one of claims 1 to 14 is performed.

26. A communication system, wherein the communication system comprises an intermediate session management network element, a session management network element, and a user plane network element, wherein the intermediate session management network element is configured to perform the method according to any one of claims 1 to 4, the session management network element is configured to perform the method according to claim 8 or 9, and the user plane network element is configured to perform the method according to any one of claims 10 to 12.

27. A communication system, wherein the communication system comprises an intermediate session management network element and a user plane network element, wherein the intermediate session management network element is configured to perform the method according to any one of claims 5 to 7, and the user plane network element is configured to perform the method according to claim 13 or 14.
